Europäisches Patentamt

European Patent Office

Office européen des brevets

(19)

(11) EP 1 686 515 A1

(12) EUROPEAN PATENT APPLICATION
published in accordance with Art. 158(3) EPC

(43) Date of publication:
02.08.2006 Bulletin 2006/31

(51) Int Cl.:
G06Q 10/00 (2006.01)

(21) Application number: 04722964.6

(22) Date of filing: 24.03.2004

(86) International application number:
PCT/JP2004/004099

(87) International publication number:
WO 2005/050511 (02.06.2005 Gazette 2005/22)

(84) Designated Contracting States:
AT BE BG CH CY CZ DE DK EE ES FI FR GB GR
HU IE IT LI LU MC NL PL PT RO SE SI SK TR

(30) Priority: 23.10.2003 JP 2003396346
19.12.2003 JP 2003423855

(71) Applicants:
• Intellectual Property Bank Corp.
Tokyo 105-0001 (JP)
• Masuyama, Hiroaki
Toyonaka-shi,
Osaka 560-0054 (JP)

(72) Inventors:
• MASUYAMA, Hiroaki
Toyonaka-shi, Osaka 5600054 (JP)
• MIYAMOTO, Kaoru,
Villa White Nagasaki
Tokyo 1710051 (JP)

(74) Representative: Style, Kelda Camilla Karen et al
Page White & Farrer,
54 Doughty Street
London WC1N 2LS (GB)

(54) ENTERPRISE EVALUATION DEVICE AND ENTERPRISE EVALUATION PROGRAM

(57) There are provided an enterprise evaluation device and an enterprise evaluation program capable of analyzing research and development strategy and intellectual property strategy together with information on financial affairs of an enterprise, thereby evaluating the enterprise value. The device includes: technical document acquisition means for acquiring technical documents such as patent gazettes; total number-of-inventions per field extraction means for classifying the technical documents into respective fields such as IPC subclasses and extracting the total number of inventions per each field; per-field and per-enterprise number-of-inventions extraction means for extracting the number of inventions per field and per enterprise; per-field oligopoly score calculation means for calculating the per-field and per-enterprise number-of-inventions share by dividing the per-enterprise and per-field number-of-inventions by the total number of inventions per field and accumulating the per-field and per-enterprise number-of-inventions share powered by ka (wherein ka > 1) for each enterprise having at least one invention in a predetermined field, thereby calculating a per-field oligopoly score; and output means for outputting the calculated per-field oligopoly score on display means or the like.

FIG. 5

**Description**

TECHNICAL FIELD

The present invention relates to enterprise value evaluation and the judgment thereof.

BACKGROUND ART

Conventionally, as described in Japanese Patent Laid-Open Publication No. 2000-348015, a system of evaluating the target enterprise based on financial data is known. In this system, to predict changes in the enterprise evaluation derived from data in which the renewal period is relatively long such as every year or every quarter, data in which the renewal period is relatively short such as stock price, interest and currency exchange that fluctuate from day to day is used to reflect changes in the economy. In this system, enterprise evaluation is made in a timely manner at the point in time such evaluation is to be made.

Further, Japanese Patent Laid-Open Publication No. 2001-76042 describes a technique of comprehending the asset value of currently remaining patents by depreciating registered patents and the related sales volume and profits. Moreover, with respect to the evaluation of the value of each patent, an intellectual property evaluation device in which the input ranking of evaluation conducted by one's own company and evaluation conducted by other companies is evaluated as the contribution is known.

For financial institutions, investors and corporations, it is extremely important to assess the enterprise value of investment destinations and customers. Thus, conventionally, in order to assess such enterprise value, attempts have been made for objectively judging the enterprise value based on management-finance information regarding management, finance or stock prices. Among such attempts, there are methods of screening and ranking the company to be evaluated via multivariate analysis, statistical techniques and data mining methods.

DISCLOSURE OF THE INVENTION

Recently, with the increasing ratio of intangible assets making up the enterprise value, the value of intangible assets now has a great influence on the enterprise value. Nevertheless, generally speaking, an enterprise value is not a book value in a balance sheet represented by total assets = liabilities + stockholders' equity, and is roughly calculated by the total market value + liabilities. Therefore, when complete current value accounting is applied, the amount calculated by the total market value - stockholders' equity will represent the validity of invisible assets (intangible assets) of the enterprise. Nevertheless, there is a drawback in that it is difficult to specifically calculate the value of intangible assets and judge the value according to application.

Further, with the system described in Japanese Patent Laid-Open Publication No. 2000-348015, a model for enterprise evaluation is created by inputting data (dynamic data) with a short renewal period such as stock prices in addition to data (static data) with a long renewal period such as financial data to be publicly announced at the end of the fiscal term. The static data and dynamic data related to the evaluation target are applied to this model. Thereby, this publication is indicating that the evaluation of the item to be evaluated, which could change over time, is calculated in a timely manner and as the latest information. Nevertheless, there is a drawback in that it is not possible to easily judge whether an invention in a predetermined technical field is in a monopolistic state by a specific enterprise, or in a competitive state, and to judge to what degree the competitive position relating to inventions is absolute or relative.

Moreover, the intellectual property evaluation device described in Japanese Patent Laid-Qpen Publication No. 2001-76042 is to evaluate the intellectual property such as patents one by one each year, and there is a drawback in that it is not possible to judge the enterprise value.

The total market value is determined by the stock prices in the market. Thus, whether the current stock price and the value of intangible assets calculated based on the stockholders' equity in the book are valid is an extremely important element for investors in the decision-making of stock trading. Enterprises are hoping to increase their value of intangible assets and thereby increase their enterprise value by procuring funds and continuing technical developments. Therefore, increasing the value of intangible assets will be positioned as an important issue in the management strategy for enterprises.

As described above, the establishment of a method for evaluating the value of intangible assets is a pressing issue. Nevertheless, intangible assets are constituted from various invisible assets such as intellectual property rights including industrial property rights (patents, trademarks and so on) and copyrights, as well as brands and know-how. Thus, it is not easy to evaluate the value of intangible assets.

In light of the above, attempts for evaluating intangible assets have been made from the past. Nevertheless, there was a problem in that it was not possible to evaluate the validity of an enterprise value by incorporating the value of intangible assets quantitatively and qualitatively.

Thus, an object of the present invention is to provide an enterprise evaluation device and enterprise evaluation program that evaluates an enterprise value more articulately by analyzing the business strategy, research and development strategy and intellectual property strategy of an enterprise based on technical documents such as patent information, and combining this with management-finance information.

Further, another object of the present invention is to provide an enterprise evaluation device capable of presenting, with a numerical value, bar graph or index, whether the invention or technical strength in a predetermined technical field is in an oligopolistic state or a competitive state.

Moreover, still another object of the present invention is to provide an enterprise evaluation device capable of concurrently displaying whether the number of inventions in a predetermined technical field is in an oligopolistic state of a specific enterprise, and to what degree the enterprise to be researched owns the technical share in this technical field.

Further, yet another object of the present invention is to provide an enterprise evaluation device capable of presenting an index, with a numerical value, wording or figure, enabling the judgment on whether the technical strength in a predetermined enterprise is diversified in the respective technical fields, or whether the technical strength is concentrated on a single technical field.

Moreover, yet another object of the present invention is to provide an enterprise evaluation device capable of presenting an index, with a numerical value, wording or figure, representing the comprehensive strength of the technical development strength viewed from inventions, and representing the strength of the competitive position relating to inventions.

Further, yet another object of the present invention is to provide an enterprise evaluation device capable of presenting an representing the comprehensive strength of the technical development strength viewed from inventions and the strength of the competitive position relating to inventions in a state where comparative assessment can be conducted among enterprises.

Moreover, yet another object of the present invention is to provide an enterprise evaluation device capable of comparing the competitive position relating to inventions equally for enterprises having a broad technical field and enterprises having a narrow technical field.

Further, yet another object of the present invention is to provide an enterprise evaluation device capable of evaluating the competitive position of technology viewed from inventions upon giving consideration to the growth rate of the overall enterprise.

Moreover, yet another object of the present invention is to provide an enterprise evaluation device capable of accurately judging the condition of the enterprise by concurrently presenting the technical strength and management-finance information to the user.

In order to overcome the foregoing problems, the enterprise evaluation device of the present invention includes:

technical document acquisition means for acquiring technical documents from a technical document database;

total number of inventions per technical field extraction means for classifying the acquired technical documents into respective technical fields and for extracting the total number of inventions per technical field;

number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field; and

output means for outputting the calculated oligopoly score per technical field to display means or the like.

Further, in order to overcome the foregoing problems, the enterprise evaluation device of the present invention includes:

oligopolistic state per technical field judgment means for comparing a predetermined threshold with the calculated oligopoly score per technical field, and for judging whether the number of inventions in the predetermined technical field is in an oligopolistic state of a specific enterprise, or a competitive state of numerous enterprises; and

output means for outputting an index showing the oligopolistic state or the competitive state judged by the oligopolistic state per technical field judgment means to display means or the like.

Further, in order to overcome the foregoing problems, the enterprise evaluation device of the present invention includes:

oligopolistic state per technical field judgment means for comparing a predetermined threshold with the calculated oligopoly score per technical field, and for judging whether the number of inventions in the predetermined technical field is in an oligopolistic state of a specific enterprise, or a competitive state of numerous enterprises;

display data generation means for generating display data for an indication of the oligopoly score per technical field in a numerical value or in a bar graph and an indication of the judgment result of whether in an oligopolistic state or in a competitive state, to display these indications within the same frame or at an adjacent position; and

output means for outputting the display data to display means or the like.

Further, in order to overcome the foregoing problems, the enterprise evaluation device of the present invention includes:

technical document acquisition means for acquiring technical documents from a technical document database;

total number of inventions per enterprise extraction means for classifying the acquired technical documents into respective enterprises, and for extracting the total number of inventions per enterprise;

number of inventions per technical field and per enterprise extraction means for classifying the acquired technical documents into respective enterprises, and for extracting the number of inventions per enterprise and per technical field;

oligopoly score per enterprise calculation means for calculating number-of-inventions share per enterprise and per technical field through dividing the number of inventions per enterprise and per technical field by the total number of inventions per enterprise, and for accumulating the number-of-inventions share per enterprise and per technical field powered by kb (wherein kb > 0) for each technical field having at least one invention in a predetermined enterprise, thereby calculating the oligopoly score per enterprise; and

output means for outputting the calculated oligopoly score per enterprise to display means or the like.

Further, in order to overcome the foregoing problems, the enterprise evaluation device of the present invention includes:

diversification per enterprise categorizing means for comparing a predetermined threshold with the oligopoly score per enterprise, and for categorizing whether the number of inventions in the predetermined enterprise is concentrated in a specific technical field or diversified in numerous technical fields through representation with a figure or wording (also possible to categorize based on patent diversification index); and

output means for outputting display data of categories with the figure or wording to display means or the like.

Further, in order to overcome the foregoing problems, the enterprise evaluation device of the present invention includes:

diversification index calculation means for calculating a diversification index (including patent diversification index) by subtracting the oligopoly score per enterprise from 1, or a diversification index by subtracting the oligopoly score per enterprise from 1 and multiplying 10, 100, 200, 1000, one of these multiples or the like thereto;

diversification per enterprise categorizing means for comparing a predetermined threshold with the calculated diversification index, and for categorizing whether the number of inventions in the predetermined enterprise is concentrated in a specific technical field or diversified in numerous technical fields through representation with a figure or wording; and

output means for outputting display data of categories with the figure or wording to display means or the like.

Further, in order to overcome the foregoing problems, the enterprise evaluation device of the present invention includes:

technical document acquisition means for acquiring technical documents;

total number of inventions per technical field extraction means for classifying the acquired technical documents into respective technical fields, and for extracting the total number of inventions per technical field;

number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical-field; and

output means for outputting the calculated oligopoly-emphasized score per technical field to display means or the like.

Further, in order to overcome the foregoing problems, the enterprise evaluation device of the present invention includes:

technical document acquisition means for acquiring technical documents from a technical document database;

total number of inventions per technical field extraction means for classifying the acquired technical documents into respective technical fields and for extracting the total number of inventions per technical field;

number of inventions per technical field and per enterprise extraction means for classifying the acquired technical documents into respective enterprises and into respective technical fields and for extracting the number of inventions per enterprise and per technical;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score; and

output means for outputting the calculated enterprise competitive position score to display means or the like.

Further, in order to overcome the foregoing problems, the enterprise evaluation device of the present invention includes:

enterprise competitive position score categorizing means for comparing a predetermined threshold with the calculated enterprise competitive position score, and for categorizing the competitive position of the predetermined enterprise relating to inventions through representation with a figure or wording;

display data generation means for generating display data of categories with the figure or wording; and

output means for outputting the display data to display means or the like.

Further, the enterprise evaluation device of the present invention uses in the threshold an average value or standard deviation of the enterprise competitive position scores of all enterprises.

Further, in order to overcome the foregoing problems, the enterprise evaluation device of the present invention includes:

technical document acquisition means for acquiring technical documents from a technical document database;

total number of inventions per technical field extraction means for classifying the acquired technical documents into respective technical fields and for extracting the total number of inventions per technical field;

number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

standardized enterprise competitive position score calculation means for calculating the standardized enterprise competitive position score through dividing the enterprise competitive position score by the number of technical fields; and

output means for outputting the calculated standardized enterprise competitive position score to display means or the like.

Further, in order to overcome the foregoing problems, the enterprise evaluation device of the present invention includes:

standardized enterprise competitive position score categorizing means for comparing a predetermined threshold with the standardized enterprise competitive position score, and for categorizing the competitive position of the predetermined enterprise relating to inventions through representation with a figure or wording;

display data generation means for generating display data of categories with the figure or wording; and

output means for outputting the display data to display means or the like.

Further, the enterprise evaluation device of the present invention uses in the threshold an average value or standard deviation of the standardized enterprise competitive position scores of all enterprises.

Further, in order to overcome the foregoing problems, the enterprise evaluation device of the present invention includes:

technical document acquisition means for acquiring technical documents from a technical document database;

total number of inventions per technical field extraction means for classifying the acquired technical documents into respective technical fields and for extracting the total number of inventions per technical field;

number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

rate of increase of inventions acquisition means for acquiring the rate of increase in number of inventions in the predetermined enterprise and the rate of increase in number of inventions in all enterprises based on date information of the acquired technical documents;

excess growth rate calculation means for calculating the excess growth rate of the predetermined enterprise by subtracting the rate of increase in number of inventions in all enterprises from the rate of increase in number of inventions in the predetermined enterprise;

enterprise competitive position index calculation means for calculating the enterprise competitive position index (including patent competitive position index (PCPI) explained by Formula 17) by multiplying the enterprise competitive position score to a value obtained by adding 1 to the excess growth rate; and

output means for outputting the enterprise competitive, position index to display means or the like.

Further, in order to overcome the foregoing problems, the enterprise evaluation device of the present invention includes:

enterprise competitive position index categorizing means for comparing a predetermined threshold with the calculated enterprise competitive position index, and for categorizing the competitive position of the predetermined enterprise relating to inventions through representation with a figure or wording;

display data generation means for generating display data of categories with the figure or wording; and

output means for outputting the display data to display means or the like.

Further, the enterprise evaluation device of the present invention uses in the threshold an average value or standard deviation of the enterprise competitive position indexes of all enterprises.

Further, in order to overcome the foregoing problems, the enterprise evaluation device of the present invention includes:

technical document acquisition means for acquiring technical documents from a technical document database;

total number of inventions per technical field extraction means for classifying the acquired technical documents into respective technical fields and for extracting the total number of inventions per technical field;

number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

rate of increase of inventions acquisition means for acquiring the rate of increase in number of inventions in the predetermined enterprise and the rate of increase in number of inventions in all enterprises based on date information of the acquired technical documents;

excess growth rate calculation means for calculating the excess growth rate of the predetermined enterprise by subtracting the rate of increase in number of inventions in all enterprises from the rate of increase in number of inventions in the predetermined enterprise;

enterprise competitive position index calculation means for calculating the enterprise competitive position index by multiplying the enterprise competitive position score to a value obtained by adding 1 to the excess growth rate;

standardized enterprise competitive position index calculation means for calculating the standardized enterprise competitive position index (including standardized patent competitive position index (avgPCPI) explained by Formula 18) through dividing the enterprise competitive position index by the number of technical fields; and

output means for outputting the standardized enterprise competitive position index to display means or the like.

Further, in order to overcome the foregoing problems, the enterprise evaluation device of the present invention includes:

standardized enterprise competitive position index categorizing means for comparing a predetermined threshold with the calculated standardized enterprise competitive position index, and for categorizing the competitive position of the predetermined enterprise relating to inventions through representation with a figure or wording;

display data generation means for generating display data of categories with the figure or wording; and

output means for outputting the display data to display means or the like.

Further, the enterprise evaluation device of the present invention uses in the threshold an average value or standard deviation of the standardized enterprise competitive position indexes of all enterprises.

Further, in order to overcome the foregoing problems, the enterprise evaluation device of the present invention classifies the technical field by IPC sections, IPC classes, IPC sub-classes, IPC main groups, IPC sub-groups, F terms, FI, facets or keywords contained in the technical documents.

Further, in order to overcome the foregoing problems, the enterprise evaluation device of the present invention uses, as the technical documents, publications of registered patents, unexamined patent applications, registered utility models, unexamined utility model applications, published translations of PCT international applications, domestic re-publications of PCT international applications, foreign publications, published appeal and trial decisions, transitional information or journals of technical disclosure.

Further, in order to overcome the foregoing problems, the enterprise evaluation device of the present invention uses, as the number of inventions among the total number of inventions per technical field or number of inventions per enterprise and per technical field, the number of patent or utility model applications, number of claims filed, number of registrations, number of claims registered, number of examination requests, number of claims requested for examination, number of decisions of registration, number of claims decided to be registered, number of decisions of rejection, number of claims decided to be rejected, number of demands for trial, number of claims demanded for trial or the ratios thereof.

Further, in order to overcome the foregoing problems, the enterprise evaluation device of the present invention includes:

display data generation means for generating display data for associating and displaying
the category of the oligopoly score per enterprise or the category of the diversification index and
the category of the enterprise competitive position score or the category of the standardized enterprise competitive position score; and
output means for outputting the display data to display means or the like.

Further, in order to overcome the foregoing problems, the enterprise evaluation device of the present invention includes:

display data generation means for generating display data for associating and displaying the category of the oligopoly score per enterprise or the category of the diversification index and
the category of the enterprise competitive position index or the category of the standardized enterprise competitive position index; and
output means for outputting the display data to display means or the like.

Further, in order to overcome the foregoing problems, the enterprise evaluation device of the present invention includes:

display data generation means for generating display data for associating and displaying
the category of the oligopoly score per enterprise or the category of the diversification index and
the enterprise competitive position score, the standardized enterprise competitive position score, the enterprise competitive position index or the standardized enterprise competitive position index; and
output means for outputting the display data to display means or the like.

Further, in order to overcome the foregoing problems, the enterprise evaluation device of the present invention includes:

management-finance information acquisition means for acquiring management-finance information of an enterprise to be researched from a management-finance database recording management-finance information such as information showing the size of the enterprise or finance information of the enterprise;
display data generation means for generating display data for displaying, enterprise by enterprise and via a graph or chart, the relationship of the oligopoly score per enterprise, the oligopoly-emphasized score per technical field, enterprise competitive position score, standardized enterprise competitive position score, enterprise competitive position index or the standardized enterprise competitive position index, and the acquired management-finance information of the enterprise to be researched; and
output means for outputting the display data to display means or the like.

Further, in order to overcome the foregoing problems, the enterprise evaluation device of the present invention uses, as the management-finance information, the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, R&D cost, R&D cost to sales volume ratio, R&D cost to gross operating profit ratio, gross operating profit ratio, gross operating profit or other financial information of the enterprise.

According to the present invention, the enterprise evaluation device includes:

technical document acquisition means for acquiring technical documents from a technical document database;
total number of inventions per technical field extraction means for classifying the acquired technical documents into respective technical fields and for extracting the total number of inventions per technical field;
number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field; and
output means for outputting the calculated oligopoly score per technical field to display means or the like.

Therefore, it is possible to display the oligopolistic state or competitive state of an invention or technical strength in a predetermined technical field.

Further, the enterprise evaluation device of the present invention includes:

oligopolistic state per technical field judgment means for comparing a predetermined threshold with the calculated oligopoly score per technical field, and for judging whether the number of inventions in the predetermined technical field is in an oligopolistic state of a specific enterprise, or a competitive state of numerous enterprises; and
output means for outputting an index showing the oligopolistic state or the competitive state judged by the oligopolistic state per technical field judgment means to display means or the like.

Therefore, it is possible to display the oligopolistic state or competitive state of an invention or technical strength in a predetermined technical field in an easy-to-understand and absolute manner.

Moreover, the enterprise evaluation device of the present invention includes:

oligopolistic state per technical field judgment means for comparing a predetermined threshold with the calculated oligopoly score per technical field, and for judging whether the number of inventions in the predetermined technical field is in an oligopolistic state of a specific enterprise, or a competitive state of numerous enterprises;
display data generation means for generating display data for an indication of the oligopoly score per technical field in a numerical value or in a bar graph and an indication of the judgment result of whether in an oligopolistic state or in a competitive state, to display these indications within the same frame or at an adjacent position; and
output means for outputting the display data to display means or the like.

Therefore, it is possible to concurrently display whether the number of inventions in a predetermined technical field is in an oligopolistic state of a specific enterprise, and the degree of technical share of an enterprise to be researched in such technical field. Further, when a predetermined,technical field is in a competitive state with numerous enterprises, and the enterprise to be researched only has a slight share regarding the invention, it is easy to judge that the enterprise to be researched is not in an advantageous state in such technical field in the existing circumstances.

Moreover, the enterprise evaluation device of the present invention includes:

technical document acquisition means for acquiring technical documents from a technical document database;
total number of inventions per enterprise extraction means for classifying the acquired technical documents into respective enterprises, and for extracting the total number of inventions per enterprise;
number of inventions per technical field and per enterprise extraction means for classifying the acquired technical documents into respective enterprises, and for extracting the number of inventions per enterprise and per technical field;
oligopoly score per enterprise calculation means for calculating number-of-inventions share per enterprise and per technical field through dividing the number of inventions per enterprise and per technical field by the total number of inventions per enterprise, and for accumulating the number-of-inventions share per enterprise and per technical field powered by kb (wherein kb > 0) for each technical field having at least one invention in a predetermined enterprise, thereby calculating the oligopoly score per enterprise; and
output means for outputting the calculated oligopoly score per enterprise to display means or the like.

Therefore, it is possible to indicate that the technical strength is diversified in the respective technical fields the smaller the value of the oligopoly score per enterprise, and that the technical strength is concentrated in a single technical field the larger the value of the oligopoly score per enterprise. Accordingly, a user is able to easily know the degree of concentration and diversification in the technical development field of a predetermined enterprise, and, by comparing this with a patent diversification index of other enterprises calculated with the same calculation method, it is possible to compare the degree of concentration and diversification of the predetermined technical development field.

Further, the enterprise evaluation device of the present invention includes:

diversification per enterprise categorizing means for comparing a predetermined threshold with the oligopoly score per enterprise, and for categorizing whether the number of inventions in the predetermined enterprise is concentrated in a specific technical field or diversified in numerous technical fields through representation with a figure or wording; and

output means for outputting display data of categories with the figure or wording to display means or the like.

Therefore, it is possible to absolutely present, in an easy-to-understand manner, an index capable of judging whether the technical strength in a predetermined enterprise is diversified in the respective technical fields or whether the technical strength is concentrated in a single technical field.

Further, the enterprise evaluation device of the present invention includes:

diversification index calculation means for calculating a diversification index by subtracting the oligopoly score per enterprise from 1, or a diversification index by subtracting the oligopoly score per enterprise from 1 and multiplying 100 thereto;

diversification per enterprise categorizing means for comparing a predetermined threshold with the calculated diversification index, and for categorizing whether the number of inventions in the predetermined enterprise is concentrated in a specific technical field or diversified in numerous technical fields through representation with a figure or wording; and

output means for outputting display data of categories with the figure or wording to display means or the like.

Therefore, it is possible to indicate that the technical strength is diversified in the respective technical fields the smaller the value of the oligopoly score per enterprise, and that the technical strength is concentrated in a single technical field the larger the value of the oligopoly score per enterprise. Accordingly, a user is able to easily know the degree of concentration and diversification in the technical development field of a predetermined enterprise, and, by comparing this with a patent diversification index of other enterprises calculated with the same calculation method, it is possible to compare the degree of concentration and diversification of the predetermined technical development field.

Incidentally, the numerical value to be multiplied upon calculating the diversification index is not limited to 100 as described above and, for instance, may be a numerical value of a round number such as 10, 200 or 1000, or the multiples thereof.

Moreover, the enterprise evaluation device of the present invention includes:

technical document acquisition means for acquiring technical documents;

total number of inventions per technical field extraction means for classifying the acquired technical documents into respective technical fields, and for extracting the total number of inventions per technical field;

number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical-field; and

output means for outputting the calculated oligopoly-emphasized score per technical field to display means or the like.

Therefore, when the number-of-inventions share in a predetermined technical field is large, it is possible to judge that an oligopolistic state is created by the enterprise, and larger the value thereof, it is possible to judge that the comprehensive strength of the technical development strength viewed from the invention of such enterprise is great. As a result, this can be used upon considering whether to purchase or sell stock, or considering the potential of the enterprise, or as a rough indication upon selecting an enterprise to conduct joint development, or upon determining the place of employment.

Further, the enterprise evaluation device of the present invention includes:

technical document acquisition means for acquiring technical documents from a technical document database;

total number of inventions per technical field extraction means for classifying the acquired technical documents into respective technical fields and for extracting the total number of inventions per technical field;

number of inventions per technical field and per enterprise extraction means for classifying the acquired technical documents into respective enterprises and into respective technical fields and for extracting the number of inventions per enterprise and per technical;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score; and

output means for outputting the calculated enterprise competitive position score to display means or the like.

Therefore, it is possible to present that the comprehensive strength of the technical development strength viewed from the invention of such enterprise is great the larger the calculated value of the patent competitive position score.

Moreover, the enterprise evaluation device of the present invention includes:

enterprise competitive position score categorizing means for comparing a predetermined threshold with the calculated enterprise competitive position score, and for categorizing the competitive position of the predetermined enterprise relating to inventions through representation with a figure or wording;

display data generation means for generating display data of categories with the figure or wording; and

output means for outputting the display data to display means or the like.

Therefore, by representing the positioning of the patent competitive position index of a predetermined enterprise with the number of stars or the type of enterprise, it is possible to represent the competitive position relating to inventions in an easy-to-view manner. And, even without having to consciously research the number of patent applications or number of claims filed or classification of the IPC sub-classes, it is possible to present the competitive position relating to inventions among a plurality of enterprises in an easy-to-understand manner. Further, by using the average value or standard deviation of the enterprise competitive position score of all enterprises as the threshold, it is possible to conduct comparative assessment among the enterprises. Thereby, companies below average and companies above average can be made to stand out, and it is possible to present the relative merits of the patent competitive position of a predetermined enterprise.

Moreover, the enterprise evaluation device of the present invention includes:

technical document acquisition means for acquiring technical documents from a technical document database;

total number of inventions per technical field extraction means for classifying the acquired technical documents into respective technical fields and for extracting the total number of inventions per technical field;

number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

standardized enterprise competitive position score calculation means for calculating the standardized enterprise competitive position score through dividing the enterprise competitive position score by the number of technical fields; and

output means for outputting the calculated standardized enterprise competitive position score to display means or the like.

Therefore, it is possible to present the level of technical development strength regardless of the broadness of a technical field in an enterprise.
Further, it is possible to compare the competitive position relating to inventions equally for both enterprises having a broad technical field and enterprises having a narrow

technical field.

Moreover, the enterprise evaluation device of the present invention includes:

standardized enterprise competitive position score categorizing means for comparing a predetermined threshold with the standardized enterprise competitive position score, and for categorizing the competitive position of the predetermined enterprise relating to inventions through representation with a figure or wording;
display data generation means for generating display data of categories with the figure or wording; and
output means for outputting the display data to display means or the like.

Therefore, it is possible to represent the standardized competitive position relating to inventions in an easy-to-view manner. Further, by using the average value or standard deviation of the enterprise competitive position score of all companies as the threshold, it is possible to conduct the comparative assessment among enterprises, make enterprises above average and enterprises below average stand out, and present the relative merits of the patent competitive position of a predetermined enterprise.

Moreover, the enterprise evaluation device of the present invention includes:

technical document acquisition means for acquiring technical documents from a technical document database;
total number of inventions per technical field extraction means for classifying the acquired technical documents into respective technical fields and for extracting the total number of inventions per technical field;
number of inventions per technical field and per enterprise extraction means for classifying the acquired technical documents into respective enterprises and into respective technical fields and for extracting the number of inventions per enterprise and per technical field;
oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;
oligopoly-emphasized score per technical field calculation means for calculating the oligopoly-emphasized score per technical field by multiplying the number-of-inventions share per technical field and per enterprise and the oligopoly score per technical field;
enterprise competitive position score calculation means for accumulating the oligopoly-emphasized score per technical field for each technical field having at least one invention in a predetermined enterprise, thereby calculating the enterprise competitive position score;
rate of increase of inventions acquisition means for acquiring the rate of increase in number of inventions in the predetermined enterprise and the rate of increase in number of inventions in all enterprises based on date information of the acquired technical documents;
excess growth rate calculation means for calculating the excess growth rate of the predetermined enterprise by subtracting the rate of increase in number of inventions in all enterprises from the rate of increase in number of inventions in the predetermined enterprise;
enterprise competitive position index calculation means for calculating the enterprise competitive position index by multiplying the enterprise competitive position score to a value obtained by adding 1 to the excess growth rate; and
output means for outputting the enterprise competitive position index to display means or the like.

Therefore, it is possible to evaluate the competitive position relating to inventions upon adding the rate of increase of the overall enterprise.

Further, the enterprise evaluation device of the present invention includes:

enterprise competitive position index categorizing means for comparing a predetermined threshold with the calculated enterprise competitive position index, and for categorizing the competitive position of the predetermined enterprise relating to inventions through representation with a figure or wording;
display data generation means for generating display data of categories with the figure or wording; and
output means for outputting the display data to display means or the like.

Therefore, it is possible to represent the competitive position relating to inventions upon adding the rate of increase of all enterprises in an easy-to-view manner.

Moreover, the enterprise evaluation device of the present invention includes:

technical document acquisition means for acquiring technical documents from a technical document database;

total number of inventions per technical field extraction means for classifying the acquired technical documents into respective technical fields and for extracting the total number of inventions per technical field;

number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

rate of increase of inventions acquisition means for acquiring the rate of increase in number of inventions in the predetermined enterprise and the rate of increase in number of inventions in all enterprises based on date information of the acquired technical documents;

excess growth rate calculation means for calculating the excess growth rate of the predetermined enterprise by subtracting the rate of increase in number of inventions in all enterprises from the rate of increase in number of inventions in the predetermined enterprise;

enterprise competitive position index calculation means for calculating the enterprise competitive position index by multiplying the enterprise competitive position score to a value obtained by adding 1 to the excess growth rate;

standardized enterprise competitive position index calculation means for calculating the standardized enterprise competitive position index through dividing the enterprise competitive position index by the number of technical fields; and

output means for outputting the standardized enterprise competitive position index to display means or the like.

Therefore, it is possible to add the rate of increase of all companies and present the level of technical development strength regardless of the broadness of a technical field of an enterprise. Further, it is possible to compare the competitive position relating to inventions equally for both enterprises having a broad technical field and enterprises having a narrow technical field.

Moreover, the enterprise evaluation device of the present invention includes:

standardized enterprise competitive position index categorizing means for comparing a predetermined threshold with the calculated standardized enterprise competitive position index, and for categorizing the competitive position of the predetermined enterprise relating to inventions through representation with a figure or wording;

display data generation means for generating display data of categories with the figure or wording; and

output means for outputting the display data to display means or the like.

Therefore, it is possible to represent the standardized competitive position relating to inventions upon adding the rate of increase of all enterprises in an easy-to-view manner.

Moreover, the enterprise evaluation device of the present invention classifies the technical field by IPC sections, IPC classes, IPC sub-classes, IPC main groups, IPC sub-groups, F terms, FI, facets or keywords contained in the technical, documents.

Therefore, it is possible to calculate the oligopolistic state or diversified state of inventions and competitive position by using published patent documents and present the same to a user.

Further, the enterprise evaluation device of the present invention uses, as the technical documents, publications of registered patents, unexamined patent applications, registered utility models, unexamined utility model applications, published translations of PCT international applications, domestic re-publications of PCT international applications, foreign publications, published appeal and trial decisions, transitional information or journals of technical disclosure.

Therefore, it is possible to calculate the oligopolistic state or diversified state of inventions and competitive position by using published patent documents and present the same to a user.

Further, the enterprise evaluation device of the present invention uses, as the number of inventions among the total number of inventions per technical field or number of inventions per enterprise and per technical field, the number of patent or utility model applications, number of claims filed, number of registrations, number of claims registered, number of examination requests, number of claims requested for examination, number of decisions of registration, number of claims decided to be registered, number of decisions of rejection, number of claims decided to be rejected, number of demands for trial, number of claims demanded for trial or the ratios thereof.

Therefore, it is possible to calculate the oligopolistic state or diversified state of inventions and competitive position by using published patent documents and present the same to a user.

Further, the enterprise evaluation device of the present invention includes:

> display data generation means for generating display data for associating and displaying the category of the oligopoly score per enterprise or the category of the diversification index and the category of the enterprise competitive position score or the category of the standardized enterprise competitive position score; and
> output means for outputting the display data to display means or the like.

Therefore, it is possible to display the relationship of the oligopolistic state of an enterprise based on an invention and the competitive position relating to inventions in an easy-to-understand manner.

Moreover, the enterprise evaluation device of the present invention includes:

> display data generation means for generating display data for associating and displaying the category of the oligopoly score per enterprise or the category of the diversification index and the category of the enterprise competitive position index or the category of the standardized enterprise competitive position index; and
> output means for outputting the display data to display means or the like.

Therefore, it is possible to display the relationship of the oligopolistic state of an enterprise based on an invention and the competitive position relating to inventions in an easy-to-understand manner.

Moreover, the enterprise evaluation device of the present invention includes:

> display data generation means for generating display data for associating and displaying the category of the oligopoly score per enterprise or the category of the diversification index and the enterprise competitive position score, the standardized enterprise competitive position score, the enterprise competitive position index or the standardized enterprise competitive position index; and
> output means for outputting the display data to display means or the like.

Therefore, it is possible to display the relationship of the oligopolistic state of an enterprise based on an invention and the competitive position relating to inventions in an easy-to-understand manner.

Moreover, the enterprise evaluation device of the present invention includes:

> management-finance information acquisition means for acquiring management-finance information of an enterprise to be researched from a management-finance database recording management-finance information such as information showing the size of the enterprise or finance information of the enterprise;
> display data generation means for generating display data for displaying, enterprise by enterprise and via a graph or chart, the relationship of the oligopoly score per enterprise, the oligopoly-emphasized score per technical field, enterprise competitive position score, standardized enterprise competitive position score, enterprise competitive position index or the standardized enterprise competitive position index, and the acquired management-finance information of the enterprise to be researched; and
> output means for outputting the display data to display means or the like.

Therefore, it is possible to accurately judge the condition of an enterprise by combining the technical strength and management-finance information relating to the invention.

Further, the enterprise evaluation device of the present invention uses, as the management-finance information, the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, R&D cost, R&D cost to sales volume ratio, R&D cost to gross operating profit ratio, gross operating profit ratio, gross operating profit or other financial infor-

14

mation of the enterprise.

Therefore, it is possible to accurately judge the condition of an enterprise by combining the technical strength and management-finance information relating to the invention.

BRIEF DESCRIPTION OF THE DRAWINGS

FIG. 1 is a diagram showing the overall configuration of an enterprise evaluation system;

FIG. 2 is a signal processing system block diagram of an enterprise evaluation device;

FIG. 3 is a diagram showing an example of management-finance information;

FIGS. 4A and 4B are diagrams showing an example of technical information;

FIG. 5 is a diagram showing a display example for displaying the top technical fields with the largest number of inventions in a predetermined enterprise, number-of-inventions share in such technical field, and oligopoly information showing whether the predetermined technical field is in an oligopolistic state;

FIG. 6 is a diagram showing a trial calculation example of the patent diversification index (PDI) of Enterprise A;

FIG. 7 is a diagram showing a trial calculation example of the patent diversification index (PDI) of Enterprise B;

FIG. 8 is a diagram showing a classification example of diversification based on the value of the patent diversification index (PDI);

FIG. 9 is a diagram showing a trial calculation example of the patent diversification index (PDI) in the case of changing the power index of Enterprise A;

FIG. 10 is a diagram showing a trial calculation example of the patent diversification index (PDI) in the case of changing the power index of Enterprise B;

FIG. 11 is a diagram showing a calculation example of the number-of-inventions share per technical field and per enterprise (%) in the technical field of (H01L) calculated based on Formula 11;

FIG. 12 is a diagram showing a calculation example of the number-of-inventions share per technical field and per enterprise (%) in the technical field of (G06F) calculated based on Formula 11;

FIG. 13 is a diagram showing a calculation example of the patent competitive position index D (PCPID) calculated based on Formula 15;

FIG. 14 is a diagram showing a calculation example of the excess growth rate calculated based on Formula 16;

FIG. 15 is a chart showing the patent competitive position index D (PCPID), and patent competitive position index (PCPI) calculated based on the excess growth rate;

FIG. 16 is a diagram showing the distribution of the calculation result when representing the value of the patent competitive position index (PCPI) with a logarithm on the horizontal axis, and representing the number of enterprises on the vertical axis;

FIG. 17 is a diagram showing the category example of the ranking according to the patent competitive position index (PCPI);

FIG. 18 is a chart showing relation of the star ranking representing the competitive position category of a predetermined enterprise relating to inventions with the number of stars, and the type category name representing the competitive position relating to inventions as the type of enterprise;

FIG. 19 is a display example collectively displaying the patent diversification index (PDI), patent competitive position index (PCPI) and standardized patent competitive position index (avgPCPI) of Enterprise A;

FIG. 20 is another display example collectively displaying the patent diversification index (PDI), patent competitive position index (PCPI) and standardized patent competitive position index (avgPCPI) of Enterprise B;

FIG. 21 is a chart showing the patent competitive position index (PCPI) and ranking, standardized patent competitive position index (avgPCPI) and ranking, and type of category based on the diversification index (PDI) of each enterprise in a predetermined technical field represented in descending order from the highest numerical value of the patent competitive position index (PCPI);

FIG. 22 is a chart showing the patent competitive position index (PCPI) and ranking, standardized patent competitive position index (avgPCPI) and ranking, and type of category based on the diversification index (PDI) of each enterprise in a predetermined technical field represented in descending order from the highest numerical value of the standardized patent competitive position index (avgPCPI);

FIG. 23 is a flowchart upon operating and outputting the index relating to the technical development strength such as the diversification index (PDI), patent competitive position index (PCPI), and standardized patent competitive position index (avgPCPI) when determining the enterprise value;

FIG. 24 is a diagram showing a display example of a display menu for selecting the type of index upon evaluating the enterprise value;

FIG. 25 is a diagram showing a state where a user selected "(PCPI) patent competitive position index" with the display menu for selecting the type of index;

FIG. 26 is a diagram showing an example where a user selected "number of claims filed" with the display menu for selecting the type of index;

FIG. 27 is a diagram showing an example where a user selected the item of "(C) profit related index" with the display menu for selecting the type of index;

FIG. 28 is a diagram showing an example where a user selected "GBP" (gross operating profit) among the items relating to "(C) profit related index" with the display menu for selecting the type of index;

FIG. 29 is a diagram showing a display example of the enterprise value evaluation input condition setting screen for selecting the conditions of "target document" and "reading of data" upon calculating the index for determining the enterprise value;

FIG. 30 is a display example of the enterprise value evaluation input condition setting screen for selecting the conditions of the target industry or respective target enterprises upon calculating the index for determining the enterprise value;

FIG. 31 is a diagram showing a display example of the enterprise value evaluation output condition setting screen for selecting the display mode of the calculated or determined enterprise evaluation information;

FIG. 32 is a chart illustrating the respective indexes of "business, profit, market value" calculated by the enterprise evaluation device and the calculating formula thereof;

FIG. 33 is a chart illustrating the respective indexes of "business, profit, market value" calculated by the enterprise evaluation device and the calculating formula thereof;

FIG. 34 is a chart illustrating the respective indexes of "R&D patent" calculated by the enterprise evaluation device and the calculating formula thereof;

FIG. 35 is a chart illustrating the respective indexes of "R&D patent" calculated by the enterprise evaluation device and the calculating formula thereof;

FIG. 36 is a chart illustrating the respective indexes of "patent portfolio" calculated by the enterprise evaluation device and the calculating formula thereof;

FIG. 37 is a diagram illustrating the significance of a graph representing the patent competitive position index (PCPI), which is one form of patent information, on the horizontal axis, and representing the gross operating profit, which is one form of management-finance information, on the vertical axis;

FIG. 38 is a diagram showing the relationship between the patent competitive position index (PCPI) and gross operating profit (GBP) of an enterprise belonging to a chemical division;

FIG. 39 is a diagram showing the relationship between the standardized patent competitive position index (avgPCPI) and gross operating profit (GBP) of an enterprise belonging to a chemical division;

FIG. 40 is a diagram showing the relationship between the patent diversification index (PDI) and gross operating profit (GBP) of all enterprises;

FIG. 41 is a diagram showing the relationship of the patent competitive position index (PCPI) and excess GBP of the chemical industry;

FIG. 42 is a diagram showing the relationship of the standardized patent competitive position index (avgPCPI) and excess GBP of the chemical industry; and

FIG. 43 is a diagram showing the relationship between the patent diversification index (PDI) and excess GBP of the respective enterprises in the chemical industry.


BEST MODE FOR CARRYING OUT THE INVENTION

Embodiments of the present invention are now explained with reference to the drawings.

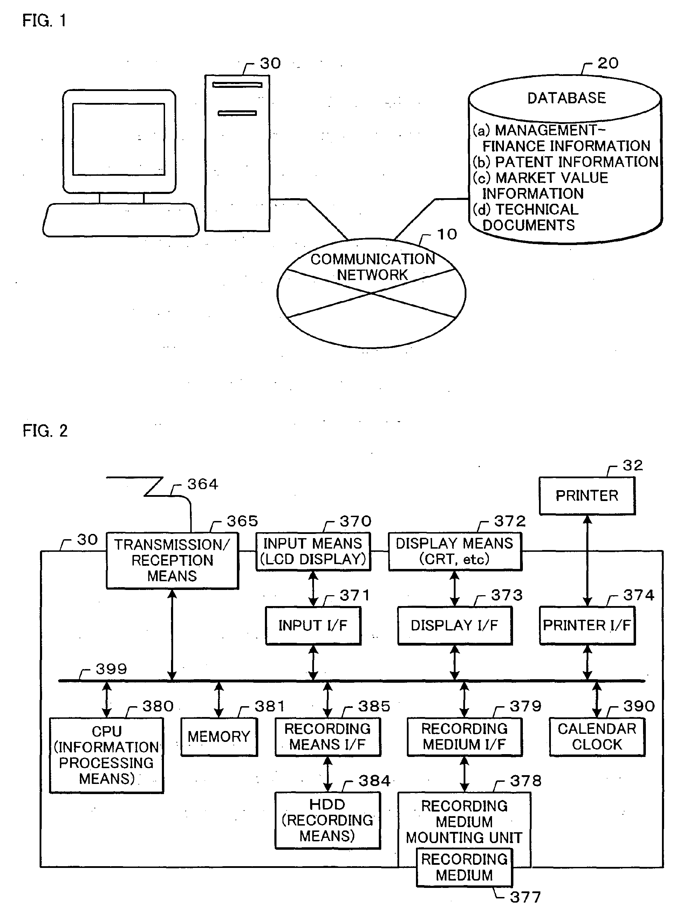

FIG. 1 is a diagram showing the overall configuration of an enterprise evaluation system according to the present invention.

As shown in FIG. 1, the enterprise value evaluation system is configured from a database 20 recording various types of information such as management-finance information, technical documents (in addition to patent information, numerical value information relating to utility models and technical journals), market value information (numerical value information of the market value), threshold for determining the validity of the enterprise value, determination of the validity and category based on such threshold; an enterprise evaluation device 30 for inputting various types of information such as management-finance information, technical document and market value information and outputting the judgment results of the validity of the enterprise value; and a communication network 10 such as the Internet or dedicated communication line for communicably connecting the enterprise evaluation device 30 and database 20.

Incidentally, the database 20 may be provided inside the enterprise evaluation device 30.

FIG. 2 is a signal processing system block diagram of an enterprise evaluation device 30 according to the present invention.

As shown in FIG. 2, the information transmission-reception unit of the enterprise evaluation device 30 is provided with a transmission-reception means 365 (including the functions of a management-finance information acquisition means, technical document acquisition means, market value information acquisition means, various threshold acquisition means and output means) for transmitting and receiving information to and from another telecommunications device via the communication network 364 such as a public line or telecommunications network.

Further, the enterprise evaluation device 30 is also provided with an input interface 371 for acquiring various types of information input by the user via the input means 370 and transmitting this to the information processing means described later, and outputting display commands to an LCD or the like based on instructions from the information processing means, a display means 372 for displaying information such as images or texts, graphs or charts, a display interface 373 (including the function of an output means) for outputting image signals for display to the display means 372 based on the command from the information processing means, and a printer interface 374 for outputting information such as images or texts, graphs or charts to a printer 32 or the like. Incidentally, the input means 370 includes input devices such as a keyboard, mouse, tablet and the like.

Further, the enterprise evaluation device 30 is also provided with a recording medium mounting unit 378 for detachably mounting a recording medium 377, and a recording medium interface 379 (including the functions of a management-finance information acquisition means, technical document acquisition means, market value information acquisition means, various threshold acquisition means and output means) for recording and reading various types of information in and from the recording medium 377. Incidentally, the recording medium 377 is a detachable recording medium in a magnetic recording format or optical recording format as represented by semiconductors such as a memory card, MO, magnetic disk and so on.

Moreover, the enterprise evaluation device 30 is also provided with an information processing means 380 for controlling the overall enterprise evaluation device 30, and a memory 381 configured from a ROM recording programs to be executed by the information processing means 380 and various constants, or a RAM which is a recording means to become the working area upon the information processing means 380 executing processing.

Further, the information processing means 380 is able to realize the various functions of a management-finance information acquisition means, technical document acquisition means, market value information acquisition means, various threshold acquisition means, output means, total number of inventions per technical field extraction means, total number of inventions per enterprise extraction means, number of inventions per technical field and per enterprise extraction means, oligopoly score per technical field calculation means, oligopoly score per enterprise calculation means, oligopolistic state per technical field judgment means, display data generation means, diversification per enterprise categorizing means, oligopoly-emphasized score per technical field calculation means, enterprise competitive position score calculation means, standardized enterprise competitive position score calculation means, enterprise competitive position score categorizing means, standardized enterprise competitive position score categorizing means, rate of increase of inventions acquisition means, excess growth rate calculation means, enterprise competitive position index calculation means, standardized enterprise competitive position index calculation means, enterprise competitive position index categorizing means and standardized enterprise competitive position index categorizing means. Incidentally, instead of the information processing means 380 performing all the foregoing processing, a plurality of dedicated processing devices may be provided so that the respective processing devices can share and execute such processing in order to achieve the objects of the present invention.

Moreover, the enterprise evaluation device 30 is also provided with a recording means 384 such as a hard disk recording various types of information; for example, various constants relating to the processing of the enterprise evaluation device 30, attribute information upon communicably connecting to a telecommunications device on a network, connection information such as a URL (Uniform Resource Locators), gateway information, DNS (Domain Name System), management-finance information relating to the management of the enterprise, technical documents relating to patents, market value information, threshold for determining the enterprise value and determination results of validity based on such threshold; recording means interface 385 (including the functions as a management-finance information acquisition means, technical document acquisition means, market value information acquisition means, various threshold acquisition means and output means) for reading information recorded in the recording means 384 and performing the process of writing information to the recording means 384; and a calendar clock 390 for clocking the time.

The respective peripheral circuits of the information processing means 380, display interface 373, memory 381, recording means interface 385 and calendar clock 390 in the enterprise evaluation device 30 are connected to a bus 399, and the respective peripheral circuits can be controlled based on the processing program to be executed by the information processing means 380.

Incidentally, various databases of the management-finance information, technical documents and market value information may be stored in the recording means 384, provided by the storage medium 377 such as a CD-ROM, CD-RW, DVD or MO, or acquired from another telecommunications device (database 20 or the like) via the communication network 364.

Further, the enterprise evaluation device 30 can be realized by using various types of computers such as a personal computer or workstation. Moreover, computers may be connected via a network to share and implement the functions.

The management-finance information acquisition means of the transmission-reception means 365, recording means interface 375, recording medium interface 379 and information processing means 380 are capable of acquiring management-finance information in a period to be researched from a management-finance information database (database 20, recording means 384, recording medium 377 or the like) recording information showing the size of the enterprise to be researched or management-finance information such as the finance information of the enterprise.

In addition, the technical document acquisition means of the transmission-reception means 365, recording means interface 375, recording medium interface 379 and information processing means 380 are capable of acquiring technical documents in an enterprise to be researched, technical field to be researched or period to be researched from a technical document database (database 20, recording means 384, recording medium 377 or the like) recording technical documents or technical journals relating to applications of patents or utility models which have been filed, or registered patents or utility models owned by the enterprise to be researched.

Further, the technical document acquisition means is capable of acquiring technical documents such as publications of unexamined patent applications or registered patents from a technical document database.

Moreover, the market value information acquisition means of the transmission-reception means 365, recording means interface 375, recording medium interface 379 and information processing means 380 are capable of acquiring market value information in a period to be researched from a market value information database (database 20, recording means 384, recording medium 377 or the like) recording market value information such as the rank of stock price, rank of brand value or hidden assets of the enterprise to be researched.

The total number of inventions per technical field extraction means of the information processing means 380 is capable of classifying the acquired technical documents into respective technical fields such as IPC sub-classes and keywords, and extracting the total number of inventions per technical field such as total number of patent applications per technical field or total number of claims filed per technical field.

Further, the number of inventions per technical field and per enterprise extraction means of the information processing means 380 is capable of classifying the acquired technical documents into respective enterprises such as applicants and respective technical fields such as IPC sub-classes and keywords, and extracting the number of inventions per enterprise and per technical field such as the number of patent applications per enterprise and per technical field or number of claims filed per enterprise and per technical field.

Moreover, the oligopoly score per technical field calculation means of the information processing means 380 is capable of calculating the number-of-inventions share per technical field and per enterprise by dividing the number of inventions per enterprise and per technical field by the total number of inventions per technical field, and accumulating the number-of-inventions share per technical field and per enterprise powered by ka (wherein ka > 1) for each enterprise having at least one invention in a predetermined technical field, thereby calculating an oligopoly score per technical field.

Further, the output means of the transmission-reception means 365, recording means interface 375, recording medium interface 379, printer interface 374 and information processing means 380 is capable of outputting the oligopoly score per technical field, oligopoly-emphasized score per technical field, oligopoly score per enterprise, index showing the oligopolistic state or competitive state, enterprise competitive position score, standardized enterprise competitive position score, enterprise competitive position index, standardized enterprise competitive position index, and other display data to the display means, printing means, recording medium, or another telecommunications device via a communication line.

Moreover, the oligopolistic state per technical field judgment means of the information processing means 380 and the like is capable of comparing a predetermined threshold and the calculated oligopoly score per technical field, and judging whether the number of inventions in the predetermined technical field is in an oligopolistic state of a specific enterprise, or a competitive state of numerous enterprises.

Further, the display data generation means of the information processing means 380 and the like is capable of generating display data for displaying the indication of the oligopoly score per technical field in a numerical value or a bar graph and the judgment result of whether number of inventions in the predetermined technical field is in an oligopolistic state of a specific enterprise within the same frame or at an adjacent position.

Moreover, the total number of inventions per enterprise extraction means of the information processing means 380 and the like is capable of classifying the acquired technical documents into respective enterprises such as applicants, and extracting the total number of inventions per technical field such as the total number of patent applications per enterprise or total number of claims filed per enterprise.

Further, the oligopoly score per enterprise calculation means of the information processing means 380 and the like is capable of calculating the number-of-inventions share per enterprise and per technical field by dividing the number of inventions per enterprise and per technical field by the total number of inventions per enterprise, and accumulating the number of inventions per enterprise and per technical field powered by kb (wherein kb > 0) for each technical field having at least one invention in a predetermined enterprise, thereby calculating an oligopoly score per enterprise.

Moreover, the diversification per enterprise categorizing means of the information processing means 380 and the like is capable of comparing a predetermined threshold and the calculated oligopoly score per enterprise, and categorizing whether the number of inventions in a predetermined enterprise is concentrated in a specific technical field or diversified in numerous technical fields through representation with a figure or wording.

Further, the diversification index calculation means of the information processing means 380 and the like is capable of calculating a diversification index by subtracting the oligopoly score per enterprise from 1, or a diversification index by subtracting the oligopoly score per enterprise from 1 and multiplying 100 thereto.

Moreover, the oligopoly-emphasized score per technical field calculation means of the information processing means 380 and the like is capable of calculating the oligopoly-emphasized score per technical field by multiplying the number-of-inventions share per technical field and per enterprise and the oligopoly score per technical field.

Further, the enterprise competitive position score calculation means of the information processing means 380 and the like is capable of accumulating the oligopoly-emphasized score per technical field for each technical field having at least one invention in a predetermined enterprise, thereby calculating the enterprise competitive position score.

Moreover, the enterprise competitive position score categorizing means of the information processing means 380 and the like is capable of comparing a predetermined threshold and the calculated enterprise competitive position score, and categorizing the competitive position of a predetermined enterprise relating to inventions through representation with a figure or wording.

Further, the display data generation means of the information processing means 380 and the like is capable of generating display data categorized by the figure or wording.

Moreover, the standardized enterprise competitive position score calculation means of the information processing means 380 and the like is capable of calculating the standardized enterprise competitive position score through dividing the enterprise competitive position score by the number of technical fields.

Further, the standardized enterprise competitive position score categorizing means of the information processing means 380 and the like is capable of comparing a predetermined threshold and the calculated standardized enterprise competitive position score, and categorizing the competitive position of a predetermined enterprise relating to inventions through representation with a figure or wording.

Moreover, the rate of increase of inventions acquisition means of the information processing means 380 and the like is capable of acquiring the rate of increase in number of inventions in a predetermined enterprise and the rate of increase in number of inventions in all enterprises based on date information of the acquired technical document.

Further, the excess growth rate calculation means of the information processing means 380 and the like is capable of calculating the excess growth rate of a predetermined enterprise by subtracting the rate of increase in number of inventions in all enterprises from the rate of increase in number of inventions in the predetermined enterprise.

Moreover, the enterprise competitive position index calculation means of the information processing means 380 and the like is capable of calculating the enterprise competitive position index by multiplying the enterprise competitive position score to a value obtained by adding 1 to the excess growth rate.

Further, the enterprise competitive position index categorizing means of the information processing means 380 and the like is capable of comparing a predetermined threshold and the calculated enterprise competitive position index, and categorizing the competitive position of a predetermined enterprise relating to inventions through representation with a figure or wording.

Moreover, the standardized enterprise competitive position index calculation means of the information processing means 380 and the like is capable of for calculating the standardized enterprise competitive position index by dividing the competitive position index per enterprise by the number of technical fields.

Further, the standardized enterprise competitive position index categorizing means of the information processing means 380 and the like is capable of comparing a predetermined threshold and the calculated standardized enterprise competitive position score, and categorizing the competitive position of a predetermined enterprise relating to inventions through representation with a figure or wording.

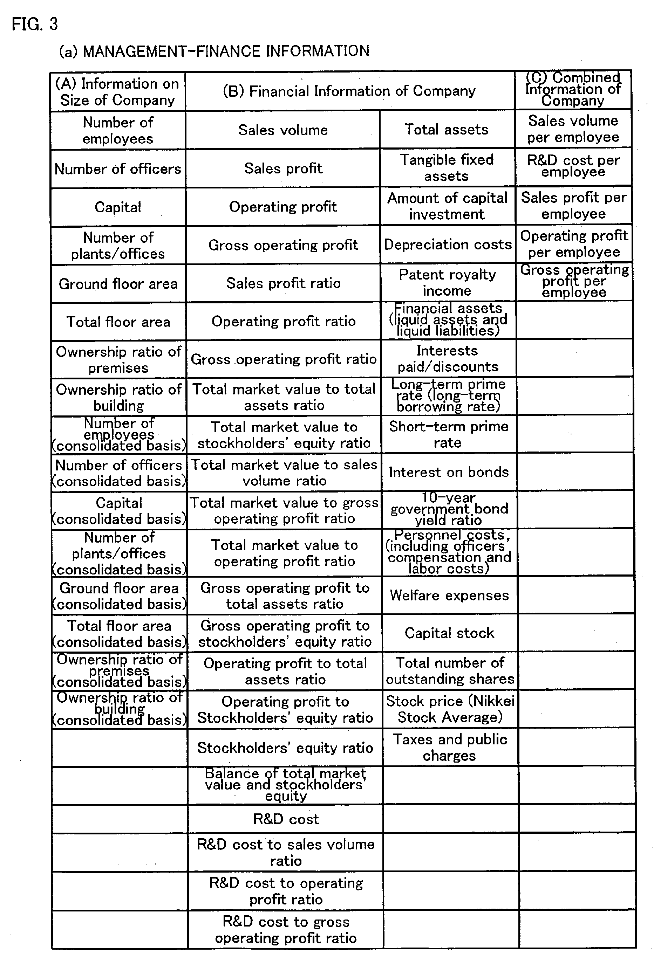

FIG. 3 is a chart representing an example of an example of management-finance information recorded in the recording means of the database 20 or the like.

As shown in FIG. 3, management-finance information includes information showing the size of the company, information showing the financial information of the company, and combined information of the company calculated by combining the various types of information of the company. Incidentally, as the data of management-finance information, the annual security report of the company to be researched, and information acquired from commercial databases provided by newspaper publishers and research institutes may be used.

Information showing the size of the company includes the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis).

The financial information of the company includes the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, R&D cost, R&D cost to sales volume ratio, R&D cost to gross operating profit ratio, gross operating profit ratio, R&D cost to operating profit ratio or gross operating profit.

Moreover, finance information of the company includes total assets, tangible fixed assets, amount of capital investment, depreciation costs, patent royalty income, financial assets (liquid assets and liquid liabilities), interests paid, discounts, long-term prime rate (long-term borrowirig rate), short-term prime rate, interest on bonds, 10-year government bond yield ratio, personnel costs (including officers' compensation and labor costs), welfare expenses, capital stock, total number of outstanding shares, stock price (Nikkei Stock Average) or taxes and public charges.

The combined information of the company includes the sales volume per employee, R&D cost per employee, sales profit per employee, operating profit per employee, gross operating profit per employee and so on.

The gross operating profit is now explained.

Pursuant to the revision of the accounting standards, as a general rule in Japan, R&D cost must be recorded entirely as expenses in the settlement of accounts after the term ending March 2000. Conventionally, there were numerous companies that did not disclose the breakdown of the R&D cost included in the manufacturing costs and general administrative expenses. Nevertheless, after the enforcement of these regulations, the amount of R&D cost pertaining to the calculation of profits and losses became clear. Thereupon, for the purpose of multilaterally analyzing the actual status of such R&D cost of the company, and index referred to as the "gross operating profit" has been developed. This is an estimate of hypothetical profits (main business excluding research and development activities; that is, gross profit generated from the manufacture and sale activities) sought by adding the R&D cost to the operating profit. As a result of the R&D cost being entirely recorded as expenses, upon calculating profits and losses, the more research and development activities are positively engaged, the more operating profit will be compressed. Thus, while the importance of technology development (intellectual property) is being discussed, there is a problem in that it is difficult to grasp the actual condition of the profitability of the company only from the perspective of operating profit. The foregoing estimate is considered to provide a perspective to this problem.

This gross operating profit is an index that is positioned roughly between the sales profit and operating profit. By using the gross operating profit simultaneously with the sales profit and operating profit, it will be possible to grasp the profitability of the company from many angles.

The sales profit is the gross margin sought by subtracting the manufacturing cost from the sales volume. Nevertheless, some R&D cost are included in manufacturing costs, whereas others are included in general administrative expenses. Thus, strictly speaking, the gross operating profit cannot be called a profit index positioned between the sales profit and operating profit. The relationship of the gross operating profit and other profit indexes can be represented with the formula indicated below.

```
Gross operating profit

= (sales profit) + (R&D cost included in the manufacturing costs) - {(general administrative expenses) - (R&D cost included in the general administrative expenses)}

= operating profit + R&D cost
```

Further, the R&D cost to gross operating profit ratio is now explained.

This is a calculation of the ratio of the "R&D cost" accounted for in the "gross operating profit". Thereby, it will be possible to see the ratio of the gross profits generated from the manufacture and sale activities being reinvested as the R&D cost. This ratio has a slightly different shade of meaning from the "R&D cost to sales volume ratio" generally referred to as the R&D ratio. Multilateral analysis such as the analysis to see what kind of ratio could be called the appropriate level is performed.

The value of the "R&D cost to gross operating profit ratio" is not for comparing the relative merits or quality of companies. This index will differ considerably depending on the business line and size of the company, and the situation of the management strategy and operating revenue of the respective companies. Therefore, this index may be used as a reference index for performing the relative comparison among companies of the same size in the same line of business.

Further, the gross operating profit ratio is now explained.

The "gross operating profit ratio" is sought by dividing the "gross operating profit" by the "sales volume". Therefore, this index is a provisional estimate of the ratio accounting for in the sales volume of the gross profit generated from the main business; that is, the manufacture and sale activities excluding the research and development activities. This index is considered to be positioned roughly between the sales profit ratio (sales ratio of the gross margin generated from manufacture activities) and operating profit ratio (sales ratio of profits generated from main business including research and development activities).

The balance of total market value and stockholders' equity is now explained.

It could be said that the total market value determined by the stock price is a valuation of the enterprise value in the market. Thus, it could also be said that the difference between the total market value and the stockholders' equity in the books is the valuation of the off-balance assets (intangible assets not recorded as assets) of the company in the market. In the future, while the accounting system of Japan will change to the current value accounting, the significance of this difference is considered to become more important. This is because, when complete current value accounting is performed, a company where the "balance of total market value and stockholders' equity" is 0 or less (that is, the value of the price book value ratio (PBR) is 1 or less) will have off-balance intangible assets valuation of 0.

Under the current stock market, numerous companies have a PBR of 1 or less. For instance, if the "balance of total market value and stockholders' equity" of a company owning patents that will be effective in yielding profits in the future and which has no bad debts or deteriorated assets is 0 or less, there is a possibility that the company is underestimated in the market.

Today, under the Japanese accounting system, accounting procedures are gradually but surely being changed to the current value accounting system. Thus, the amount of stockholders' equity in the books differs from the theoretical net assets. Accordingly, it is not possible to merely estimate the valuation of the company's off-balance intangible assets in the market with only the "balance of total market value and stockholders' equity" in order to judge the underestimation or overestimation of such evaluation.

The average years required for registration is now explained.

The "years required for registration" means the number of years required from the filing until the registration as a patent via examination. The "average years required for registration (based on the registered year)" is a calculation of the average value of the years required from the filing to the registration of the respective patents, based on the registered year, during the period subject to registration statistics. The "average years required for registration (based on the filed year)" is the calculation of the average value of the years required from the filing to the registration of the respective patents, based on the filed year, that were registered after the beginning of the period subject to registration statistics and by the end of the period subject to registration statistics among those filed before the end of the period subject to filing statistics.

Therefore, the "average years required for registration (based on the filed year)" will change (increase) by the occurrence of new registrations. Incidentally, by shortening the term of examination request, it is anticipated that the "years required for registration" relating to filings in or after October 2001 will become shortened considerably.

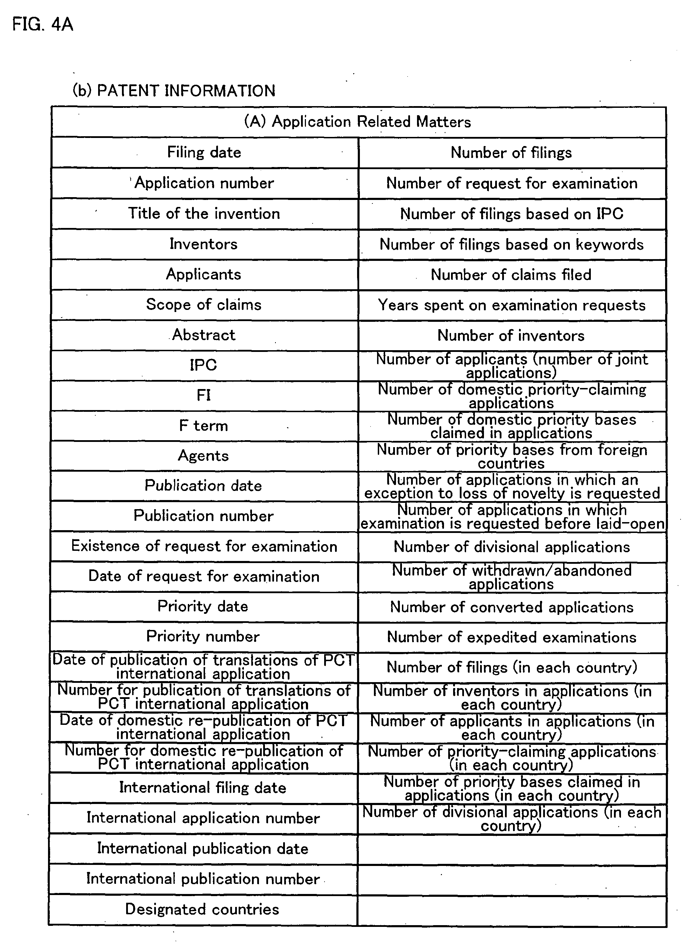

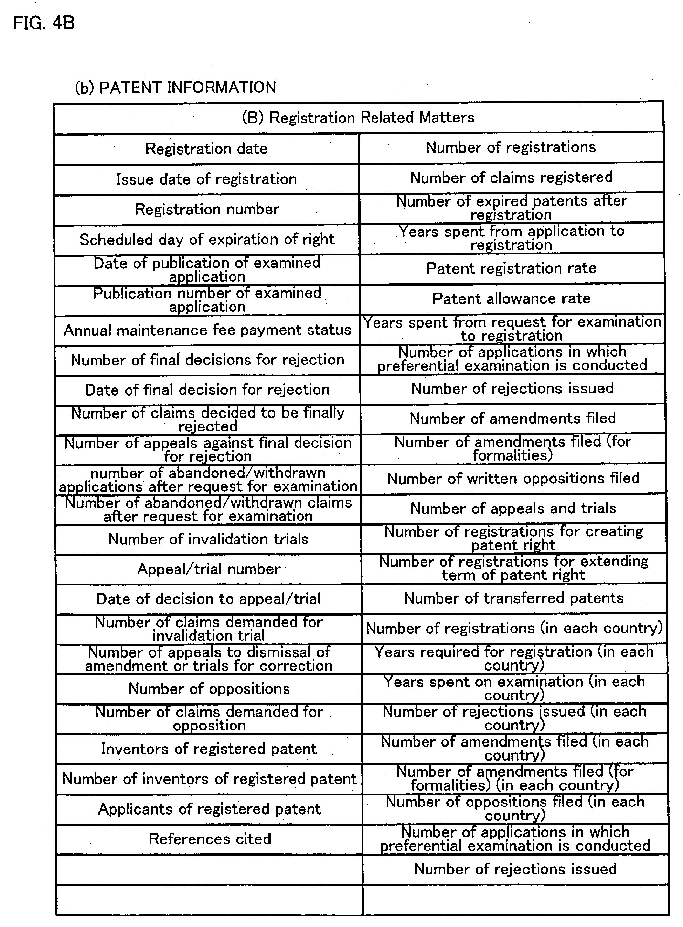

FIGS. 4A and 4B are diagrams showing an example of a technical document recorded in a recording means of the database 20 or the like.

As shown in FIGS. 4A and 4B, technical documents contain patent documents such as filing information and registration information of patents and utility models. As data of technical documents, for instance, the Industrial Property Digital Library database of the Japanese Patent Office, information relating to patents and utility models acquired from CD-ROM gazettes or other technical journals may be used.

Application information of the present invention includes, for instance, per enterprise, the following: the filing date, application number, title of the invention, inventors, applicants, scope of claims, abstract, IPC, FI, F Term, agents, publication date, publication number, existence of request for examination, date of request for examination, priority date, priority number, date of publication of translations of PCT international application, number for publication of translations of PCT international application, date of domestic re-publication of PCT international application, number for domestic re-publication of PCT international application, international filing date, international application number, international publication date, international publication number, designated country, number of filings, number of examinations requested, number of filings based on IPC, number of filings based on keywords, number of claims filed, years spent on examination requests, number of inventors, number of applicants (number of joint applications), number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn/abandoned applications, number of converted applications, number of expedited examinations, number of filings in each foreign country, number of inventors in each foreign country, number of applicants in each foreign country, number of priority-claiming applications in each foreign country, and number of priority bases claimed in applications in each foreign country or number of divisional applications in each foreign country.

Further, registration information of the present invention includes, for example, per enterprise, the following: the registration date, issue date of registration, registration number, scheduled day of expiration of right, date of publication of examined application, publication number of examined application, annual maintenance fee payment status, number of final decisions for rejection, date of final decision for rejection, number of claims decided to be finally rejected, number of appeals against final decision for rejection, number of abandoned/withdrawn applications after request for examination, number of abandoned/withdrawn claims after request for examination, number of invalidation trials, appeal/trial number, date of decision to appeal/trial, number of claims demanded for invalidation trial, number of appeals to dismissals of amendment or trials for correction, number of oppositions, number of claims demanded for opposition, inventors of registered patent, number of inventors of registered patent, applicants of registered patent, references cited, number of registrations, number of claims registered, number of expired patents after registration, years spent from application to registration, patent registration rate, patent allowance rate, years spent from request for examination to registration, number of applications in which preferential examination is conducted, number of rejections issued, number of amendments filed, number of amendments filed for formalities, number of registrations for creating patent right, number of registrations for extending term of patent right, number of transferred patents, number of registrations in each country, years required for registration in each country, years spent on examination in each country, number of rejections issued in each country, number of amendments filed in each country, number of amendments filed for formalities in each country, number of oppositions filed in each country, number of applications in which preferential examination is conducted or number of rejections issued.

The respective indexes upon evaluating an enterprise based on the number of inventions are now explained.

Generally, it is possible to judge that an enterprise with a large number of inventions such as the number of patent applications or the number of claims contained in patent applications is allotting their budget to the development of new products, is active in product development toward the future, and is expected to expand its business or improve its profits in the future.

Industrial products in recent years are equipped with numerous functions for increasing the value as the product itself, and the technical fields required for product development are broadening in accordance with the function or performance of the product. Further, when designing the product by improving the function or performance in order to improve the competitive position, development costs thereof will also rise considerably, and a substantial amount of funding and personnel will also become required.

If an enterprise that is creating numerous technical ideas for the development of new products and filing patent applications has sufficient development funds, it is possible to judge that this enterprise is expected to expand its business or improve its profits in the future in light of the exclusive right upon obtaining the patent.

Further, investors and banks wish to invest in enterprises with a promising future, and students and mid-career engineers wish to be employed in an enterprise with ingenious technical strength.

The present invention provides several indexes that will become a criterion for investors, banks, engineers and others to search for enterprises with ingenious technical strength and a promising future among a plurality of enterprises, to search for enterprises with competitive edge, or to judge whether inventions in a predetermined technical field are in a competitive state or an oligopolistic state.

Foremost explained is the patent application portfolio analysis which provides an index enabling the judgment of whether inventions relating to a predetermined technical field are in a competitive state as a result of such technology being filed equally by the respective enterprises, or in an oligopolistic state as a result of such technology being filed mostly by a specific enterprise.

In this patent application portfolio analysis, patent applications or the number of inventions such as the number of claims in an application are extracted for the respective technical fields such as IPC sub-classes and keywords.

Generally, a patent application is a novel invention that can be put to industrial application, and filed for an invention satisfying the requirement of unity of an invention. Thus, it is possible to consider the number of patent applications to be the number of inventions.

Further, there are many cases where a plurality of novel inventions are divided and claimed in a plurality of claims in a single patent application. Therefore, it is also possible to consider the number of claims of a patent application to be the number of inventions. Particularly in recent years, the number of claims included in a single patent application is of an increasing trend. Nevertheless, it has been statistically proven that the number of claims included in a single patent application have differing average values and trends depending on the technical field or business category, or per enterprise. Thus, if the trend analysis of patent applications of the respective enterprises, comparative assessment with other companies and analysis of technical strength are conducted simply with the number of applications, there may be some cases where this may cause a considerable misunderstanding. Due to the foregoing reasons, the patent application trend and technical trend of the respective companies in the embodiments of the present invention are captured from both aspects of the number of patent applications and the number of claims in a patent application.

Incidentally, in the foregoing example, although the number of patent applications and the number of claims in a patent application are used, the present invention is not limited thereto, and, as the number of inventions, the number of patent or utility model registrations, number of claims registered, number of examination requests, number of claims requested for examination, number of final decisions for registration, number of claims decided to be registered, number of final decisions for rejection, number of claims decided to be rejected, number of demands for trial, number of claims demanded for trial and so on may also be used according to the intended purpose.

Moreover, a value combining two or more number of inventions, for instance, (number of registrations/number of examination requests) may also be used according to the intended purpose.

Further, although a case where IPC sub-classes are used as the technical field of the invention was described in the foregoing example, technical information is not limited to IPC sub-classes, and the classifications of IPC sections, classes, sub-classes, main groups, sub groups, F terms, FI, facets, keywords contained in the patent documents may also be used according to the intended purpose.

Further, as other classifications of an invention, annual classification such as the filing date or registration date of patent applications may be used, classification in the number of years from filing to registration, classification in the number of years from examination request to registration, and classification in the retention period of registered patents may also be used.

Incidentally, in the following example, a calculation example using the IPC sub-classes as the classification of the technical field, and the number of filings and number of claims as the number of inventions is shown as a representative example.

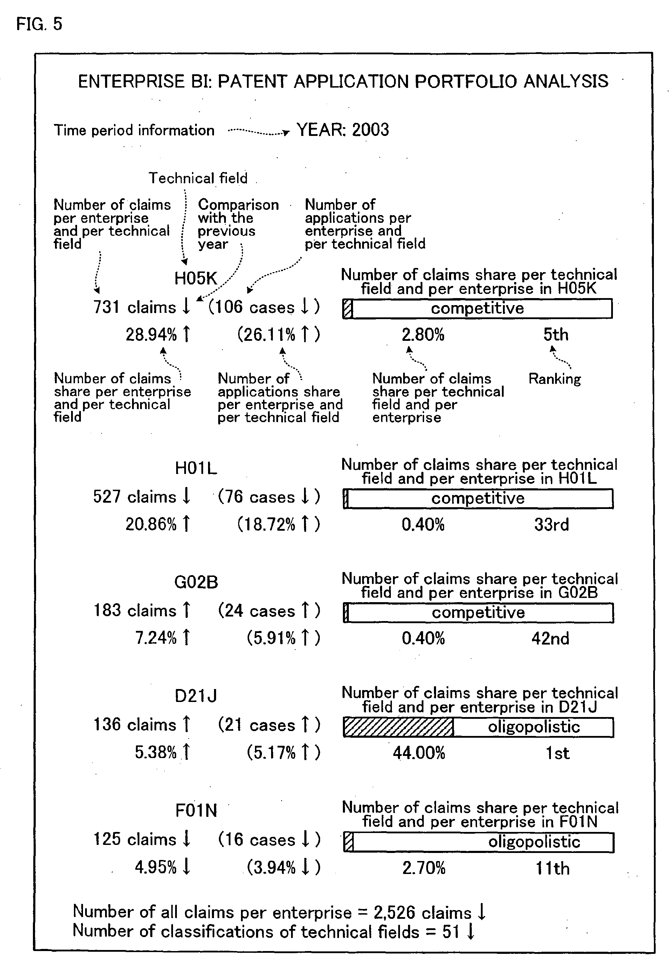

FIG. 5 is a diagram showing a display example for displaying the top technical fields (H05K, H01L...) with the largest number of inventions in a predetermined enterprise (Enterprise BI) of a specific year (2003), number-of-inventions share (ratio) of the predetermined enterprise (Enterprise BI) in the number of inventions of all enterprises in such technical field, and oligopoly information showing whether the number of inventions in a predetermined technical field is in a competitive state among the respective enterprises or in an oligopolistic state.

FIG. 5 shows period information representing the year of an invention used in the calculation, technical fields such as IPC sub-classes to which the invention belongs, number of claims per enterprise and per technical field and number of claims per enterprise and per technical field of a patent of a predetermined technical field in a predetermined enterprise, number of claims per enterprise and per technical field (number of claims per enterprise and per technical field share (ratio)) among the total number of claims per enterprise, number of applications per enterprise and per technical field (number of applications per enterprise and per technical field share (ratio)) among the total number of applications per enterprise, total number of claims per enterprise, and the number of classifications of the technical field.

Further, FIG. 5 also shows the number of claims per enterprise and per technical field ratio (number-of-claims share per technical field and per enterprise) among the total number of claims per technical field and per enterprise, and oligopoly information showing whether the number of inventions is in a competitive state or in an oligopolistic state in light of the number of claims per technical field and per enterprise of the respective enterprises in such technical field.

Formula 1 below shows the calculating formula for calculating the ratio of number of claims per enterprise and per technical field (number of claims share per enterprise and per technical field) among the total number of claims per enterprise.

```
Number-of-claims share per enterprise and per technical field

(%)

= {(number of claims per enterprise and per technical field) /

(total number of claims per enterprise)} × 100 …(Formula 1)
```

The calculating formula is shown below for calculating the ratio of number of applications per enterprise and per technical field (number of applications share per enterprise and per technical field) among the total number of applications per enterprise.

Number-of-applications share per enterprise and per technical field (%)

= {(number of applications per enterprise and per technical field) / (total number of applications per enterprise)} × 100

...(Formula 2)

Without limiting foregoing Formula 1 and Formula 2 to the number of claims or number of applications, and generally indicating the number of inventions regarding the number of examination requests, number of registrations, number of registered claims and so on, the number-of-inventions share per enterprise and per technical field can be represented with Formula 3 below. Incidentally, in following Formula 3, although a percentage indication is enabled by multiplying 100 at the end, the ratio may be calculated without multiplying 100.

Number-of-inventions share per enterprise and per technical field (%)

= {(number of inventions per enterprise and per technical field) / (total number of inventions per enterprise)} × 100

...(Formula 3)

provided,

Total number of inventions per enterprise

= total number of inventions per enterprise and per technical field in each enterprise

$= \Sigma_{m=1}^{M}$ (number of inventions per enterprise and per m technical

field (technical field))

M: Total number of technical fields having at least one invention in a predetermined enterprise
m: Each technical field

The calculating formula is shown below for calculating the ratio of number of claims per enterprise and per technical field (number-of-claims share per technical field and per enterprise) among the total number of claims per technical field.

```
Number-of-claims share per technical field and per enterprise
(%)
= {(number of claims per enterprise and per technical field) /
(total number of claims per technical field)} × 100 …(Formula
4)
```

provided,

```
Total number of claims per technical field
= total number of claims per technical field and per
enterprise in all enterprises
```

$$= \Sigma_{n=1}^{N} \text{ (number of claims per technical field and per n}$$

```
enterprise (enterprise))
```

N: Total number of enterprises having at least one invention in a predetermined technical field
n: Each enterprise

Without limiting the parameters of foregoing Formula 4 to the number of claims, and generally indicating the number of inventions regarding the number of applications, number of registrations, number of registered claims and so on, the number-of-inventions share per technical field and per enterprise can be represented with Formula 5 below.

```
Number-of-inventions share per technical field and per
enterprise (%)
= {(number of inventions per enterprise and per technical
field) / (total number of inventions per technical field)} ×
100 …(Formula 5)
```

provided,

Total number of inventions per technical field

= total number of inventions per technical field and per enterprise in all enterprises

= $\Sigma_{n=1}^{N}$ (number of inventions per technical field and per n

enterprise (enterprise))

N: Total number of enterprises having at least one invention in a predetermined technical field
n: Each enterprise

Oligopoly information showing whether the number of inventions in a predetermined technical field is in a competitive state among all enterprises or in an oligopolistic state, for instance, can be determined and displayed by substituting Formula 5 to the following calculating formula of the SEI score per technical field (oligopoly score per technical field)

SEI score per technical field

= oligopoly score per technical field

= $\Sigma_{n=1}^{N}$ (SEI index per technical field and per enterprise

(enterprise))

= $\Sigma_{n=1}^{N}$ {emphasized ratio of number-of-inventions share per technical field and per n enterprise (enterprise)}

= $\Sigma_{n=1}^{N}$ {(number-of-inventions share per technical field and per

n enterprise)$^{ka}$}

= $\Sigma_{n=1}^{N}$ {((number of inventions per enterprise and per technical

field) / $\Sigma_{n=1}^{N}$ (number of inventions per technical field and per

n enterprise (enterprise)))$^{ka}$}

= $\Sigma_{n=1}^{N}$ {((number of inventions per enterprise and per technical field) / (total number of inventions per technical field))$^{ka}$}

...(Formula 6)

provided,

N: Total number of enterprises having at least one invention in a predetermined technical field
n: Each enterprise
ka: Power index (within a scope where ka > 1)

In the case of ka = 2, number-of-inventions share per technical field = applied HHI index.

For example, when 1000 is used as the threshold for judging the competitive state or oligopolistic state, the competitive state of an invention in a predetermined technical field can be categorized as follows. Competitive state: SEI score per technical field (when ka = 2) < 1000

Oligopolistic state: SEI score per technical field (when ka = 2) ≥ 1000

Originally, the HHI index is an abbreviation of the Hirschman-Herfindahl Index and is an index referred to as the "Herfindahl Index". The HHI index is a method for measuring the degree of oligopoly or dispersion in an arbitrary product market, and is sought with the total value obtained by squaring the share of an enterprise participating in that market.

When this HHI index is applied to inventions, when a single company is dominating a market, the value will be applied HHI = 10,000, and the value will be lower when the competition is severe. With the present invention, in addition to applying the HHI index to the number-of-inventions share, a threshold is provided for judging the oligopolistic state or competitive state. And, when the applied HHI index of the number-of-inventions share exceeds the threshold, this is judged to be an oligopolistic state, and if it is less than the threshold, this is judged to be a competitive state.

Incidentally, in the foregoing example, although the threshold of the applied HHI index based on the number-of-inventions share is empirically set to 1000, the threshold is not limited to 1000. Further, the number-of-inventions share per technical field and per enterprise of each enterprise participating in the market is not limited to being squared, and a value of the cube or more may also be used according to the intended purpose.

When judging the potential of an enterprise or comparing an enterprise with another enterprise using the number of patent applications as an example of representing the number of inventions, or when making a comparison simply by focusing on the number of inventions such as the number of applications, this will become a comparison of the size of the enterprises, and there may be cases where a user is not able to obtain the information he/she wishes to learn. Thus, in the present invention, the breakdown per technical field that would not be evident only from the total number of inventions such as the number of patent applications or number of claims in a patent application is analyzed through classification using technical field information such as IPC sub-classes.

Further, in addition to the internal breakdown analysis by the respective enterprises, the status of other enterprises in that technical field and the competitive state of the number of inventions in that technical field are also displayed. As a result, the positioning of the number of inventions of the enterprise to be researched among all competitors can be comprehended from many angles.

For instance, when an application portfolio analysis is conducted regarding a predetermined enterprise, if a technical field ranked high in the application portfolio with a large number of inventions is judged to be in an oligopolistic state as a result of tabulation including other enterprises (when a certain enterprise is remarkably devising many inventions) and such predetermined enterprise has a considerable share regarding the inventions in this technical field, it can be acknowledged that the predetermined enterprise has dominant technical status in this technical field.

Further, if a technical field ranked high in the portfolio is in a severe competitive state as a result of tabulation including other enterprises, and such predetermined enterprise only has a small share regarding the inventions, the predetermined enterprise is not in an advantageous state in this technical field given the present circumstances. Accordingly, it is possible to presume that the predetermined enterprise should consider withdrawing to a new and different core area with a possibility of securing competitive advantage.

For instance, an example of conducting application portfolio analysis by setting the predetermined period to each year, setting the IPC sub-class as the technical field to which the invention belongs, and setting the number of claims as the number of inventions is explained below.

Foremost, the enterprise evaluation device 30 performs processing for reading the name of IPC sub-classes and the number of claims regarding the publications of unexamined patent applications of all enterprises filed within a predetermined period.

And, the enterprise evaluation device 30 tabulates the number of claims and number of applications per all IPC sub-classes given to all the read publications of unexamined patent applications, and displays the number of applications per enterprise and per technical field and the number of claims per enterprise and per technical field and the number of top classifications thereof.

In the example shown in FIG. 5, the number of claims per enterprise and per technical field, number of claims per enterprise and per technical field share, number of applications per enterprise and per technical field and number of applications per enterprise and per technical field share are calculated regarding the top 5 predetermined technical fields (IPC sub-classes) for each predetermined period (i.e., for each year), and displayed on the left half of the diagram. The increase or decrease when compared to the calculated results of the previous year (i.e. comparison with the same term of the previous year) is displayed with ↑ or ↓ on the right side of the number of claims per enterprise and per technical field, number of claims per enterprise and per technical field share, number of applications per enterprise and per technical field and number of applications per enterprise and per technical field share.

The right side of the application portfolio analysis shown in FIG. 5 shows the number-of-inventions share per technical field and per enterprise (number-of-claims share per technical field and per enterprise in the example shown in FIG. 5) and the ranking of such number-of-inventions share per technical field and per enterprise, as well as the oligopolistic state of such technical field (IPC sub-class) in the respective predetermined technical fields (respective IPC sub-classes). This oligopolistic state is an index for judging whether the number of inventions in a predetermined technical field is in an oligopolistic state of a specific enterprise, or in a competitive state among numerous enterprises by comparing the predetermined threshold and the calculated oligopoly score per technical field. Particularly, in the example shown in FIG. 5, the oligopolistic state is shown in text, the number-of-claims share per technical field and per enterprise is shown with a bar graph and numerical value, and the judgment result of whether the number of inventions is in an oligopolistic state or a competitive state is displayed at a position in the same frame of adjacent thereto.

Next, the numerical values of the respective calculation results shown in FIG. 5 and the significance thereof are explained. FIG. 5 shows that the number of claims per enterprise and per technical field (one form of the number of inventions per enterprise and per technical field) of a predetermined enterprise (Enterprise BI) in the year 2003 is 2,526 claims, and that the number of classifications of the IPC sub-classes (one form of the technical field) is 51 classifications.

Among the above, the ranking of IPC sub-classes up to the top 5 from the largest number of claims is 1st: H05K (number of claims per enterprise and per technical field = 731 claims, which accounts for 28.94% of the total number of claims of the enterprise; thereinafter the same); 2nd: H01L (527, 20.86%), 3rd: G02B (183, 7.24%); 4th: D21J (136, 5.38%) and 5th: F01N (125, 4.95%).

When calculating the corresponding number-of-inventions share per technical field and per enterprise (where ka = 2 in Formula 6) regarding the calculated number of claims per enterprise and per technical field share, the SEI score per technical field (refer to Formula 6 for the calculating formula) in all enterprises in which the number of claims per enterprise and per technical field is 1st to 3rd IPC sub-classes is all below 1,000, and it is therefore possible to judge that this is in a competitive state.

In particular, Enterprise BI has a number-of-inventions share per technical field and per enterprise in H01L of 0.40%, and is ranked 33rd, and has a number-of-claims share per technical field and per enterprise of G02B of 0.40%, and is ranked 42nd. Therefore, it can be acknowledged that Enterprise BI is under a very severe condition in terms of technical competition in these technical fields.

Further, in the technical field of D21J, although the number of claims per enterprise and per technical field in Enterprise BI is ranked 4th, it accounts for 44.00% of the number-of-claims share per technical field and per enterprise among the number of inventions in all enterprises, and is ranked 1st. The value of SEI score per technical field (when ka = 2) is also $44(\%)^2 = 1,936$ (refer to Formula 6 for the calculating formula), and, since the threshold largely exceeds 1,000, it is possible to determine the oligopolistic state of Enterprise BI. Therefore, it is possible to judge that Enterprise BI has a dominant advantage in the technical development of this technical field.

Moreover, in the subsequent technical field of F01N, the number-of-claims share per technical field and per enterprise among the number of inventions in all enterprises is 2.70%, and is ranked 11th. Therefore, the market share of inventions by other companies is high, and it is possible to determine that this technical field is in an oligopolistic state of other enterprises other than Enterprise BI. And, it is possible to judge that Enterprise BI is under a very severe condition in terms of technical competition in this technical field.

With the present invention described above, the technical competitive position of an enterprise that cannot be known only with the number of inventions such as the number of patent applications per enterprise and per technical field or number of claims per enterprise and per technical field is analyzed upon giving consideration to technical fields such as IPC sub-classes. And, by displaying, in addition to the breakdown analysis of the respective enterprises, the status such as the share or oligopoly information of the respective enterprises in that technical field, or the competitive state of the technical field itself, the positioning relating to the technical development of the respective enterprises can be comprehended from many angles.

Next, calculation of the patent diversification index (an index showing one form of the diversification index) is explained. The patent diversification index represents the degree of concentration or diversification of the technical development in a predetermined technical field by using the ratio of the number of inventions per enterprise and per technical field (number of claims per enterprise and per technical field) per technical field (per IPC sub-class) among the total number of claims per enterprise of each year (each period). Incidentally, the patent diversification index is referred to as a PDI (Patent Diversification Index) below, and this is calculated in the following order together with the SEI index per enterprise and per technical field (emphasized ratio of per enterprise and per technical field share).

The calculating formula is shown below for calculating the number-of-inventions share per enterprise and per technical field (%).

Number-of-inventions share per enterprise and per technical field (%)

= {(number of inventions per enterprise and per technical field) / (total number of inventions per enterprise)} × 100

provided,

Total number of inventions per enterprise

= total number of inventions per enterprise and per technical field in each technical field

= $\Sigma_{m=1}^{M}$ (number of inventions per enterprise and per m technical field (technical field))

M: Total number of technical fields having at least one invention in a predetermined enterprise
m: Each technical field

The calculating formula is shown below for calculating the emphasized ratio of number-of-inventions share per enterprise and per technical field.

Emphasized ratio of number-of-inventions share per enterprise and per technical field = SEI index per enterprise and per technical field

= (number-of-inventions share per enterprise and per technical field)$^{kb}$

= {(number of inventions per enterprise and per technical field) / ($\Sigma_{m=1}^{M}$ (number of inventions per enterprise and per m technical field (technical field)))}$^{kb}$

= {(number of inventions per enterprise and per technical field) / (total number of inventions per enterprise)}$^{kb}$

...(Formula 8)

provided,

M: Total number of technical fields having at least one invention in a predetermined enterprise
m: Each technical field
kb: Power index (kb > 0)

The definitional equation of the SEI score per enterprise (oligopoly score per enterprise) is shown below.

$$\text{SEI score per enterprise}$$

$$= \Sigma_{m=1}{}^{M} \text{ (SEI index per enterprise and per technical field)}$$

$$= \Sigma_{m=1}{}^{M} \{\text{emphasized ratio of number-of-inventions share per enterprise and per m technical field (technical field)}\}$$

$$= \Sigma_{m=1}{}^{M} \{\text{(number-of-inventions share per enterprise and per m technical field (technical field))}^{kb}\}$$

$$= \Sigma_{m=1}{}^{M} \{\text{((number of inventions per enterprise and per technical field)} / \Sigma_{m=1}{}^{M} \text{ (number of inventions per enterprise and per m technical field (technical field)))}^{kb}\}$$

$$= \Sigma_{m=1}{}^{M} \{\text{((number of inventions per enterprise and per technical field)} / \text{(total number of inventions per enterprise))}^{kb}\}$$

$$\text{...(Formula 9)}$$

provided,

M: Total number of technical fields having at least one invention in a predetermined enterprise
m: Each technical field
kb: Power index (kb > 0)

The calculating formula is shown below for defining the patent diversification index PDI (Patent Diversification Index), which is one form of a diversification index.
In the following formula, 100 is multiplied to a value obtained by subtracting 1 from the oligopoly score per enterprise to calculate the diversification index, and displayed in a value that is sensuously similar to a percentage indication. Nevertheless, a value obtained by subtracting the oligopoly score per enterprise from 1 without multiplying 100 may also be defined and displayed as the diversification index.

Patent diversification index (PDI)

= {1 − (SEI score per enterprise)} × 100

= {1 − $\Sigma_{m=1}^{M}$ (SEI index per enterprise and per technical field)}

× 100

= [1 − $\Sigma_{m=1}^{M}$ {emphasized ratio of number-of-inventions share per enterprise and per m technical field (technical field)}] × 100

= [1 − $\Sigma_{m=1}^{M}$ {(number-of-inventions share per enterprise and per m technical field (technical field))$^{kb}$}] × 100

= [1 − $\Sigma_{m=1}^{M}$ {((number of inventions per enterprise and per m

technical field) / $\Sigma_{m=1}^{M}$ (number of inventions per enterprise and per m technical field (technical field)))$^{kb}$}] × 100

= [1 − $\Sigma_{m=1}^{M}$ {((number of inventions per enterprise and per m

technical field) / (total number of inventions per

enterprise))$^{kb}$}] × 100 …(Formula 10)

provided,

M: Total number of technical fields having at least one invention in a predetermined enterprise
m: Each technical field
kb: Power index (kb > 0)

Upon calculating the SEI score per enterprise, the number-of-inventions share per enterprise and per technical field is calculated by being powered by kb. Therefore, in a case where kb = 2, when the number of claims share per enterprise and per technical field is 100% in a single technical field (when inventions exist in only one technical field), the SEI score per enterprise (maximum value) = 1.00.

As shown in Formula 9 above, when calculating the SEI score per enterprise, the total of values obtained by powering the number of claims share per enterprise and per technical field with kb regarding the respective technical fields is calculated. This calculating formula is similar to Formula 6 which is a calculating formula for calculating the number-of-inventions share per technical field and per n enterprise, but the target of calculating the total is different. Further, Formula 10 subtracts this total from 1 in order to represent across how many technical fields the inventions of a predetermined enterprise are being devised.

By using Formula 10 to calculate the patent diversification index (PDI), it will be possible to show the degree of diversification of inventions in a predetermined enterprise. 100 is multiplied at the end for setting the acquirable scope of the patent diversification index to be 0 to 100, thereby realizing an easy-to-read numerical value as a value close to a percentage indication.

Incidentally, upon calculating the patent diversification index shown in Formula 10, instead of subtracting the number-of-inventions share total from 1, the total of the power of the number of claims per enterprise and per technical field share itself may be multiplied by 100 in order to calculate the SEI score per enterprise. In such a case, since a large value will be displayed when the inventions of a predetermined enterprise are concentrated in a specific technical field, the calculated index may be expressed as a monopolization index or oligopolistic index.

Moreover, without limitation to multiplying 100, a round number or the multiples thereof (e.g., 10, 200, 1000, 10000 and so on) may be multiplied.

The SEI score per technical field illustrated in Formula 6 showed a state (oligopolistic state) where a specific enterprise is monopolizing the inventions in a predetermined technical field the larger the value, and showed a state (dispersed state) where numerous enterprises are creating inventions in a predetermined technical field the smaller the value. In the case of a patent diversification index (PDI), as shown in Formula 8, since the SEI score per enterprise is subtracted from 1 and then multiplied by 100, the closer this value is to 100, it means that the inventions of that enterprise are diversified across various technical fields. Further, the closer this value is to 0, it means that the inventions of that enterprise are concentrated in a specific technical field.

Although it is generally preferably to use kb = 2 as the power index kb, by using a power that is greater than 1, the difference in shares among the respective technical fields can be represented larger. Further, if a power that is smaller than 1 is used as the power index kb, the difference among the respective technical fields can be represented smaller. This can be suitably employed in a case where it is not preferable if the difference in shares among the respective technical fields is so small that it is difficult to see, but when comparing technical fields that have a significant difference in shares from the beginning. Therefore, the power index may be suitably changed according to the target of research or intended purpose.

Moreover, the patent diversification index may be calculated based on the foregoing calculating formula and compared with a predetermined threshold so as to categorize the degree of diversification using a figure or wording for representing whether the number of inventions in a predetermined enterprise is concentrated in a specific technical field, or diversified in numerous technical fields. The patent diversification index (PDI) shown in Formula 10 is calculated based on the number of inventions per enterprise and per technical field, but this may also be calculated based on the number of claims per enterprise and per technical field or number of applications per enterprise and per technical field.

As the numerical value relating to the technical field, the primary classification of IPC sub-classes given to publications of unexamined patent applications may be used. Further, the secondary classification of the IPC sub-classes may be jointly used. In such a case, 0.5 cases of primary classification and 0.5 cases of secondary classification may be tabulated equally, or, as a different weighting in the primary classification and secondary classification of IPC, for instance, 0.7 cases of primary classification and 0.3 cases of secondary classification may be used for calculation. Similar weighting may be performed in the calculation of other indexes pertaining to the present invention.

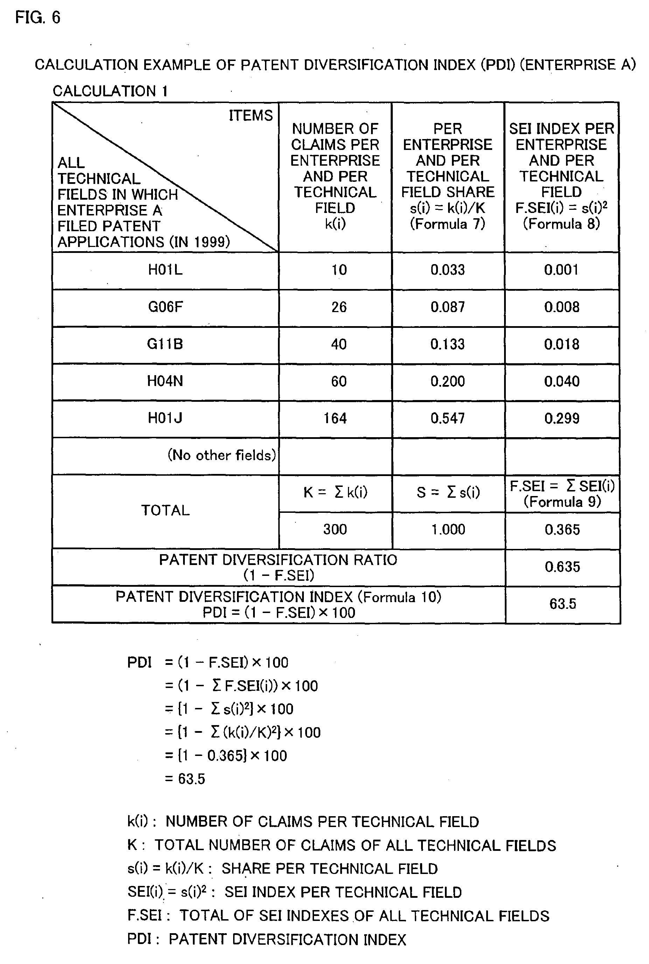

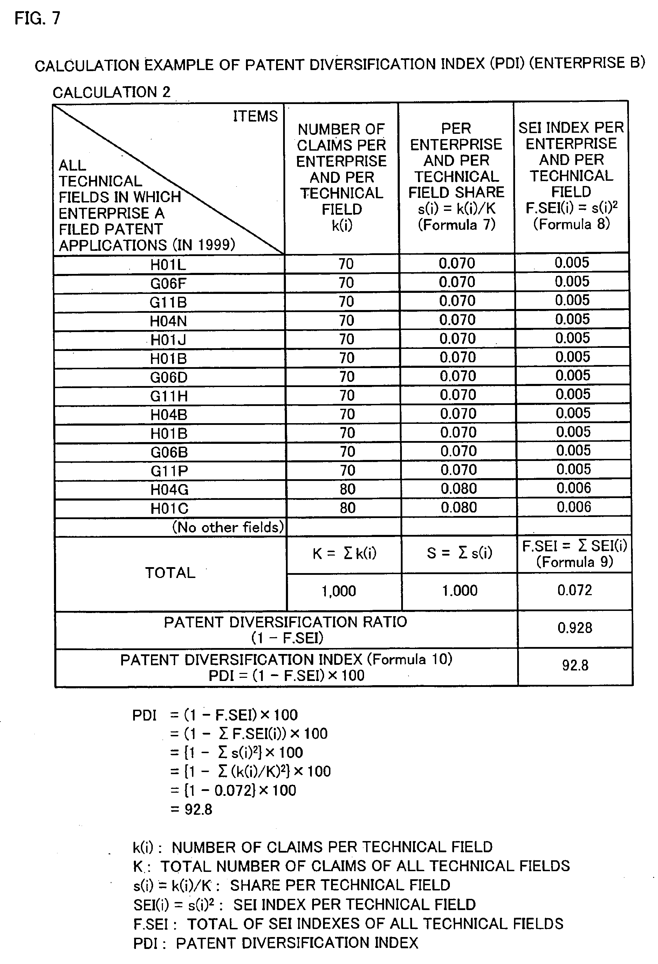

FIG. 6 and FIG. 7 show trial calculation examples of a patent diversification index (PDI).

Calculation 1 shown in FIG. 6 is a calculation example of calculating the patent diversification index (PDI) of Enterprise A in which the number of inventions per technical field is concentrated in the IPC sub-class of "H01J".

In Calculation 1 shown in FIG. 6, since Enterprise A has 164 inventions (number of claims) in the IPC sub-class of "H01J", which is twice or more in comparison to other technical fields, this is an example showing that the technical development field of Enterprise A is somewhat concentrated.

If only the number of claims of Enterprise A is researched, it is difficult to know whether the number of claims is concentrated in a predetermined technical field or diversified in various technical fields. Thus, in the present invention, the number of inventions per enterprise and per technical field and the total thereof are used to calculate the number-of-inventions share per enterprise and per technical field. Moreover, a power index is use to power this number-of-inventions share per enterprise and per technical field, this is subtracted from 1 and then multiplied by 100 in order to calculate and display the patent diversification index (PDI) showing the degree of concentration or diversification of the technical development field of a predetermined enterprise.

Therefore, by merely viewing the patent diversification index (PDI), the user will be able to easily know the degree of concentration or diversification of the technical development field of a predetermined enterprise. And, by comparing this with the patent diversification index of other enterprises calculated with the same calculation method, it will be possible to compare the degree of concentration or diversification of a predetermined technical development field.

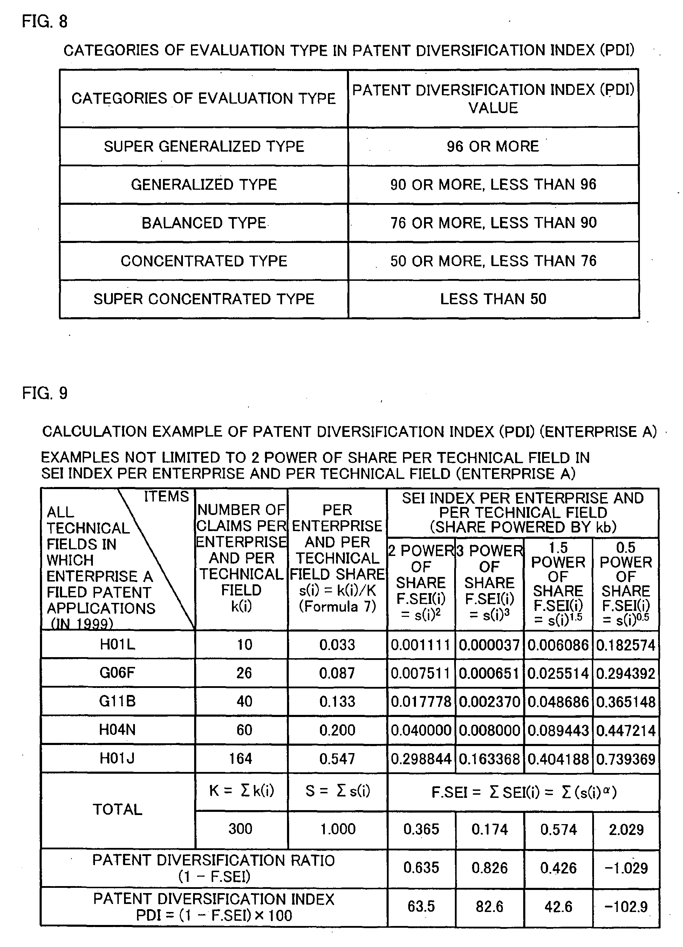

The example shown in FIG. 6 is a calculation example where 2 is used as the power index kb, but as shown in FIG. 9, by setting the power index to kb = 3, 1.5 or 0.5 in a numerical value other than 2, the degree of concentration or diversification of the predetermined technical development field can be changed according to the intended purpose. Further, larger the value of the power index kb, the degree of concentration or diversification can be represented extremely.

Moreover, upon calculating the patent diversification index (PDI), in order to equalize the variations by year, the number of inventions for several years may be averaged. Nevertheless, if the average of too many years are taken, the annual change or characteristics of the enterprise itself or per technical field could become disregarded and disappear, and it is therefore desirable to take the moving average of every 3 years. FIG. 6 shows the result of operation based on the number of inventions for 1 year, and the operation of the moving average is not conducted. And, since a normally employed method may be used for the calculation of such moving average, the explanation thereof is omitted.

Calculation 2 shown in FIG. 7 is a calculation example of calculating the patent diversification index (PDI) of Enterprise B in which the number of inventions per technical field is evenly diversified.

In Calculation 2 shown in FIG. 7, since Enterprise B has 70 or 80 inventions (number of claims) in all IPC sub-classes, this is an example showing that the technical development field of Enterprise B is diversified.

It is difficult to compare the diversified status of the technical development field of Enterprise B and the diversified status of the technical development field of Enterprise A from only the number of claims. Nevertheless, upon calculating, displaying and comparing the patent diversification index (PDI) pertaining to the present invention, the user will be able to easily compare the diversified status of the technical development field.

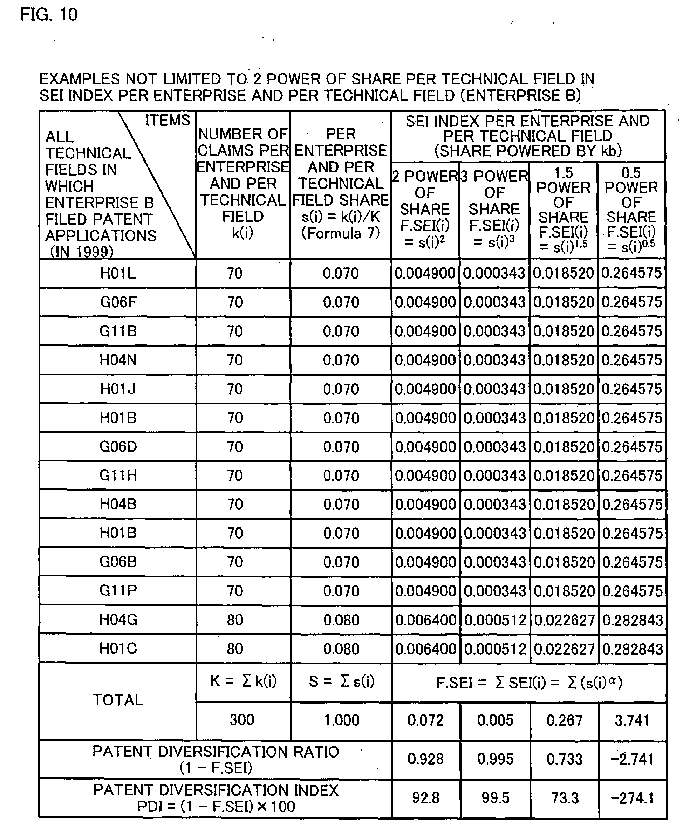

The example shown in FIG. 7 is a calculation example where 2 is used as the power index kb, but as shown in FIG. 10, by setting the power index to kb = 3, 1.5 or 0.5 in a numerical value other than 2, the degree of concentration or diversification of the predetermined technical development field can be changed according to the intended purpose. Further, larger the value of the power index kb, the degree of concentration or diversification can be represented extremely. When examining the calculation results of FIG. 6 and FIG. 7, it is considered that the value of the power index kb is a numerical value that is between 1.5 and 3. In the present embodiment, a case of kb = 2 is mainly described for the convenience of explanation.

FIG. 8 is a diagram showing a classification example of diversification based on the value of the patent diversification index (PDI).

The patent diversification index (PDI), as described above, is used for showing the degree of concentration or diversification of the technical development field of a predetermined enterprise. Therefore, instead of simply displaying a numerical value as the patent diversification index, by converting this into evaluation information according to the numerical value of the patent diversification index and displaying the category thereof, it will be possible to notify the user of the degree of concentration or diversification of the technical development field in an easy-to-understand manner.

In the example shown in FIG. 8, the degree of concentration or diversification of the technical development field is categorized as a "super generalized type" when the patent diversification index (PDI) value is 96 or more, categorized as a "generalized type" when the value is 90 or more and less than 96, categorized as a "balanced type" when the value is 76 or more and less than 90, categorized as a "concentrated type" when the value is 50 or more and less than 76, and categorized as a "super concentrated type" when the value is less than 50.

When using the categories of the patent diversification index shown in FIG. 8, since Enterprise A has a patent diversification index (PDI) of 63.5 when kb = 2, the category is judged to be a "concentrated type". Meanwhile, since Enterprise B has a patent diversification index (PDI) of 92.8 when kb = 2, the category is judged to be a "generalized type".

The categories shown in FIG. 8 are mere examples, and when the perspective of the power index (kb value) or patent diversification index is changed, categories that are different from the categories shown in FIG. 8 may be used. However, when calculating the patent diversification index based on the number of claims and IPC sub-classes, the classifications shown in FIG. 8 are considered to be suitable in consideration of the calculation result of all enterprises.

Next, the calculation of the SEI score per technical field and patent competitive position index representing the degree of technical development competitive position viewed from the number of inventions. For this calculation, the ratio of the number of inventions per enterprise and per technical field (number of claims per enterprise and per technical field) of the respective enterprises among the total number of inventions per technical field (total number of claims per technical field) of each year (each period) is used. Incidentally, the patent competitive position index is referred to as a PCPI (Patent Competitive Position Index) below, and is calculated in the following order together with the SEI score per technical field. Incidentally, the patent competitive position index (PCPI) is one form of index contained in the enterprise competitive position index.

The calculating formula is shown below for calculating the number-of-inventions share per technical field and per enterprise.

```
Number-of-inventions share per technical field and per enterprise

= (number of inventions per enterprise and per technical field) / (total number of inventions per technical field)

…(Formula 11)
```

provided,

Total number of inventions per technical field

= total number of inventions per technical field and per enterprise in all enterprises

= $\Sigma_{n=1}^{N}$ (number of inventions per technical field and per n

enterprise (enterprise))

N: Total number of enterprises having at least one invention in a predetermined technical field
n: Each enterprise

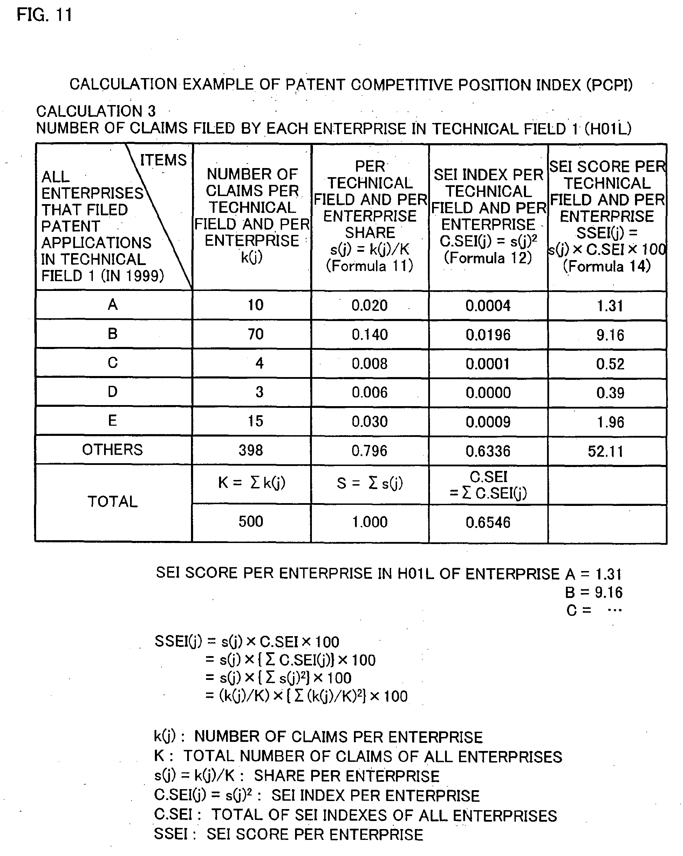

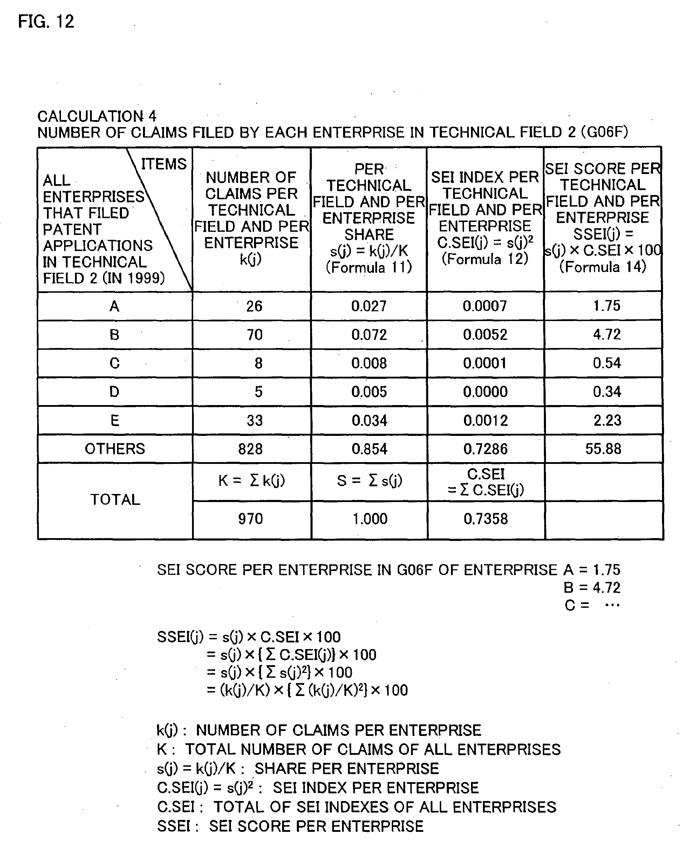

FIG. 11 shows the calculation example of the number-of-inventions share per technical field and per enterprise in the technical field of (H01L) calculated with Formula 11. Further, FIG. 12 shows the calculation example of the number-of-inventions share per technical field and per enterprise in the technical field of (G06F).

The calculating formula is shown below for calculating the SEI index per technical field and per enterprise (emphasized ratio of number-of-inventions share per technical field and per enterprise). Incidentally, this value is defined as the patent competitive position index A (PCPIA) below.

Patent competitive position index A (PCPIA)

= emphasized ratio of number-of-inventions share per technical field and per enterprise (C-SEI)

= SEI index per technical field and per enterprise

= (number-of-inventions share per technical field and per

enterprise)$^{ka}$

= {(number of inventions per enterprise and per technical

field) / $\Sigma_{n=1}^{N}$ (number of inventions per technical field and per

n enterprise (enterprise))}$^{ka}$ ...(Formula 12)

provided,

N: Total number of enterprises having at least one invention in a predetermined technical field
n: Each enterprise
ka: Power index (within a scope where ka > 1)

FIG. 11 shows the calculation example of the SEI index per technical field and per enterprise in the technical field of (H01L) calculated with Formula 12. Further, FIG. 12 shows the calculation example of the SEI index per technical field and per enterprise in the technical field of (G06F).

Since the patent competitive position index A (PCPIA) is powered by ka regarding the number-of-inventions share per technical field and per enterprise, it is possible to largely show the differential of the number-of-inventions share per technical field and per enterprise in the respective enterprises. Therefore, this may be applied to events where it would be preferable to largely represent the differential.

The calculating formula is shown below for calculating the SEI score per technical field. Incidentally, this value is defined as patent competitive position index B (PCPIB) below.

Patent competitive position index B (PCPIB)

= SEI score per technical field (SSEI)

= ratio for emphasizing per-enterprise share

= $\Sigma_{n=1}^{N}$ (patent competitive position index A (enterprise))

= $\Sigma_{n=1}^{N}$ (SEI index per technical field and per enterprise)

= $\Sigma_{n=1}^{N}$ {emphasized ratio of number-of-inventions share per technical field and per n enterprise}

= $\Sigma_{n=1}^{N}$ {(number-of-inventions share per technical field and per

n enterprise)$^{ka}$}

= $\Sigma_{n=1}^{N}$ {((number of inventions per enterprise and per technical

field) / $\Sigma_{n=1}^{N}$ (number of inventions per technical field and per

n enterprise) (enterprise)))$^{ka}$}

= $\Sigma_{n=1}^{N}$ {((number of inventions per enterprise and per technical field) / (total number of inventions per technical field))$^{ka}$}

...(Formula 13)

provided,

N: Total number of enterprises having at least one invention in a predetermined technical field
n: Each enterprise
ka: Power index (within a scope where ka > 1)

A patent competitive position index B (PCPIB) is a numerical value for measuring the degree of oligopoly by a specific enterprise or dispersion regarding an arbitrary technical field (product market or the like), and is sought with the total of a value obtained by powering the number-of-inventions share per technical field and per enterprise of an enterprise participating in a predetermined technical field with ka.

The degree of technical development competitive position viewed from the patent applications can be measured by using the competitive state (SEI score per technical field representing the oligopoly state or competitive state) of the respective IPC sub-classes sought from the SEI index per technical field (enterprise) and using the per technical field and per-enterprise share of the respective enterprises. The respective enterprises are assessing the technology to be personally developed and filed with a watchful eye on the filing trend of other enterprises. In this kind of competitive market, enterprises holding a large share of inventions are able to inhibit the entry of other enterprises. Nevertheless, even if a certain enterprises is ranked 1st in the share of a certain IPC sub-class, in a severe technical development competitive state, the position of such enterprise is not firmly established. Thus, in order to comprehend the technical development competitive state of the IPC sub-classes, the SEI score per technical field of the respective participating enterprises is calculated in order to view the marketability. The SEI score per technical field is sought based on the total by powering the shares of the respective enterprises with ka, and the closer such numerical value is to 1.00, it could be said that such IPC sub-class is in an oligopolistic state.

Generally, since each of claims is described for each invention, a large number of claims filed shows that there are many inventions. And, in order to reduce filing costs and based on the guidance of the Patent Office, many enterprises are now collectively filing related inventions in a single application. Thus, to conduct the quantitative measurement of inventions based on the number of applications would likely cause a misunderstanding. Further, it is desirable to conduct measurement based on the number of claims filed in order to eliminate arbitrary elements such as separately filing inventions of small improvements in order to increase the number of filings.

Incidentally, the scope of patent applications will differ depending on the business category. Thus, upon measuring the positioning of the respective enterprises in the calculation of the patent competitive position index, it is desirable to total the data of the most recent 3 years, and to normalize the variations of the number of claims filed each year. Further, in order to deal with the difference in the scope of the number of claims filed in the business category, it has been discovered that it is more desirable to compare the shares instead of comparing the scope of filings.

Specifically, the number-of-claims share per technical field and per enterprise (number-of-inventions share per technical field and per enterprise) of an enterprise classified by IPC sub-classes is calculated and the value thereof is considered to be the positioning of that enterprise. When viewing the number-of-claims share per technical field and per enterprise (number-of-inventions share per technical field and per enterprise) of the respective enterprises according to the technical classification of the IPC sub-classes, comparison in the same technical classification will be possible without being influenced by the scope of the number of claims filed per enterprise and per technical field in the business category.

In the present invention, although the primary classification of the IPC sub-classes given to the publications of unexamined patent applications is used, the secondary classification may be jointly used to tabulate 0.5 cases of primary classification and 0.5 cases of secondary classification, or, as a different weighting in the primary classification and secondary classification, for instance, 0.7 cases of primary classification and 0.3 cases of secondary classification may be calculated.

The calculating formula is shown below for calculating the emphasized PCPI (SEI score per technical field and per enterprise or PCPIC).

```
Emphasized PCPI (PCPIC)

= oligopoly-emphasized score per technical field = SEI score per technical field and per enterprise

= (per-technical field and per-enterprise share (enterprise))

× (patent competitive position index B (PCPIB))

= (per-technical field and per-enterprise share (enterprise))

× (SEI score per technical field)

= (per-technical field and per-enterprise share (enterprise))

× (ratio for emphasizing per-enterprise share)

= (per-technical field and per-enterprise share (enterprise))

× Σn=1^N {((number of inventions per enterprise and per technical
```

```
field) / (total number of inventions per technical field))^ka}
```

...(Formula 14)

provided,

N: Total number of enterprises having at least one invention in a predetermined technical field
n: Each enterprise
ka: Power index (within a scope where ka > 1)

FIG. 11 shows the calculation example of the SEI score per technical field and per enterprise in the technical field of (H01L) calculated with Formula 14. Further, FIG. 12 shows the calculation example of the SEI score per technical field and per enterprise in the technical field of (G06F).

The emphasized PCPI (SEI score per technical field and per enterprise) index will become a large value when the number-of-inventions share in the IPC sub-classes is great and an oligopolistic state is formed by that enterprise. The larger this value, it is possible to judge that the comprehensive strength of the technical development strength viewed from inventions in the respective IPC sub-classes filed by the enterprise is strong.

Incidentally, upon measuring the positioning of the respective enterprises in the calculation of the emphasized PCPI, it is desirable to total the data of the most recent 3 years, and to normalize the variations of the number of claims of each year. Further, in order to deal with the difference in the scope of the number of claims filed in the business category, it has been discovered that it is more desirable to compare the shares instead of comparing the scope of filings. Specifically, the number-of-claims share of an enterprise classified by IPC sub-classes is calculated and the value thereof is considered to be the positioning of that enterprise. When viewing the number-of-claims share of the respective enterprises according to the technical classification of the IPC sub-classes, comparison in the same technical classification will be possible.

The patent competitive position index D (PCPID) to be used upon calculating the patent competitive position index (PCPI) is defined as follows.

```
Patent competitive position index D (PCPID)

= Σ_{m=1}^{M} (oligopoly-emphasized score per technical field)

= Σ_{m=1}^{M} (SEI score per technical field and per enterprise)

= Σ_{m=1}^{M} (m emphasized PCPI (technical field))   ...(Formula 15)
```

provided,

M: Total number of technical fields having at least one invention in a predetermined enterprise
m: Each technical field
kb: Power index (kb > 0)

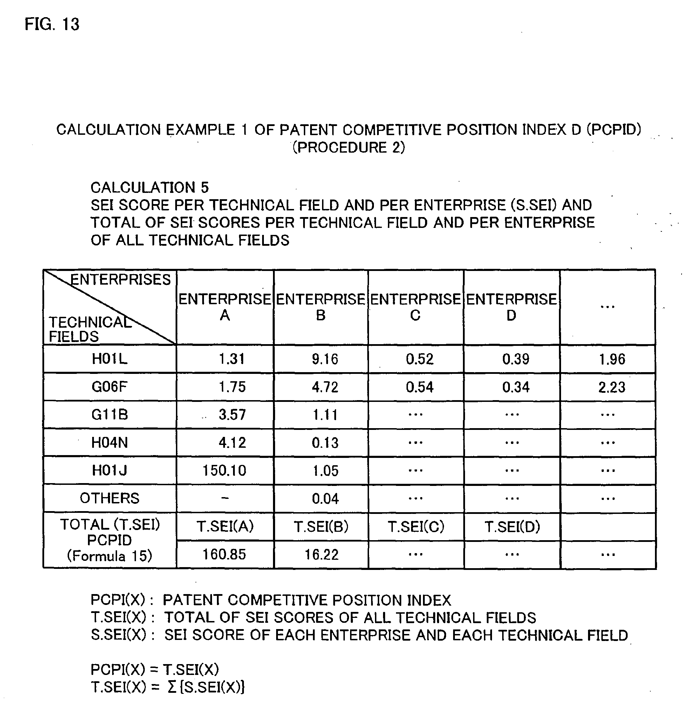

FIG. 13 shows the calculation example of the patent competitive position index D (PCPID) calculated with Formula 15.

The activeness of technical development in the respective enterprises can be seen from the increasing trend in the number of inventions such as the number of claims filed. Relative merits cannot be decided simply by comparing the scope of the number of claims filed. For instance, if the number of claims filed by a certain enterprise is growing beyond the rate of increase of the overall number of claims filed in the overall industry, it is highly likely that this enterprise is achieving growth of technical development strength beyond the overall market.

In the following embodiment, although the average rate of increase of the number of inventions (average rate of increase of claims in a patent application) in the most recent 3 years is being used, the average rate of increase of the current year may be used, or an average rate of increase over several years may be used. Further, in the following embodiment, (1 + excess growth rate) is weighted and used in order to see the growth ability of the respective enterprises. The reason why 1 is added is in order to avoid weighting 0 when the rate of increase of an enterprise = rate of increase of all enterprises.

The excess growth rate to be used upon calculating the patent competitive position index (PCPI) is defined as follows.

Excess growth rate

= (average rate of increase in number of inventions in previous 3 years of a predetermined enterprise) - (average rate of increase in number of inventions in previous 3 years

of all enterprises) ...(Formula 16)

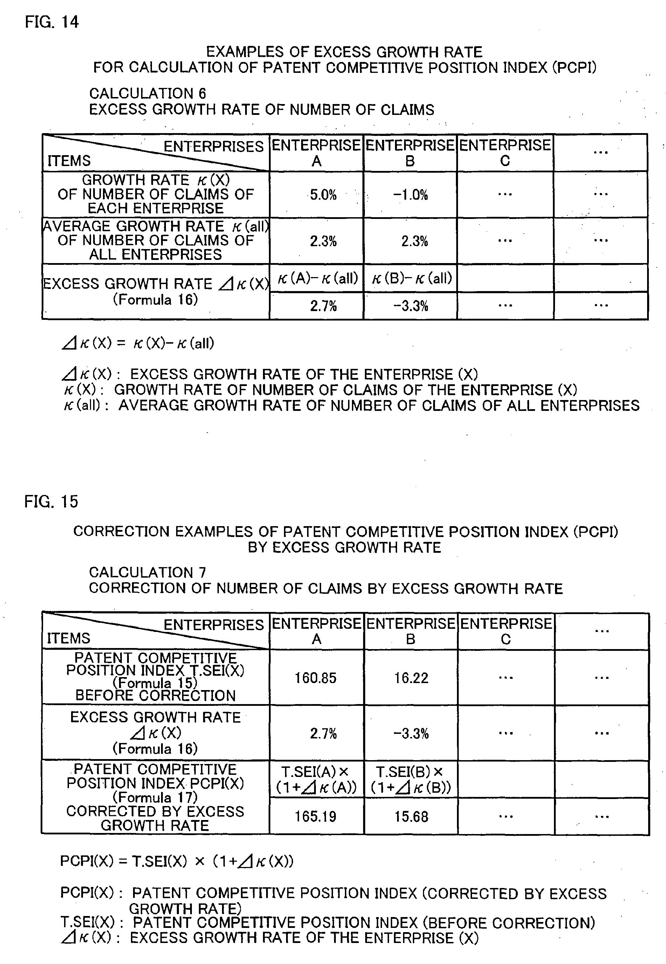

FIG. 14 is a diagram showing a calculation example of the excess growth rate calculated based on Formula 16.
The calculating formula is shown below for calculating the patent competitive position index (PCPI) upon adding the excess growth rate.

Patent competitive position index (PCPI)

= {patent competitive position index D (PCPID) × (1 + excess

growth rate)} × 100 ...(Formula 17A)

$= \{\Sigma_{m=1}^{M}$ (m emphasized PCPI (technical field)) × (1 + excess

growth rate)} × 100

$= \{\Sigma_{m=1}^{M}$ (SEI score per technical field and per enterprise) × (1

+ excess growth rate)} × 100

$= \{\Sigma_{m=1}^{M}$ (oligopoly-emphasized score per technical field) × (1 +

excess growth rate)} × 100

= [$\Sigma_{m=1}^{M}$ {(per-technical field and per-enterprise share (enterprise)) × (patent competitive position index B (PCPIB))} × (1 + excess growth rate)] × 100

= [$\Sigma_{m=1}^{M}$ {(per-technical field and per-enterprise share (enterprise)) × (SEI score per technical field)} × (1 + excess growth rate)] × 100

= [$\Sigma_{m=1}^{M}$ {(per-technical field and per-enterprise share (enterprise)) × ($\Sigma_{n=1}^{N}$ (SEI index per technical field and per enterprise))} × (1 + excess growth rate)] × 100

= [$\Sigma_{m=1}^{M}$ {(per-technical field and per-enterprise share (enterprise)) × $\Sigma_{n=1}^{N}$ (emphasized ratio of number-of-inventions share per technical field and per n enterprise)} × (1 + excess growth rate)] × 100

= [$\Sigma_{m=1}^{M}$ {(per-technical field and per-enterprise share (enterprise)) × $\Sigma_{n=1}^{N}$ (number-of-inventions share per technical field and per n enterprise)$^{ka}$} × (1 + excess growth rate)] × 100

= [$\Sigma_{m=1}^{M}$ {(per-technical field and per-enterprise share (enterprise)) × $\Sigma_{n=1}^{N}$ (((number of inventions per enterprise and per technical field) / $\Sigma_{n=1}^{N}$ (number of inventions per technical field and per n enterprise (enterprise)))$^{ka}$)} × (1 + excess growth rate)] × 100

= [$\Sigma_{m=1}^{M}$ {(per-technical field and per-enterprise share (enterprise)) × $\Sigma_{n=1}^{N}$ (((number of inventions per enterprise and per technical field) / (total number of inventions per

```
technical field ))^{ka})} × (1 + excess growth rate)] × 100
```

...(Formula 17)

provided,

M: Total number of technical fields having at least one invention in a predetermined enterprise
n: Each enterprise
kb: Power index (kb > 0)
N: Total number of enterprises having at least one invention in a predetermined technical field
n: Each enterprise
ka: Power index (within a scope where ka > 1)

The patent competitive position index (PCPI) is one form of an index contained in the enterprise competitive position index. The patent competitive position index (PCPI) is an index that measured the degree of technical development competitive position viewed from inventions such as patent applications by using the competitive state (oligopolistic state or competitive state) of the respective IPC sub-classes sought from the SEI index per technical field and per enterprise, per-technical field and per-enterprise share of the respective enterprises, and excess growth rate (rate of increase in the number of claims of the respective enterprises).

Further, upon calculating the patent competitive position index, it is possible to judge the competitive position by adding the degree of growth or diminution of enterprises as a result of weighting the excess growth rate. As described above, by weighting the excess growth rate, the higher the rate of increase of the number of claims filed, it is possible to largely calculate the value of the patent competitive position index. Therefore, the larger the value of the patent competitive position index is calculated, the comprehensive strength of the technical development strength viewed from the inventions filed by the relevant enterprise will be strong.

FIG. 11 and FIG. 12 show examples of calculating the number-of-inventions share per technical field and per enterprise, SEI index per technical field and per enterprise (patent competitive position index A), patent competitive position index B (PCPIB) and SEI score per technical field and per enterprise (emphasized PCPI or oligopoly-emphasized score per technical field) regarding the respective enterprises in a predetermined technical field.

With the calculation example shown in FIG. 11, Enterprises B has a relatively large number of claims filed at 70 claims in the technical field of "H01L" in comparison to other enterprises. Therefore, the number-of-inventions share per technical field and per enterprise of Enterprise B is largely calculated at 0.140 in comparison to other enterprises, and the number-of-inventions share per technical field and per enterprise (patent competitive position index A (PCPIA) is calculated more largely at 0.0196 in comparison to other enterprises.

Meanwhile, with the calculation example shown in FIG. 12, although the number of inventions per enterprise and per technical field of Enterprises B in the technical field of "G06F" is 70 and the same as the number of inventions of Enterprise B shown in FIG. 11, since the number of inventions per enterprise and per technical field of Enterprise A and Enterprise E is relatively large at 26 claims and 33 claims, respectively, this calculation example shows that there is not much difference in the number of claims filed by the respective enterprises. With the calculation example of FIG. 12, in comparison to the calculation example of FIG. 11, there is not much difference in the respective value of the number-of-inventions share per technical field and per enterprise, SEI index per technical field and per enterprise (patent competitive position index A), and emphasized PCPI of the respective enterprises.

FIG. 13 is a diagram where the values of the SEI score per technical field and per enterprise (emphasized PCPI or oligopoly-emphasized score per technical field) of each enterprise calculated based on the respective technical fields are collectively indicated in a chart.

The patent competitive position index D (PCPID) value when no weighting is performed with the excess growth rate of Enterprise A is calculated as 160.85 based on Formula 15, and the patent competitive position index D (PCPID) value of Enterprise B is calculated as 16.22.

FIG. 14 is a chart showing the rate of increase in the number of claims filed by the respective enterprises (one form of average rate of increase in the number of inventions of the most recent 3 years), average value of the rate of increase in the number of claims of all enterprises (average rate of increase in the number of inventions of all enterprises in the most recent 3 years, and the excess growth rate calculated based on Formula 16.

As shown in FIG. 14, the average rate of increase in the number of claims filed by Enterprise A in the most recent 3 years is 5.0%, and the average rate of increase in the number of claims filed by all enterprises in the most recent 3 years is 2.3%. Thus, the excess growth rate of Enterprise A is calculated as excess growth rate = 5.0% - 2.3% = 2.7% = 0.027. Meanwhile, since the average rate of increase in the number of claims filed by Enterprise B in the most recent 3 years is 1.0%, the excess growth rate of Enterprise B is calculated as excess growth rate = -1.0% - 2.3% = -3.3% = 0.033.

FIG. 15 is a chart showing the patent competitive position index D (PCPID), and the patent competitive position index (PCPI) calculated based on the excess growth rate.

Since the patent competitive position index D (PCPID) of Enterprise A is 160.85 and the excess growth rate is 2.7%, according to Formula 17A, calculation is made where patent competitive position index (PCPI) = (160.85) $\times$ (1 + 0.027) = 165.19.

Similarly, since the patent competitive position index D (PCPID) of Enterprise B is 16.22 and the excess growth rate is -3.3%, according to Formula 17A, calculation is made where patent competitive position index (PCPI) = (16.22) $\times$ (1-0.033) = 15.68.

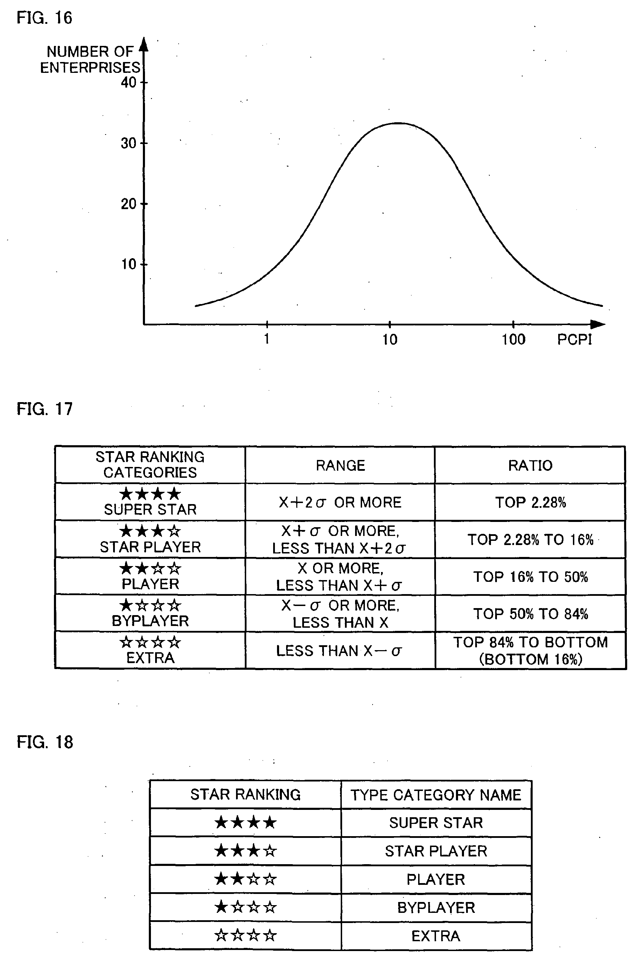

FIG. 16 shows the distribution of the calculation result when representing the patent competitive position index (PCPI) value on the horizontal axis with a logarithm, and representing the number of enterprises on the vertical axis.

Generally, the distribution of the patent competitive position index (PCPI) will be of a distribution status that is similar to normal distribution. Thus, in the present invention, the positioning of the respective enterprises in the distribution among all enterprises is ranked according to the patent competitive position index (PCPI) value sought above.

Incidentally, although FIG. 16 showed an example of representing the patent competitive position index (PCPI) on the horizontal axis with a logarithm, the present invention is not limited to such display of logarithm, and an ordinary distribution may be employed. Further, as with the patent competitive position index (PCPI), the patent competitive position score, standardized patent competitive position score, enterprise competitive position index, standardized enterprise competitive position index and standardized patent competitive position index (avgPCPI) may also be represented on the horizontal axis with a logarithm, and all enterprises may be represented on the vertical axis.

FIG. 17 is a diagram showing the category example of the ranking according to the patent competitive position index (PCPI). In the example shown in FIG. 17, the competitive position of a predetermined enterprise relating to inventions is categorized in 5 rankings according to the nature of the normal distribution of the competitive position in accordance with the average value X and standard deviation a of the patent competitive position index (PCPI).

Incidentally, although FIG. 17 showed an example of ranking the patent competitive position index (PCPI), as with the patent competitive position index (PCPI), the patent competitive position score, standardized patent competitive position score, enterprise competitive position index, standardized enterprise competitive position index and standardized patent competitive position index (avgPCPI) can also be ranked.

FIG. 18 is a chart showing relation of the star ranking representing the competitive position category of the predetermined enterprise relating to inventions with the number of stars, and the type category name representing the competitive position relating to inventions as the type of enterprise.

By representing the positioning of the patent competitive position index (PCPI) of a predetermined enterprise with the number of stars or type of enterprise, the competitive position relating to inventions can be represented in an easy-to-view manner. Further, the competitive position relating to inventions among a plurality of enterprises can be notified, in an easy-to-understand manner, to a user who is not too familiar with the number of patent applications or number of claims of a patent application, or the classification of IPC sub-classes.

In the foregoing explanation, although enterprises having an average value or greater were categorized into 3 ranks in order to highlight enterprises in which the patent competitive position index (PCPI) exceeded average value X, this may be categorized in further detail. Moreover, enterprises having an average value or less can be categorized in further detail in order to highlight the enterprises that fell below average value X.

Further, the scope of categorization is not limited to $(X + \sigma)$ using the standard deviation, and may be categorized based on the distribution upon utilizing the accumulation of experience of the categorizing person.

Incidentally, although FIG. 18 showed an example where star ranking categorization and type categorization are performed regarding the patent competitive position index (PCPI), as with the patent competitive position index (PCPI), the patent competitive position score, standardized patent competitive position score, enterprise competitive position index, standardized enterprise competitive position index and standardized patent competitive position index (avgPCPI) can also be subject to the star ranking categorization and type categorization.

When the patent competitive position index (PCPI) of Enterprise A is ranked between the top 2.28% and 16% among all enterprises, this is determined to be "3 Stars, Star Player", and the user is notified that the patent competitive position of Enterprise A is superior.

Similarly, when the patent competitive position index (PCPI) of Enterprise B is ranked between the top 16% and 50%, this is determined to be "2 Stars, Player", and the patent competitive position is judged to be slightly inferior. Incidentally, when using only the patent competitive position index D (PCPID) of Enterprise A and Enterprise B without weighting the excess growth rate and calculating the type category, the result was the same as the type category classified in this example. This is because the rate of increase was not that different from the average rate of increase of all enterprises. In cases where the number of inventions of an enterprise grew or declined significantly, the weighting of the excess growth rate will be reflected largely in the calculation result.

Next, the standardized patent competitive position index (avgPCPI), which is an index showing the degree of competitive position per IPC sub-class (per technical field), is explained. This standardized patent competitive position index (avgPCPI) is calculated by dividing the patent competitive position index (PCPI) by the number of sub-classes (number of technical fields) in which the respective enterprises have filed applications. Incidentally, the standardized patent competitive position index (avgPCPI) is one form of index contained in the standardized enterprise competitive position index. The standardized patent competitive position index is referred to as the avgPCPI (average Patent Competitive Position Index) below.

When trying to compare and judge the patent competitive position of enterprises based on only the patent competitive position index (PCPI), there are cases when fair evaluation cannot be conducted among major enterprises having a broad technical development field and enterprises having a competitive position focusing on a certain field.

The patent competitive position index (PCPI) is the total of the competitive position in a technical field (e.g., IPC sub-class) in which the respective enterprises have filed applications. Thus, with a long-established major enterprise having a broad technical development field, the broader the field (larger the number of IPC sub-class classifications), the numerical value of the patent competitive position index (PCPI) will increase. Therefore, this tends to work favorably for major enterprises with a long history.

Meanwhile, this could work disadvantageously for enterprises having a technical competitive position focused on a certain technical field. In order to correct such unfairness, the calculated patent competitive position index (PCPI) is divided by the number of technical fields (e.g., number of IPC sub-class classifications) in which the respective enterprises have filed applications for standardization, and the standardized patent competitive position index (avgPCPI) thereby enables the judgment of the competitive position per technical field (per IPC sub-class).

Even when calculating the standardized patent competitive position index (avgPCPI), in addition to using the primary classification of IPC sub-classes given to publications of unexamined patent applications, the secondary classification of the IPC sub-classes may be jointly used with the primary classification. In such a case, 0.5 cases of primary classification and 0.5 cases of secondary classification may be tabulated equally, or, as a different weighting in the primary classification and secondary classification of IPC, for instance, 0.7 cases of primary classification and 0.3 cases of secondary classification may be used to calculate the number of IPC sub-classes.

The calculating formula is shown below for calculating the standardized patent competitive position index (avgPCPI).

Standardized patent competitive position index (avgPCPI)

= (patent competitive position index (PCPI)) / (number of

technical fields) ...(Formula 18)

Example:

Number of technical fields

= Number of IPC sub-classes in a 3-year average

In the foregoing example, although assumed is a case of capturing the number of average IPC sub-classes in the most recent 3 years as the average of the filing trend of the enterprise, the standardized patent competitive position index (avgPCPI) may be calculated with the IPC sub-classes for that year only or an average of several years.

For instance, in the case of Enterprise A shown in FIG. 15, if the 5 IPC sub-classes are of an average of the most recent 3 years, the standardized patent competitive position index (avgPCPI) is calculated as follows.

Standardized patent competitive position index (avgPCPI) of Enterprise A = 165.19/5 = 33.04 ...(Formula 19)

Similarly, in the case of Enterprise B shown in FIG. 15, if the 14 IPC sub-classes are of an average of the most recent 3 years, the standardized patent competitive position index (avgPCPI) is calculated as follows.

```
Standardized patent competitive position index (avgPCPI) of Enterprise B = 15.68/14 = 1.12 …(Formula 20)
```

When calculating the standardized patent competitive position index (avgPCPI) of the respective enterprises as described above, and categorizing, display and comparing the 5 types of star ranking according to the same rules as the patent competitive position index (PCPI), the following assessment may be made according to the displayed results.

When an enterprise ranked as "Player" in the category of patent competitive position index (PCPI) is elevated to "Star Player" in the category of standardized patent competitive position index (avgPCPI), it is possible to consider that this enterprise has relatively strong technology.

Contrarily, when an enterprise ranked as "Star Player" in the patent competitive position index (PCPI) is reduced to "Star" in the category of standardized patent competitive position index (avgPCPI), it is possible to consider that this enterprise does not have very strong technology.

Generally, similar to a case of ranking the respective categories regarding the patent competitive position index (PCPI), when raking the respective categories regarding the standardized patent competitive position index (avgPCPI), since the distribution of the standardized patent competitive position index (avgPCPI) represented with a logarithm will be a distribution close to a normal distribution, a logarithm axis was adopted here. Nevertheless, the present invention is not limited to a logarithm, and the distribution may be calculated with the standardized patent competitive position index (avgPCPI) axis as a normal linear axis.

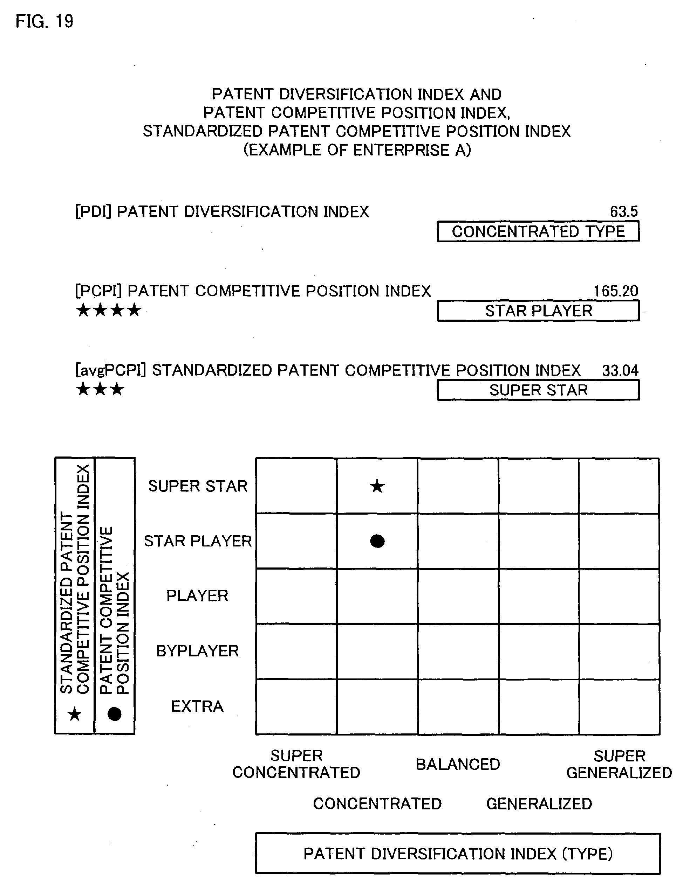

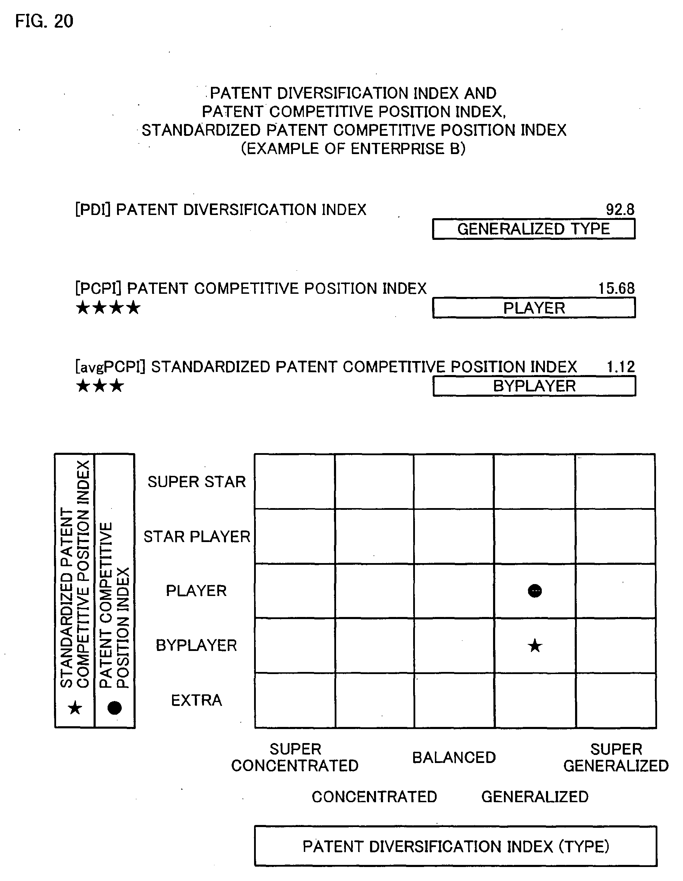

FIG. 19 and FIG. 20 are display examples collectively displaying the patent diversification index (PDI), patent competitive position index (PCPI) and standardized patent competitive position index (avgPCPI) of Enterprise A and Enterprise B.

In the examples shown in FIG. 19 and FIG. 20, the patent diversification index (PDI) category is disposed on the horizontal axis of the chart, and the patent competitive position index (PCPI) category or standardized patent competitive position index (avgPCPI) category is disposed on the vertical axis.

In the example of Enterprise A shown in FIG. 19, it is possible to judge, at a glance, that the patent diversification index (PDI) category on the horizontal axis, is classified as a "concentrated type", and the patent competitive position index (PCPI) category on the vertical axis is classified as "Star Player" (position marked with the black circle in FIG. 19). Further, it is possible to comprehend, at a glance, that the standardized patent competitive position index (avgPCPI) has been elevated to "Super Star" (position marked with a star in FIG. 19).

In the example of Enterprise B shown in FIG. 20, the patent diversification index (PDI) category on the horizontal axis is classified as a "generalized type", and the patent competitive position index (PCPI) category on the vertical axis is classified as a "Player" (position marked with the black circle in FIG. 20). Further, the standardized patent competitive position index (avgPCPI) is reduced to "Byplayer" (position marked with a star in FIG. 20).

As shown in FIG. 19 and FIG. 20, it is preferable to display, concurrently with the patent diversification index (PDI), the ranking and category in a chart format by representing the one axis as the patent competitive position index (PCPI) and the other axis as the standardized patent competitive position index (avgPCPI). Thereby, compared to cases of simply judging the positioning of enterprises with numbers or text, it is possible to comprehend, at a glance, the diversification of the enterprises and the ranking of the patent competitive position or the ranking of the standardized patent competitive position, and this will be useful as a reference material for judging the enterprise value.

For instance, as a result of calculating and categorizing the standardized patent competitive position index (avgPCPI) of all enterprises, let it be assumed that the patent competitive position index (PCPI) of Enterprise A was "Star Player" in a category ranked between the top 2.28% to 16%. And let it be assumed that, as a result of calculating the standardized patent competitive position index (avgPCPI), this was elevated to "Super Star" since it fell under the top 2.28%. In such a case, it is possible to consider that Enterprise A has a relatively strong patent competitive position, and superior characteristic technology.

Contrarily, for instance, let it be assumed that the patent competitive position index (PCPI) of Enterprise B is a "Player" in a category ranked between the top 16% and 50%. And, as a result of calculating the standardized patent competitive position index (avgPCPI) value, let it be assumed that this was reduced to "Byplayer" since it fell under the top 50% to 84%. In such a case, it is possible to consider that Enterprise B does not have strong core technology.

Further, as shown in FIG. 19 and FIG. 20, by making one axis the patent competitive position index (PCPI) and making the other axis the standardized patent competitive position index (avgPCPI) and mutually associating, combining and displaying the corresponding categories of the enterprise, the situation or positioning of the enterprise based on inventions can be clearly presented.

Moreover, in the event an enterprise that was a "Star Player" in the category based on a numerical value of the patent competitive position index (PCPI) is reduced to "Player" in the category based on a numerical value of the standardized patent competitive position index (avgPCPI), although the broadness of the application fields of the enterprise is increasing the technical competitive position, it is also possible to judge that the competitive position in the individual application fields is not that high. Contrarily, when the category based on a numerical value of the standardized patent competitive position index (avgPCPI) is elevated from "Player" to "Star Player", although the relative technical competitive position is not that high since the application fields of that enterprise is not that broad, it is possible to judge that the competitive position in the individual technical fields is high. Therefore, by mutually associating, combining and display the category based on the patent competitive position index (PCPI) and the category based on the standardized patent competitive position index (avgPCPI), enterprises having a generalized patent competitive position and concentrated technical development strength will become evident, and the status relating to the technical development of the respective enterprises can be represent from many angles.

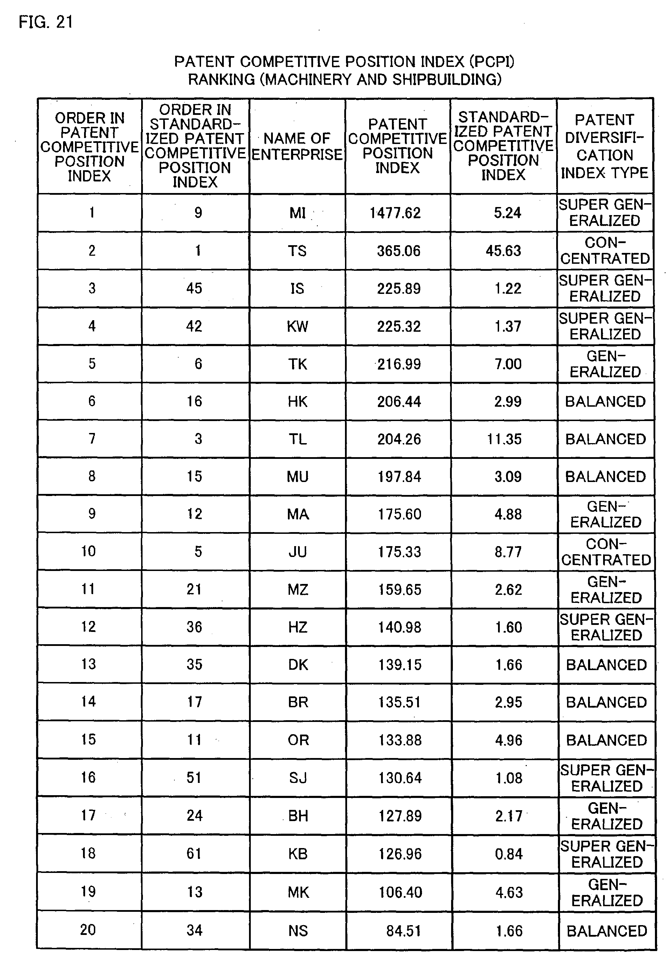

FIG. 21 is a chart showing the patent competitive position index (PCPI) and ranking, standardized patent competitive position index (avgPCPI) and ranking, and type of category based on the diversification index (PDI) of each enterprise in a predetermined technical field represented in descending order from the highest numerical value of the patent competitive position index (PCPI).

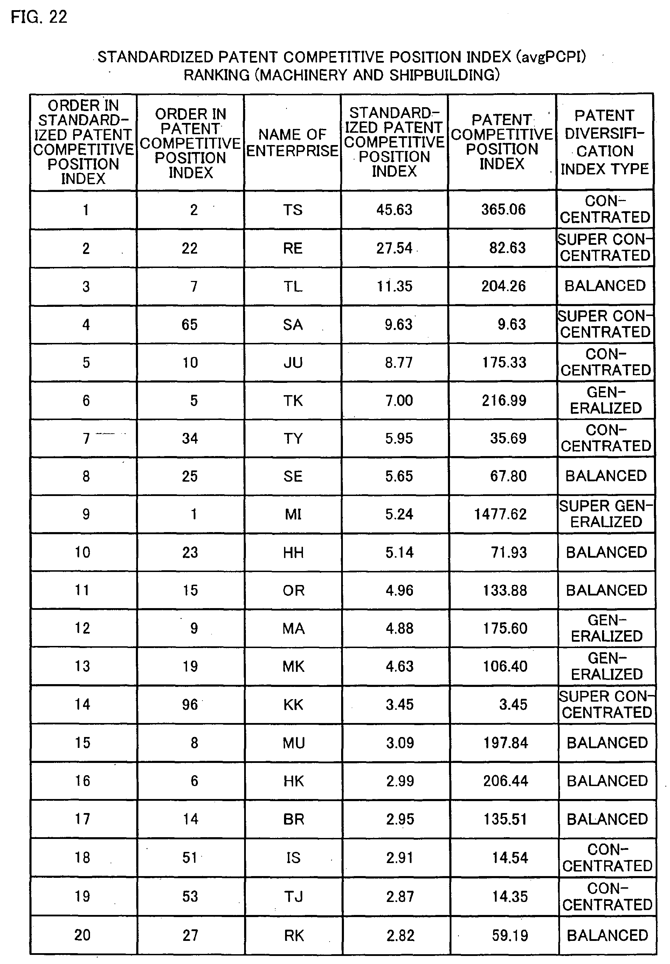

FIG. 22 is a chart showing the same contents as FIG. 21 in descending order from the highest numerical value of the standardized patent competitive position index (avgPCPI).

By combining FIG. 21 and FIG. 22 and viewing the combination of the patent competitive position index (PCPI) and standardized patent competitive position index (avgPCPI), it is possible to judge whether the enterprise has a strong patent competitive position, whether the enterprise has superior characteristic technology, and whether the enterprise has strong core technology, upon associating these with the scope of diversification.

In FIG. 21, the enterprises are listed in the order of the numerical value of the patent competitive position index (PCPI), and in FIG. 22, the enterprises are listed in the order of the standardized patent competitive position index (avgPCPI). When viewing these diagrams, for instance, there are cases where enterprises such as Enterprise IS and Enterprise KW ranked high in the numerical value of the patent competitive position index (PCPI) are ranked low in the numerical value of the standardized patent competitive position index (avgPCPI). Further, as with Enterprise RE and Enterprise SA, there are cases where enterprises ranked low in the numerical value of the patent competitive position index (PCPI) are ranked high in the numerical value of the standardized patent competitive position index (avgPCPI).

As described above, by concurrently displaying the ranking of the patent competitive position index (PCPI) and standardized patent competitive position index (avgPCPI), it is possible to examine and judge the various positioning relating to the technical development of the respective enterprises while comparing whether the enterprise has general technical strength in relatively various technical fields or whether the enterprises has characteristic technology in a specific technical field.

For example, as shown in FIG. 21, Enterprise IS and Enterprise KW ranked 3rd and 4th in the patent competitive position index (PCPI) value are ranked lower at 45th and 42nd in the standardized patent competitive position index (avgPCPI) value. It is possible to judge that these two enterprises have general technical strength in relatively various technical fields, but do not have characteristic technology in a specific technical field.

Meanwhile, Enterprise MI shows a high numerical value in the patent competitive position index (PCPI) that is far removed from the other enterprises. This could be considered that inventions such as patents are the most diversified. The degree of such diversification is working advantageously toward the patent competitive position index (PCPI) value being calculated largely. And, the patent competitive position index (PCPI) value being large is accurately reflecting that Enterprise MI has strong technical competitive position. This is because even if inventions such as patents are diversified, it is not possible to restrain the research and development or patent applications of other enterprises without securing the share in the technical fields such as the respective IPC sub-classes, and only a small amount would be added upon calculating the patent competitive position index (PCPI).

Further, Enterprise MI being able to file patent applications in the technical fields of numerous IPC sub-classes means that the enterprise has that much accumulation of technology and knowledge. Further, Enterprise MI is also ranked 9th in the numerical value of the standardized patent competitive position index (avgPCPI), and most likely also has characteristic technology.

Therefore, it can be considered that Enterprise MI is an enterprise with a long tradition, the numerous years of business operation created the accumulation of technology, and has a dominant technical patent competitive position.

Further, Enterprise TS is classified as a "concentrated type" in the category based on patent diversification index (PDI), ranked 2nd in the patent competitive position index (PCPI) ranking, and ranked 1st in the standardized patent competitive position index (avgPCPI) ranking. This means that Enterprise TS has strong technical competitive position, and also has characteristic technology.

As described above, by calculating the diversification index (PDI), patent competitive position index (PCPI)

and standardized patent competitive position index (avgPCPI) and displaying a list thereof, it is possible to appropriately judge the technical strength and competitive position of the enterprise more quickly. Further, comparison with other enterprises having a different size of enterprise can be made easily.

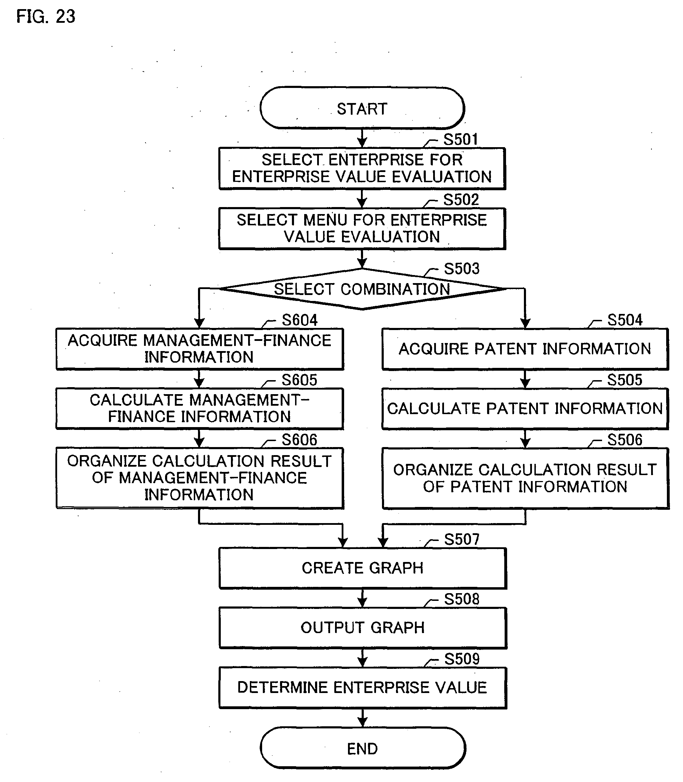

FIG. 23 is a flowchart upon operating and outputting the index relating to the technical development strength such as the diversification index (PDI), patent competitive position index (PCPI), and standardized patent competitive position index (avgPCPI) when determining the enterprise value.

At S501 "select enterprise for enterprise value evaluation", the information processing means 380 receives the input of a display command of a screen for selecting an enterprise from a user via the input means 370 such as a keyboard and the bus 399, reads the display data upon selecting the enterprise from the recording means 384 based on such command, converts this into a display image signal, and outputs such signal to the display interface 373. The display interface 373 that acquired the display data from the information processing means 380 converts and outputs the display data corresponding to the display means 372. The display means 372 displays a screen based on the display data input from the display interface 373 and notifies the user.

The user, while viewing the company selection screen displayed on the display means 372, inputs the information for specifying one or more enterprises to be researched via the input means 370. Here, the information to be input may be the enterprise name, enterprise code, or an enterprise may be selected from the enterprise selection screen. Information for specifying the enterprise input by the user via the input means 370 is read by the information processing means 380 via the bus 399.

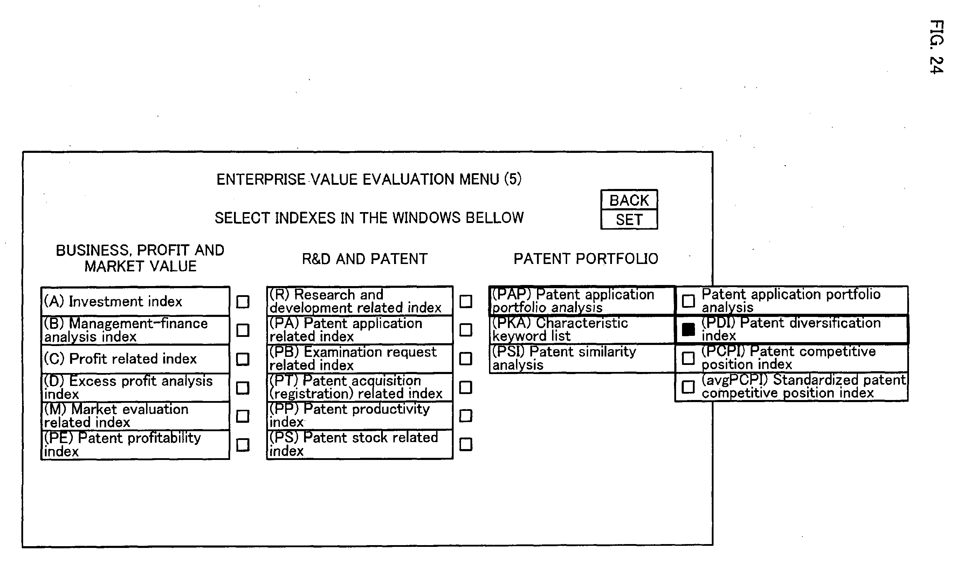

When appropriate enterprise specifying information is input to the information processing means 380, the information processing means 380 reads the display data of the display menu for selecting the type of index to evaluate the enterprise value from the recording means 384, converts this into a display image signal, outputs such signal to the display interface 373, and, for example, displays the enterprise value evaluation menu shown in FIG. 24 on the display means 372.

Next, at S502 "select menu for enterprise value evaluation", the user, while viewing the enterprise value evaluation menu displayed on the display means 372, selects the desired index for evaluating the enterprise value and inputs such index.

When selecting an index from the enterprise value evaluation menu shown in FIG. 24 upon judging the enterprise value, the user selects a desired index from the selection menu of "business, profit, market value" or "R&D, patent", or "patent portfolio". In the example shown in FIG. 24, the user is selecting the item of "(PAP) patent application portfolio analysis" belonging to the field of "patent portfolio", and selecting, from a pulldown menu, the "(PDI) patent diversification index" which is one index showing the degree of concentration or diversification of the technical development field of a specified index as the type of index to be calculated. Incidentally, in the example shown in FIG. 24, the mark of the selected item is changed from a white square to a black square.

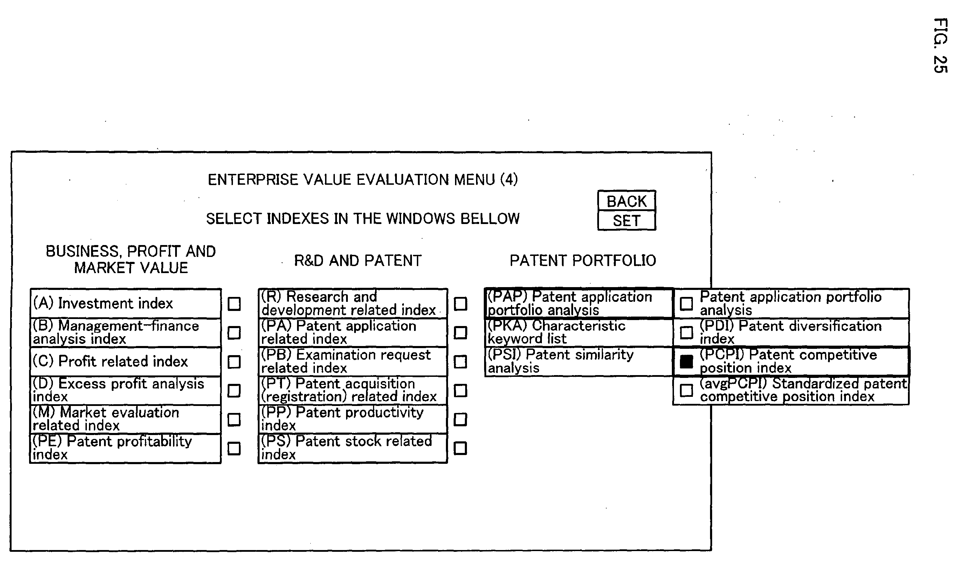

Further, when the user wishes to calculate the "(PCPI) patent competitive position index" falling under the field of "patent portfolio", as shown in FIG. 25, the user will select "(PCPI) patent competitive position index" from the pulldown menu.

When the user inputs information for selecting the patent portfolio index, such input information is conveyed to the information processing means 380. The information processing means 380 sets a flag for deciding the operation formula for calculating the index, displays a selection mark at the portion of the index selected by the user, and notifies the user of the set information.

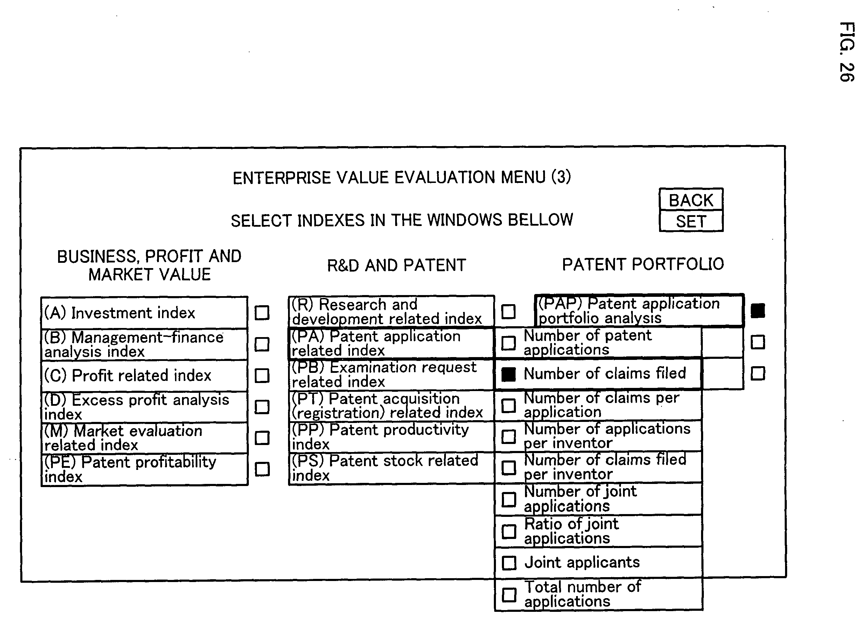

When the user wishes to calculate the index based on the number of claims of a patent application, the user selects "(PA) patent application index" from the selection menu of "R&D patent". Then, the information processing means 380 outputs a command for displaying on the display 372 the pulldown menu indicating the items relating to the "(PA) patent application index" shown in FIG. 26. The user selects a desired parameter of the number of inventions from the pulldown menu displayed on the display means 372. In the example shown in FIG. 26, a case is shown where the "number of claims filed", which is an item required for the target of calculation, is selected.

When the user inputs information for selecting a parameter related to "R&D patent", this input information is conveyed to the information processing means 380. The information processing means 380 sets a flag for deciding the parameter of the index to be calculated, displays a selection mark at the portion of the index selected by the user, and notifies the user of the set information.

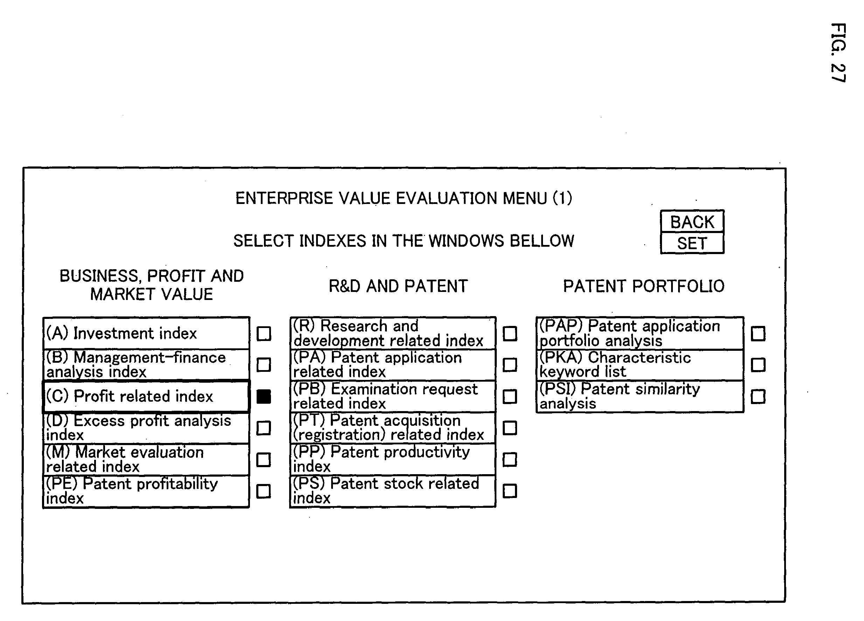

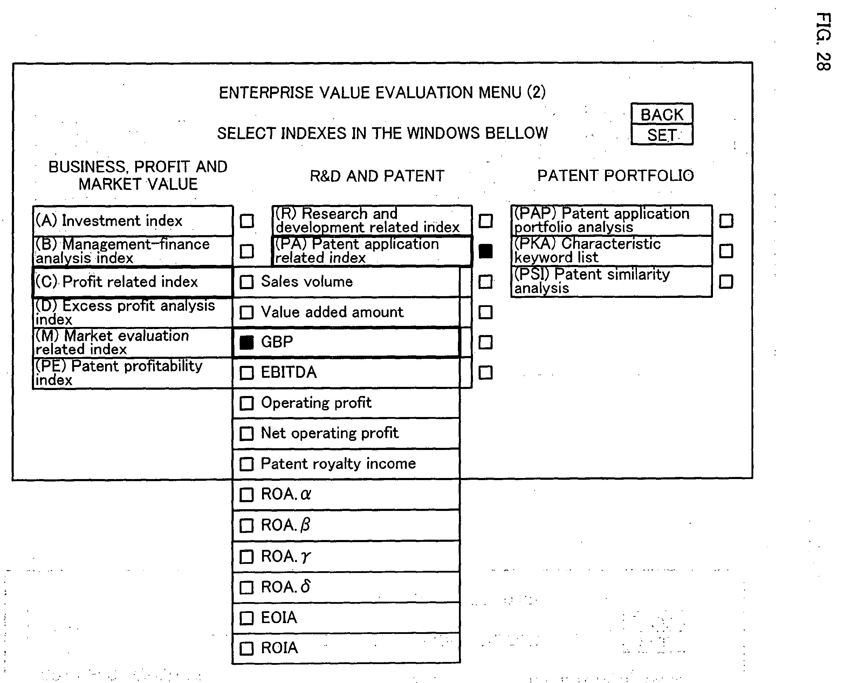

When the user wishes to conduct a research upon mutually associating the indexes of inventions and the business, profit or market value information of a predetermined enterprise, the user selects "(C) profit related index" from the selection menu of "business, profit, market value". Then, the information processing means 380 outputs a command for displaying on the display means 372 the pulldown menu indicating the items relating to the "(C) profit related index" shown in FIG. 27. The user selects a desired profit index from the pulldown menu displayed on the display means 372. In the example shown in FIG. 28, a case where the "GBP" (gross operating profit) is selected is shown.

When the user inputs information for selecting an item related to "(C) profit related index", such input information is conveyed to the information processing means 380. The information processing means 380 sets a flag for deciding the operation formula for calculating the index, displays a selection mark at the portion of the index selected by the user, and notifies the user of the set information.

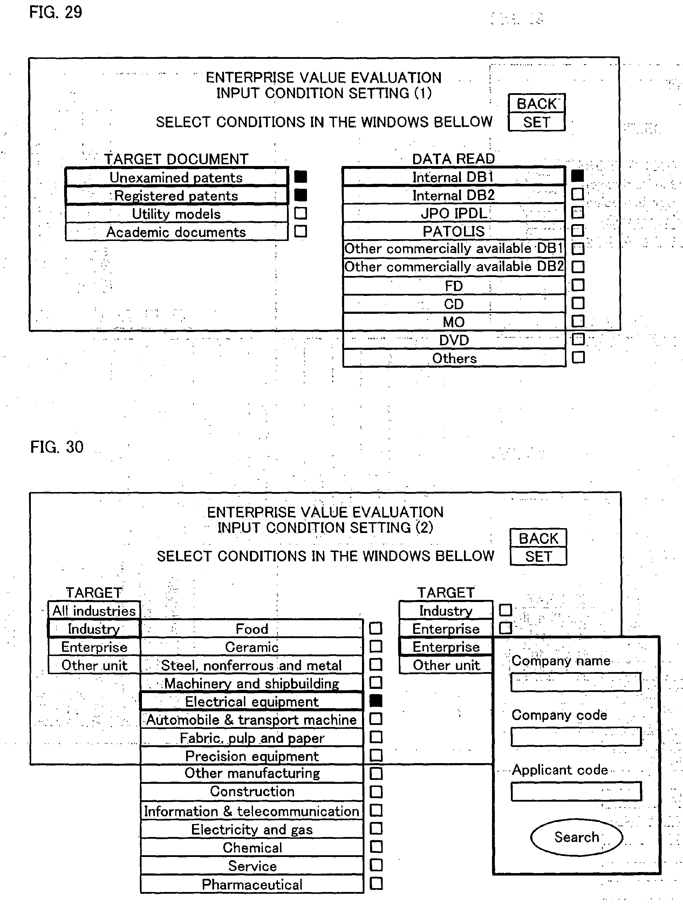

When the user selects the "set" button and the selection processing of the type of index for evaluating the enterprise value is ended, the information processing means 380 reads the display data of the display screen for setting the input conditions upon evaluating the enterprise value from the recording means 384, converts this into a display image signal, and outputs such signal to the display interface 373, and, for example, displays on the display means 372 the enterprise value evaluation input condition setting screen shown in FIG. 29.

The user, while viewing the enterprise value evaluation input condition setting screen displayed on the display means 372, selects and inputs the desired conditions for evaluating the enterprise value.

The user, based on the display of the enterprise value evaluation input condition setting screen shown in FIG. 29, selects the conditions of "target document" and "reading of data" upon calculating the index for judging the enterprise value. In the example shown in FIG. 29, the user is selecting "unexamined patent applications" and "registered patents" as the conditions of the "target document". Moreover, in the example show in FIG. 29, the user is selecting "Internal DB1" as the condition of "reading of data".

When the user inputs the various conditions of "target document" and "reading of data", such input information is conveyed to the information processing means 380. The information processing means 380 sets a flag of the items input by the user regarding the conditions of the "target document" and "reading of data", displays a selection mark at the portion of the index selected by the user, and notifies the user of the set information.

When the user selects the "set" button and the input regarding the conditions of the "target document" and "reading of data" is completed, the information processing means 380 subsequently reads the display data of the enterprise value evaluation input condition setting screen show in FIG. 30 from the recording means 384, and outputs a command for displaying this on the display means 372 via the display interface 373. The user, while viewing the enterprise value evaluation input condition setting screen displayed on the display means 372, selects a desired enterprise to be evaluated. In the example shown in FIG. 30, the user is selecting "electrical equipment industry" among the "industries" to become the large classification among the target of enterprise evaluation.

Further, the user may also select "enterprise" as the detailed classification of individual enterprises among the target of enterprise value evaluation, and designate input conditions such as the "enterprise name", "enterprise code", "applicant code" and so on. When the user, while viewing this screen, selects the "target" on the right side and further selects the enterprise, such user will input the enterprise name or enterprise code and applicant code.

When the user selects the "set" button and ends the input condition setting of the enterprise value evaluation, such input information is conveyed to the information processing means 380. The information processing means 380 sets a flag of the enterprise to become the "target" input by the user, displays a selection mark at the portion of the index selected by the user, displays information such as the set enterprise name, enterprise code and application code on the display means 372, and notifies the user of the set information.

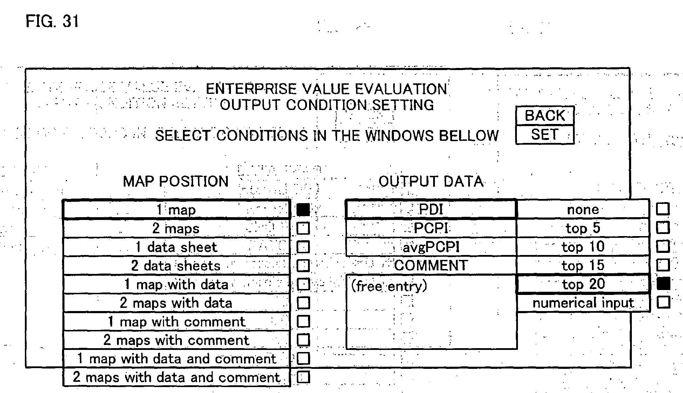

When the user selects the "set" button and the setting of the input conditions of the enterprise value evaluation is ended, the information processing means 380 subsequently reads the display data of the enterprise value evaluation output condition setting screen shown in FIG. 31 from the recording means 384, and outputs a command for displaying this on the display means 372 via the display interface 373. The user, while viewing the enterprise value evaluation output condition setting screen displayed on the display means 372, selects a desired display mode. In the example shown in FIG. 31, "single map" is selected as the information relating to the "map position", the patent diversification index "PDI" is selected as the "output data", and "upper 20" is selected as the volume of information to be output and displayed.

When the user selects the "set" button and the setting of the enterprise value evaluation output conditions is ended, processing to the performed by the information processing means 380 proceeds to the processing of S503 "select combination". When the user designates the implementation of operation relating to management-finance information such as "business, profit, market value", the processing to be performed by the information processing means 380 proceeds to the processing of S604 "acquire management-finance information", and, when the user designates the implementation of operation of "R&D patent" or "patent portfolio", the processing to be performed by the information processing means 380 proceeds to the processing of S504 "acquire patent information".

Incidentally, when the user designates an independent operation of the patent diversification index (PDI), the information processing means 380 does not select the combination processing and implements only the processing of S504 onward.

For example, when the user designates the operation of the patent diversification index (PDI), at S504, the information processing means 380 acquires the patent publications of the respective enterprises and information relating thereto from the database 20 based on the operation processing of the patent portfolio and information relating to the designated enterprise, and performs processing for extracting the IPC sub-classes, number of patent applications, number of claims in a patent application and other information required for the operation. After the acquisition processing of patent information is ended, the processing to be performed by the information processing means 380 proceeds to the processing of subsequent S505 "calculate patent information".

At S505, the information processing means 380 performs processing for calculating the desired index of the user based on the patent information acquired at S504, the operation formula related to the portfolio input by the user, and the calculating formula to which a flag has been set based on the enterprise name or the like.

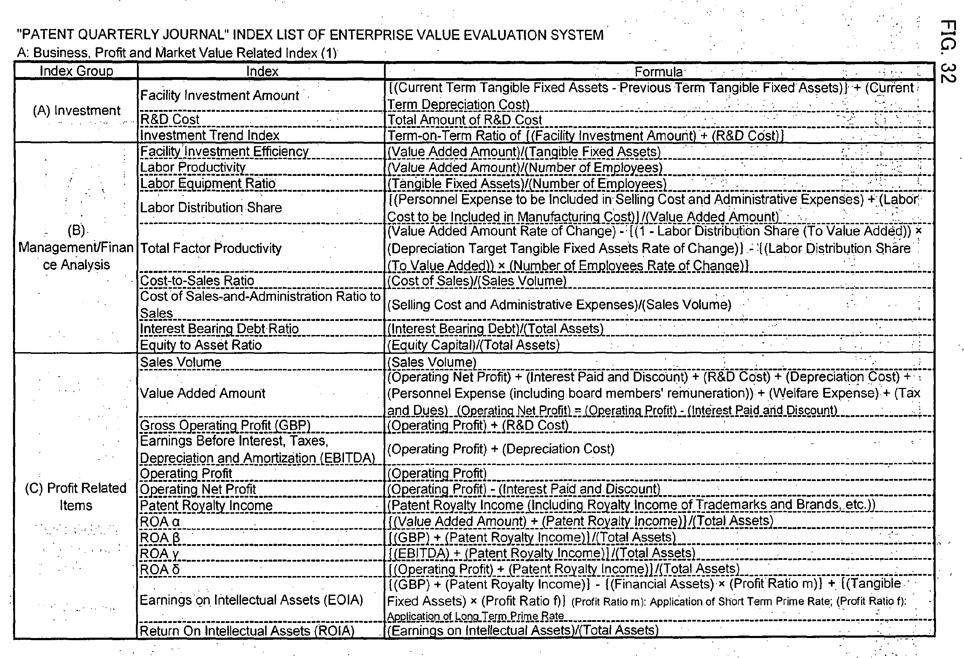

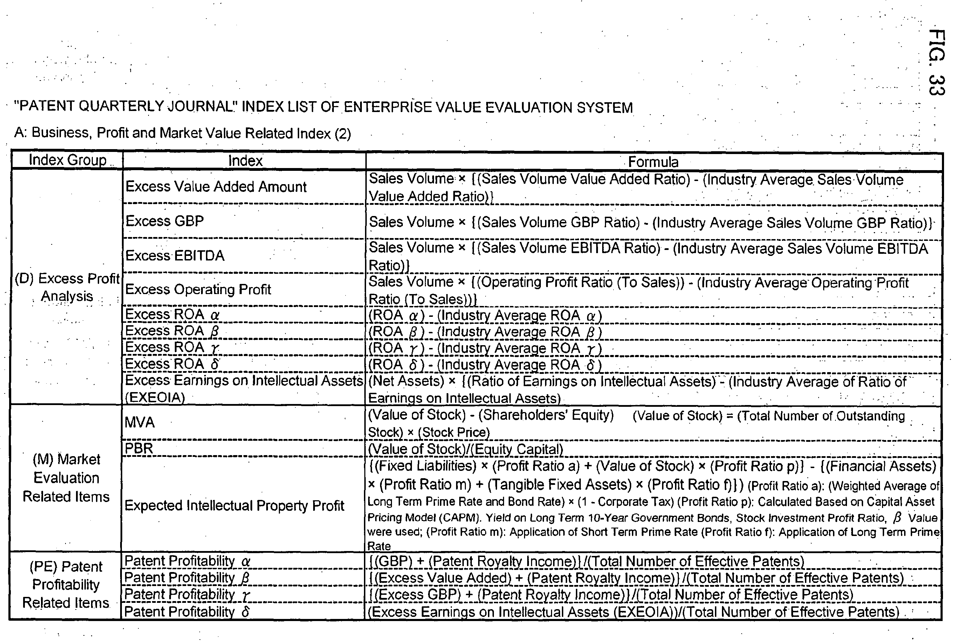

Incidentally, FIG. 32 and FIG. 33 are charts illustrating examples of indexes of "business, profit, market value" calculated by the enterprise evaluation device and the calculating formula thereof.

As shown in FIG. 32 and FIG. 33, as the index groups, "(A) investment", "(B) management-finance analysis", "(C) profit related", "(D) excess profit analysis", "(M) market value related", and "(PE) patent profitability are provided, and the names and outline of the respective indexes and the calculating formula thereof are indicated in each of these groups.

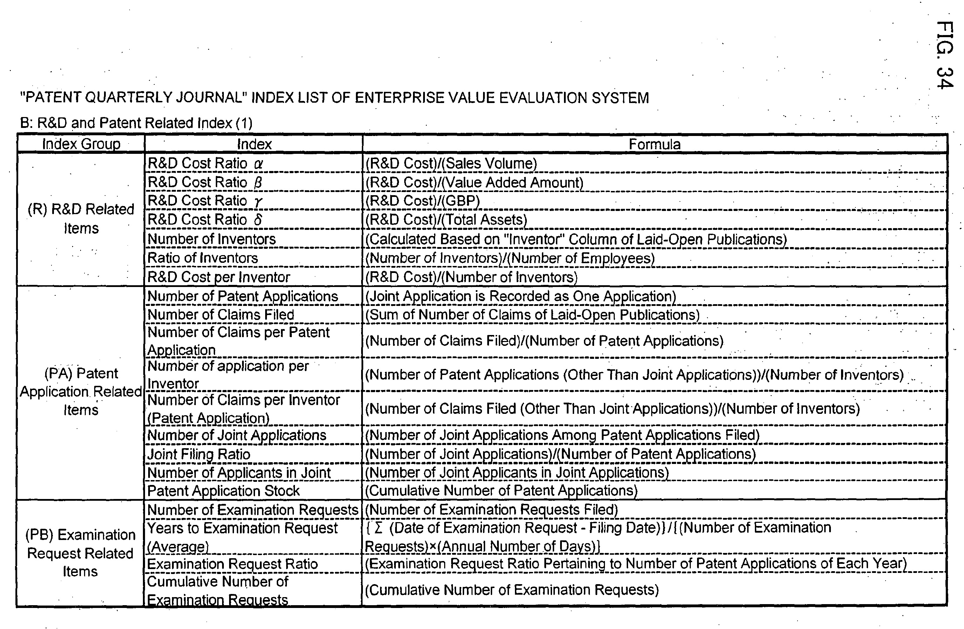

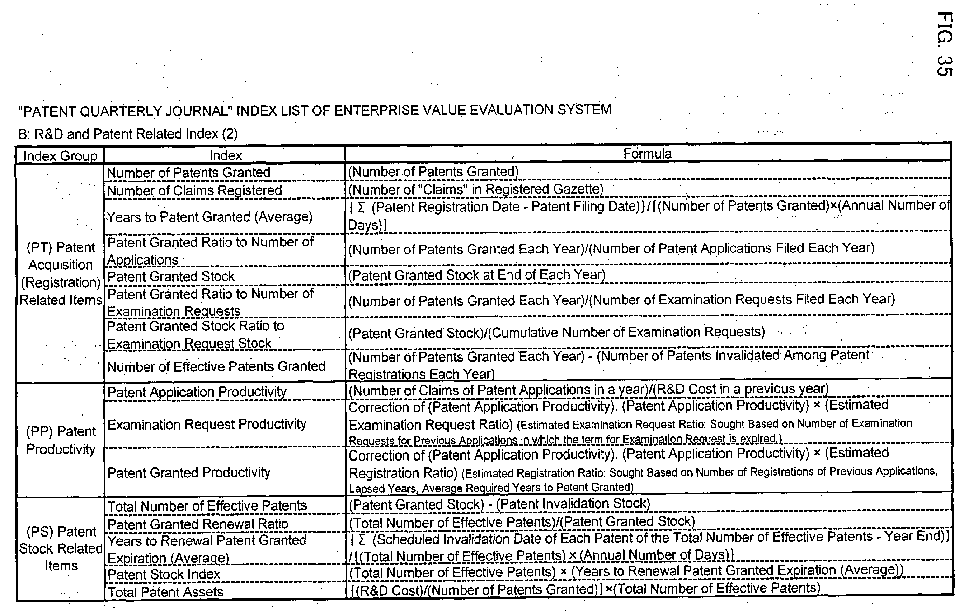

Incidentally, FIG. 34 and FIG. 35 are charts illustrating examples of indexes of "R&D patent" calculated by the enterprise evaluation device and the calculating formula thereof.

As shown in FIG. 34 and FIG. 35, as the index groups, "(R) research and development related", "(PA) patent application related", "(PB) examination request related", "(PT) patent acquisition (registration) related", "(PP) patent productivity" and "(PS) patent stock related" are provided, and the names and outline of the respective indexes and the calculating formula thereof are indicated in each of these groups.

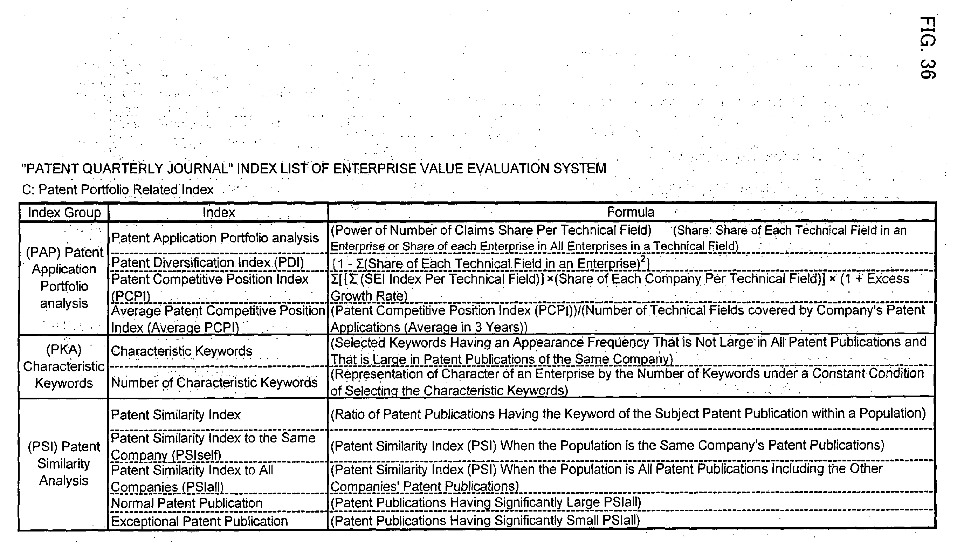

FIG. 36 is a chart illustrating an example of an index of "patent portfolio" calculated by the enterprise evaluation device and the calculating formula thereof.

As shown in FIG. 36, as the index groups, "(PA, P) patent portfolio analysis", "(PAK) characteristic keywords", and "(PSI) patent similarity ratio analysis" are provided, and the names and outline of the respective indexes and the calculating formula thereof are indicated in each of these groups.

When the operation processing of the index relation to patents is ended at S505, the processing to be subsequently performed by the information processing means 380 proceeds to the processing of S506 "organize calculation result of patent information".

At 5506, the information processing means 380 classifies; the predetermined enterprise into a predetermined category based on the operation result of the index relating to patents, and further performs operation processing for predetermined ranking or discrimination, and then organizes the various operation results.

When the organization of the various operation results is ended at S506, the processing to be performed by the information processing means 380 proceeds to the subsequent processing of S507 "create graph".

Meanwhile, in a case where the user selects "(C) profit related index" from the "business, profit, market value" (refer to FIG. 27), and further selects "GBP" (gross operating profit), and desires the combination of the "patent portfolio" operation and other items, the processing to be performed by the information processing means 380 proceeds to S604 "acquire management-finance information".

At S604, the information processing means 380 acquires various types of information from the database 20 such as the information showing the size of the enterprise, finance information of the enterprise, and combined information of the enterprise, and operates the management-finance information at the subsequent S605 "calculate management-finance information".

When the operation processing of management-finance information is ended at S605, the processing to the subsequently performed by the information processing means 380 will proceed to S606 "organize calculation result of management-finance information" in order to perform the operation processing of management-finance information, and then the routine proceeds to the subsequent S507.

At S507, the information processing means 380 creates a chart or graph by applying the operation result of the patent information calculated at S505, various operation results organized at S506, operation result of the management-finance information operated at S605, or operation result of the various types of management-finance information organized at S606 into a display format according to the index or the operation result thereof, and coverts this into display data.

Next, at S508, the information processing means 380 outputs the display data of the chart or graph created at S507 to the display interface 373, and displays this on the display means 372.

By the user perusing the chart or graph display at S508, the user will be able to easily and accurately judge, with a unique index, the enterprise value based on the diversification of inventions in the respective enterprises, competitive position relating to inventions, or the relationship between such unique information concerning inventions and the management-finance information.

Depending on the items of enterprise evaluation designated by the user, there may be cases where the information processing means 380 performs a more detailed ranking in order to judge the enterprise value. In such a case, the information processing means 380 will read the predetermined threshold or the like at S509 "determine enterprise value" to judge the enterprise value, thereafter output the numerical value or graph thereof, and then end the calculation processing of the various indexes.

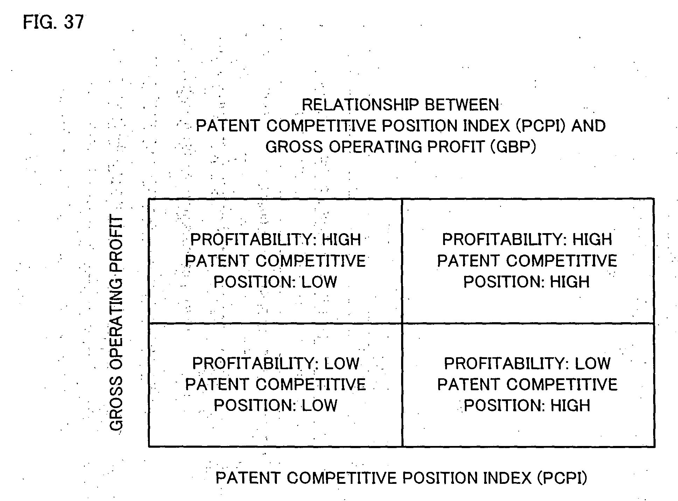

FIG. 37 is a diagram illustrating the judgment method of a graph representing the patent competitive position index (PCPI), which is one form of patent information, on the horizontal axis, and representing the gross operating profit, which is one form of management-finance information, on the vertical axis.

In general terms, the relationship of the patent competitive position index (PCPI) or standardized patent competitive position index (avgPCPI) or patent diversification index (PDI) and the gross operating profit (GBP) can be categorized into the portfolios shown in FIG. 37.

The cross lines running vertically and horizontally in the center of the graph are lines showing the average value of the vertical axis and horizontal axis. Enterprises belonging to the group at the upper right portion of FIG. 37 have a high gross operating profit and show a large value as the patent competitive position index (PCPI), and it is therefore possible to judge that these enterprises have favorable profitability and strong patent competitive position.

Further, enterprises belonging to the group at the lower left portion of FIG. 37 have a low gross operating profit and show a small value as the patent competitive position index (PCPI), and it is therefore possible to judge that these enterprises have inferior profitability and weak patent competitive position.

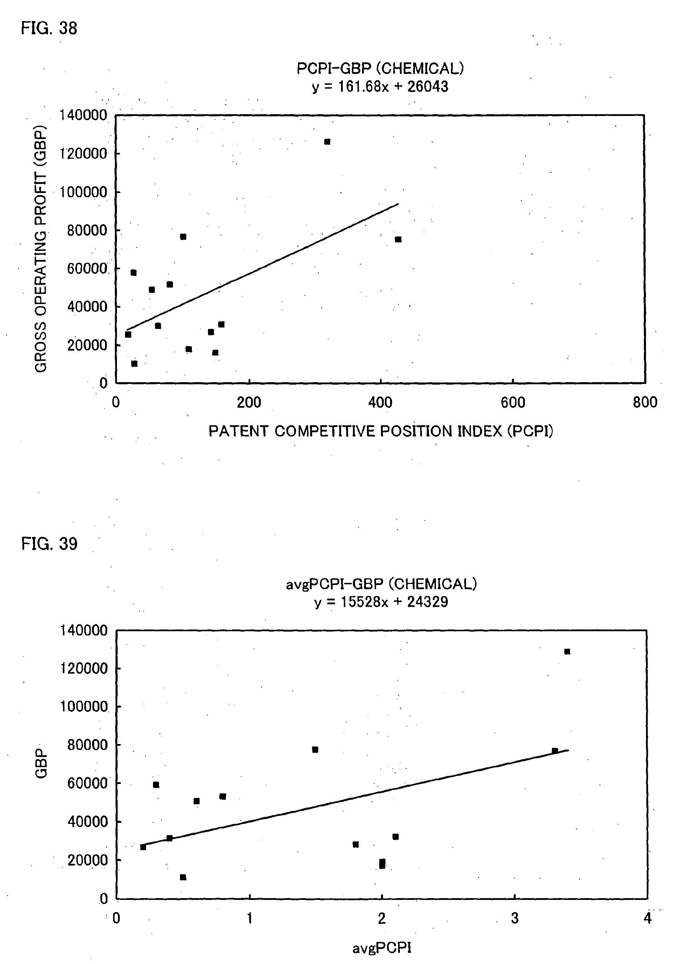

FIG. 38 is a diagram showing the relationship between the patent competitive position index (PCPI) and gross operating profit (GBP) of an enterprise belonging to a chemical division.

In FIG. 38, an average value line is drawn using the least square method regarding the position of the respective enterprises in the chemical industry. It is possible to judge that enterprises located at the upper right of the straight line of this average value have a strong patent competitive position in relatively various technical fields, and also have business profitability.

Further, it is possible to judge that companies positioned at the upper right portion of the graph but lower than the average value line have a patent competitive position in the overall chemical industry, but have somewhat weak profitability. It is possible to judge that enterprises located below the average line at the lower left portion have a weak patent competitive position and inferior profitability in the overall chemical industry. Moreover, it is possible to judge that enterprises positioned toward the left of the graph but above the average value line have an ordinary patent competitive position but favorable profitability in the overall chemical industry.

FIG. 39 is a diagram showing the relationship between the standardized patent competitive position index (avgPCPI) and gross operating profit (GBP) of an enterprise belonging to a chemical division.

As with the case in FIG. 38, an average value line is drawn using the least square method regarding the position of the respective enterprises in the chemical industry. It is possible to judge that enterprises located at the upper right of the straight line of this average value have a strong patent competitive position in a particular technical field, and also have business profitability.

Further, it is possible to judge that companies positioned at the upper right portion of the graph but lower than the average value line have a patent competitive position in a particular technical field in the chemical industry, but have somewhat weak profitability. It is possible to judge that enterprises located below the average line at the lower left portion have a weak patent competitive position and inferior profitability in a part of the chemical industry. Moreover, it is possible to judge that enterprises positioned toward the left of the graph but above the average value line have an ordinary patent competitive position but favorable profitability in a particular technical field in the chemical industry.

As described above, by representing the relationship of the competitive position and gross operating profit relating to an invention of an enterprise with a graph, it will be possible to compare the relationship of the competitive position and gross operating profit of an invention in the respective industries. Further, it will also be possible to compare a predetermined industry and another industry, and it will also be easy to judge the positioning of the enterprise to be researched among all the enterprises.

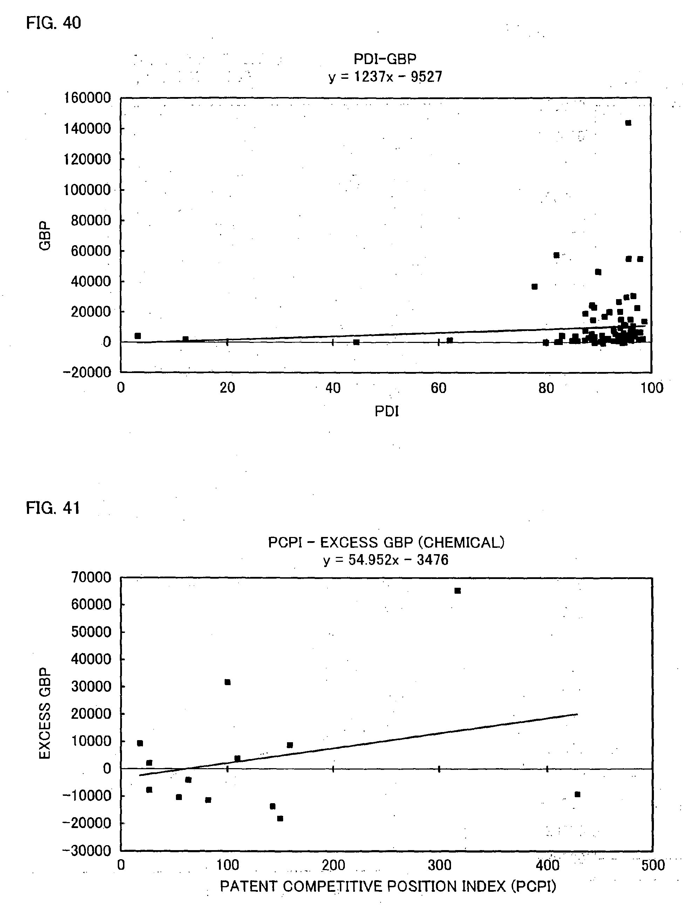

FIG. 40 is a diagram showing the relationship between the patent diversification index (PDI) and gross operating profit (GBP) of all enterprises.

As shown in FIG. 40, by viewing the combination of the patent diversification index (PDI) and gross operating profit (GBP) of all enterprises, it is possible to clearly express the enterprise value evaluation in a comprehensive manner.

In particular, enterprises existing on the right side of the graph and positioned far above the average value line in FIG. 40 have diversified patent applications in various technical fields, and it is considered that these enterprises have advantageous applications in the respective technical fields. To make a comprehensive judgment, it is possible to judge that this enterprise is superior in technical development strength and profitability, and is an enterprise worth noting.

Further, as the index showing the difference with the average of the same business category regarding the gross operating profit (GBP) in each business year of each enterprise, the excess gross operating profit (excess GBP) may also be employed.

The calculating formula for calculating the excess gross operating profit (excess GBP) is shown in the formula below.

```
Excess GBP

= sales volume × (sales volume GBP ratio - sales volume GBP

ratio of industry sector average) …(Formula 21)
```

Excess gross operating profit (excess GBP) is a numerical value showing the portion exceeding the business category average among the business income obtained through manufacture and sales activities by a certain enterprise. By using this excess gross operating profit (excess GBP), it is possible to appropriately conduct a comparison with other companies in the same business category, and to easily judge whether the enterprise to be researched is superior in comparison to the business category average.

In addition to the comparison shown in FIG. 39 or FIG. 40, excess gross operating profit (excess GBP) and patent competitive position index (PCPI), standardized patent competitive position index (avgPCPI) or patent diversification index (PDI) may be combined and displayed on a single graph.

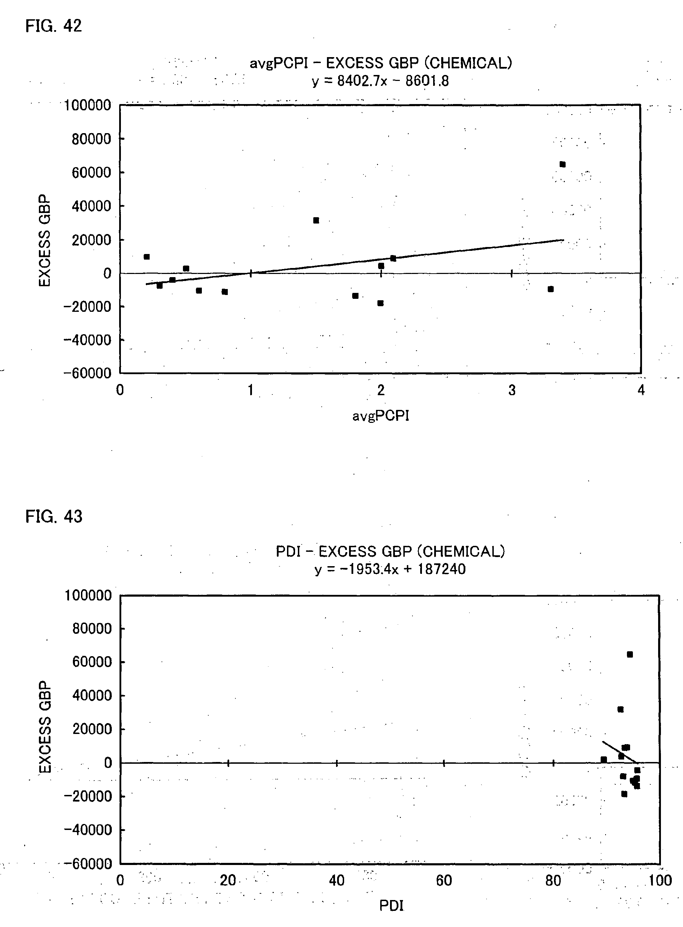

FIG. 41 is a diagram showing the relationship of the patent competitive position index (PCPI) and excess GBP of the chemical industry.

As shown in FIG. 41, it is possible to judge that enterprises positioned at the upper right portion of the average value line have a superior patent competitive position in wide ranging technical fields, and also have superior business profitability in comparison to other companies in the same trade.

Contrarily, it is possible to judge that enterprises positioned at the lower left portion and below the average value line of FIG. 41 have a weak patent competitive position in wide ranging technical fields, and also have weak business profitability in comparison to other companies in the same trade.

Further, it is possible to judge that enterprises positioned at the right side and below the average value line of FIG. 41 have a strong patent competitive position in wide ranging technical fields but have weak business profitability. Moreover, it is possible to judge that enterprises positioned above the average value line have a strong patent competitive position among the companies in the same trade and are also increasing their business profits.

FIG. 42 is a diagram showing the relationship of the standardized patent competitive position index (avgPCPI) and excess GBP of the chemical industry.

It is possible to judge that enterprises plotted far away at the upper right portion shown in FIG. 42 have a unique field, and also have superior business profitability among the companies in the same trade. It is possible to judge that enterprises positioned at the right side and below the average value line in FIG. 42 have a relatively unique field, but weak business profitability among the companies in the same trade. Moreover, it is possible to judge that enterprises existing in FIG. 42 at the lower left portion and below the average value line do not have unique technology, and have weak business profitability.

FIG. 43 is a diagram showing the relationship between the patent diversification index (PDI) and excess GBP of the respective enterprises in the chemical industry.

As shown in FIG. 43, a large number of enterprises belong to a generalized type (90 or more, less than 96) in the chemical industry, there are only 4 enterprises positioned above the average value line, and only 1 enterprise is showing strong business profitability. When looking at each industry as described above, the characteristics of the industry, whether the enterprise to be researched has strong profitability, or whether the enterprise to be researched as weak profitability will become evident, and this will be useful upon judging the enterprise value.

Industrial Applicability

According to the present invention, the enterprise evaluation device includes:

technical document acquisition means for acquiring technical documents from a technical document database;
total number of inventions per technical field extraction means for classifying the acquired technical documents into respective technical fields and for extracting the total number of inventions per technical field;
number of inventions per technical field and per enterprise extraction means for classifying the acquired technical documents into respective enterprises and into respective technical fields and for extracting the number of inventions per enterprise and per technical field;
oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field; and

output means for outputting the calculated oligopoly score per technical field to display means or the like.

Therefore, it is possible to display the oligopolistic state or competitive state of an invention or technical strength in a predetermined technical field.

Further, the enterprise evaluation device of the present invention includes:

oligopolistic state per technical field judgment means for comparing a predetermined threshold with the calculated oligopoly score per technical field, and for judging whether the number of inventions in the predetermined technical field is in an oligopolistic state of a specific enterprise, or a competitive state of numerous enterprises; and

output means for outputting an index showing the oligopolistic state or the competitive state judged by the oligopolistic state per technical field judgment means to display means or the like.

Therefore, it is possible to display the oligopolistic state or competitive state of an invention or technical strength in a predetermined technical field in an easy-to-understand and absolute manner.

Moreover, the enterprise evaluation device of the present invention includes:

oligopolistic state per technical field judgment means for comparing a predetermined threshold with the calculated oligopoly score per technical field, and for judging whether the number of inventions in the predetermined technical field is in an oligopolistic state of a specific enterprise, or a competitive state of numerous enterprises;

display data generation means for generating display data for an indication of the oligopoly score per technical field in a numerical value or in a bar graph and an indication of the judgment result of whether in an oligopolistic state or in a competitive state, to display these indications within the same frame or at an adjacent position; and

output means for outputting the display data to display means or the like.

Therefore, it is possible to concurrently display whether the number of inventions in a predetermined technical field is in an oligopolistic state of a specific enterprise, and the degree of technical share of an enterprise to be researched in such technical field. Further, when a predetermined technical field is in a competitive state with numerous enterprises, and the enterprise to be researched only has a slight share regarding the invention, it is easy to judge that the enterprise to be researched is not in an advantageous state in such technical field in the existing circumstances.

Moreover, the enterprise evaluation device of the present invention includes:

technical document acquisition means for acquiring technical documents from a technical document database;

total number of inventions per enterprise extraction means for classifying the acquired technical documents into respective enterprises, and for extracting the total number of inventions per enterprise;

number of inventions per technical field and per enterprise extraction means for classifying the acquired technical documents into respective enterprises, and for extracting the number of inventions per enterprise and per technical field;

oligopoly score per enterprise calculation means for calculating number-of-inventions share per enterprise and per technical field through dividing the number of inventions per enterprise and per technical field by the total number of inventions per enterprise, and for accumulating the number-of-inventions share per enterprise and per technical field powered by kb (wherein kb > 0) for each technical field having at least one invention in a predetermined enterprise, thereby calculating the oligopoly score per enterprise; and

output means for outputting the calculated oligopoly score per enterprise to display means or the like.

Therefore, it is possible to indicate that the technical strength is diversified in the respective technical fields the smaller the value of the oligopoly score per enterprise, and that the technical strength is concentrated in a single technical field the larger the value of the oligopoly score per enterprise. Accordingly, a user is able to easily know the degree of concentration and diversification in the technical development field of a predetermined enterprise, and, by comparing this with a patent diversification index of other enterprises calculated with the same calculation method, it is possible to compare the degree of concentration and diversification of the predetermined technical development field.

Further, the enterprise evaluation device of the present invention includes:

diversification per enterprise categorizing means for comparing a predetermined threshold with the oligopoly score per enterprise, and for categorizing whether the number of inventions in the predetermined enterprise is concentrated in a specific technical field or diversified in numerous technical fields through representation with a figure or wording; and

output means for outputting display data of categories with the figure or wording to display means or the like.

Therefore, it is possible to absolutely present, in an easy-to-understand manner, an index capable of judging whether the technical strength in a predetermined enterprise is diversified in the respective technical fields or whether the technical strength is concentrated in a single technical field.

Further, the enterprise evaluation device of the present invention includes:

diversification index calculation means for calculating a diversification index by subtracting the oligopoly score per enterprise from 1, or a diversification index by subtracting the oligopoly score per enterprise from 1 and multiplying 100 thereto;

diversification per enterprise categorizing means for comparing a predetermined threshold with the calculated diversification index, and for categorizing whether the number of inventions in the predetermined enterprise is concentrated in a specific technical field or diversified in numerous technical fields through representation with a figure or wording; and

output means for outputting display data of categories with the figure or wording to display means or the like.

Therefore, it is possible to indicate that the technical strength is diversified in the respective technical fields the smaller the value of the oligopoly score per enterprise, and that the technical strength is concentrated in a single technical field the larger the value of the oligopoly score per enterprise. Accordingly, a user is able to easily know the degree of concentration and diversification in the technical development field of a predetermined enterprise, and, by comparing this with a patent diversification index of other enterprises calculated with the same calculation method, it is possible to compare the degree of concentration and diversification of the predetermined technical development field.

Moreover, the enterprise evaluation device of the present invention includes:

technical document acquisition means for acquiring technical documents;

total number of inventions per technical field extraction means for classifying the acquired technical documents into respective technical fields, and for extracting the total number of inventions per technical field;

number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical-field; and

output means for outputting the calculated oligopoly-emphasized score per technical field to display means or the like.

Therefore, when the number-of-inventions share in a predetermined technical field is large, it is possible to judge that an oligopolistic state is created by the enterprise, and larger the value thereof, it is possible to judge that the comprehensive strength of the technical development strength viewed from the invention of such enterprise is great. As a result, this can be used upon considering whether to purchase or sell stock, or considering the potential of the enterprise, or as a rough indication upon selecting an enterprise to conduct joint development, or upon determining the place of employment.

Further, the enterprise evaluation device of the present invention includes:

technical document acquisition means for acquiring technical documents from a technical document database;

total number of inventions per technical field extraction means for classifying the acquired technical documents into respective technical fields and for extracting the total number of inventions per technical field;

number of inventions per technical field and per enterprise extraction means for classifying the acquired technical documents into respective enterprises and into respective technical fields and for extracting the number of inventions per enterprise and per technical;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score; and

output means for outputting the calculated enterprise competitive position score to display means or the like.

Therefore, it is possible to present that the comprehensive strength of the technical development strength viewed from the invention of such enterprise is great the larger the calculated value of the patent competitive position score.

Moreover, the enterprise evaluation device of the present invention includes:

enterprise competitive position score categorizing means for comparing a predetermined threshold with the calculated enterprise competitive position score, and for categorizing the competitive position of the predetermined enterprise relating to inventions through representation with a figure or wording;

display data generation means for generating display data of categories with the figure or wording; and

output means for outputting the display data to display means or the like.

Therefore, by representing the positioning of the patent competitive position index of a predetermined enterprise with the number of stars or the type of enterprise, it is possible to represent the competitive position relating to inventions in an easy-to-view manner. And, even without having to consciously research the number of patent applications or number of claims filed or classification of the IPC sub-classes, it is possible to present the competitive position relating to inventions among a plurality of enterprises in an easy-to-understand manner. Further, by using the average value or standard deviation of the enterprise competitive position score of all enterprises as the threshold, it is possible to conduct comparative assessment among the enterprises. Thereby, companies below average and companies above average can be made to stand out, and it is possible to present the relative merits of the patent competitive position of a predetermined enterprise.

Moreover, the enterprise evaluation device of the present invention includes:

technical document acquisition means for acquiring technical documents from a technical document database; total number of inventions per technical field extraction means for classifying the acquired technical documents into respective technical fields and for extracting the total number of inventions per technical field;

number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

standardized enterprise competitive position score calculation means for calculating the standardized enterprise competitive position score through dividing the enterprise competitive position score by the number of technical fields; and

output means for outputting the calculated standardized enterprise competitive position score to display means or the like.

Therefore, it is possible to present the level of technical development strength regardless of the broadness of a technical field in an enterprise.

Further, it is possible to compare the competitive position relating to inventions equally for both enterprises having a broad technical field and enterprises having a narrow technical field.

Moreover, the enterprise evaluation device of the present invention includes:

standardized enterprise competitive position score categorizing means for comparing a predetermined threshold with the standardized enterprise competitive position score, and for categorizing the competitive position of the predetermined enterprise relating to inventions through representation with a figure or wording;
display data generation means for generating display data of categories with the figure or wording; and
output means for outputting the display data to display means or the like.

Therefore, it is possible to represent the standardized competitive position relating to inventions in an easy-to-view manner. Further, by using the average value or standard deviation of the enterprise competitive position score of all companies as the threshold, it is possible to conduct the comparative assessment among enterprises, make enterprises above average and enterprises below average stand out, and present the relative merits of the patent competitive position of a predetermined enterprise.

Moreover, the enterprise evaluation device of the present invention includes:

technical document acquisition means for acquiring technical documents from a technical document database;
total number of inventions per technical field extraction means for classifying the acquired technical documents into respective technical fields and for extracting the total number of inventions per technical field;
number of inventions per technical field and per enterprise extraction means for classifying the acquired technical documents into respective enterprises and into respective technical fields and for extracting the number of inventions per enterprise and per technical field;
oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;
oligopoly-emphasized score per technical field calculation means for calculating the oligopoly-emphasized score per technical field by multiplying the number-of-inventions share per technical field and per enterprise and the oligopoly score per technical field;
enterprise competitive position score calculation means for accumulating the oligopoly-emphasized score per technical field for each technical field having at least one invention in a predetermined enterprise, thereby calculating the enterprise competitive position score;
rate of increase of inventions acquisition means for acquiring the rate of increase in number of inventions in the predetermined enterprise and the rate of increase in number of inventions in all enterprises based on date information of the acquired technical documents;
excess growth rate calculation means for calculating the excess growth rate of the predetermined enterprise by subtracting the rate of increase in number of inventions in all enterprises from the rate of increase in number of inventions in the predetermined enterprise;
enterprise competitive position index calculation means for calculating the enterprise competitive position index by multiplying the enterprise competitive position score to a value obtained by adding 1 to the excess growth rate; and
output means for outputting the enterprise competitive position index to display means or the like.

Therefore, it is possible to evaluate the competitive position relating to inventions upon adding the rate of increase of the overall enterprise.

Further, the enterprise evaluation device of the present invention includes:

enterprise competitive position index categorizing means for comparing a predetermined threshold with the calculated enterprise competitive position index, and for categorizing the competitive position of the predetermined enterprise relating to inventions through representation with a figure or wording;
display data generation means for generating display data of categories with the figure or wording; and
output means for outputting the display data to display means or the like.

Therefore, it is possible to represent the competitive position relating to inventions upon adding the rate of increase of all enterprises in an easy-to-view manner.

Moreover, the enterprise evaluation device of the present invention includes:

technical document acquisition means for acquiring technical documents from a technical document database;
total number of inventions per technical field extraction means for classifying the acquired technical documents into respective technical fields and for extracting the total number of inventions per technical field;
number of inventions per technical field and per enterprise extraction means for classifying the acquired technical documents into respective enterprises and into respective technical fields and for extracting the number of inventions per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventioris share per technical field and per enterprise and the oligopoly score per technical field;

enterprise competitive position score calculation means for accumulating the oligopbly-emphasized score per technical field for each technical field having at least one invention in a predetermined enterprise, thereby calculating the enterprise competitive position score;

rate of increase of inventions acquisition means for acquiring the rate of increase in number of inventions in the predetermined enterprise and the rate of increase in number of inventions in all enterprises based on date information of the acquired technical documents;

excess growth rate calculation means for calculating the excess growth rate of the predetermined enterprise by subtracting the rate of increase in number of inventions in all enterprises from the rate of increase in number of inventions in the predetermined enterprise;

enterprise competitive position index calculation means for calculating the enterprise competitive position index by multiplying the enterprise competitive position score to a value obtained by adding 1 to the excess growth rate;

standardized enterprise competitive position index calculation means for calculating the standardized enterprise competitive position index through dividing the enterprise competitive position index by the number of technical fields; and

output means for outputting the standardized enterprise competitive position index to display means or the like.

Therefore, it is possible to add the rate of increase of all companies and present the level of technical development strength regardless of the broadness of a technical field of an enterprise. Further, it is possible to compare the competitive position relating to inventions equally for both enterprises having a broad technical field and enterprises having a narrow technical field.

Moreover, the enterprise evaluation device of the present invention includes:

standardized enterprise competitive position index categorizing means for comparing a predetermined threshold with the calculated standardized enterprise competitive position index, and for categorizing the competitive position of the predetermined enterprise relating to inventions through representation with a figure or wording;

display data generation means for generating display data of categories with the figure or wording; and

output means for outputting the display data to display means or the like.

Therefore, it is possible to represent the standardized competitive position relating to inventions upon adding the rate of increase of all enterprises in an easy-to-view manner.

Moreover, the enterprise evaluation device of the present invention classifies the technical field by IPC sections, IPC classes, IPC sub-classes, IPC main groups, IPC sub-groups, F terms, FI, facets or keywords contained in the technical documents.

Therefore, it is possible to calculate the oligopolistic state or diversified state of inventions and competitive position by using published patent documents and present the same to a user.

Further, the enterprise evaluation device of the present invention uses, as the technical documents, publications of registered patents, unexamined patent applications, registered utility models, unexamined utility model applications, published translations of PCT international applications, domestic re-publications of PCT international applications, foreign publications, published appeal and trial decisions, transitional information or journals of technical disclosure.

Therefore, it is possible to calculate the oligopolistic state or diversified state of inventions and competitive position by using published patent documents and present the same to a user.

Further, the enterprise evaluation device of the present invention uses, as the number of inventions among the total number of inventions per technical field or number of inventions per enterprise and per technical field, the number of patent or utility model applications, number of claims filed, number of registrations, number of claims registered, number of examination requests, number of claims requested for examination, number of decisions of registration, number of claims decided to be registered, number of decisions of rejection, number of claims decided to be rejected, number of demands for trial, number of claims demanded for trial or the ratios thereof.

Therefore, it is possible to calculate the oligopolistic state or diversified state of inventions and competitive position by using published patent documents and present the same to a user.

Further, the enterprise evaluation device of the present invention includes:

display data generation means for generating display data for associating and displaying the category of the oligopoly score per enterprise or the category of the diversification index and the category of the enterprise competitive position score or the category of the standardized enterprise competitive position score; and
output means for outputting the display data to display means or the like.

Therefore, it is possible to display the relationship of the oligopolistic state of an enterprise based on an invention and the competitive position relating to inventions in an easy-to-understand manner.

Moreover, the enterprise evaluation device of the present invention includes:

display data generation means for generating display data for associating and displaying the category of the oligopoly score per enterprise or the category of the diversification index and the category of the enterprise competitive position index or the category of the standardized enterprise competitive position index; and
output means for outputting the display data to display means or the like.

Therefore, it is possible to display the relationship of the oligopolistic state of an enterprise based on an invention and the competitive position relating to inventions in an easy-to-understand manner.

Moreover, the enterprise evaluation device of the present invention includes:

display data generation means for generating display data for associating and displaying the category of the oligopoly score per enterprise or the category of the diversification index and the enterprise competitive position score, the standardized enterprise competitive position score, the enterprise competitive position index or the standardized enterprise competitive position index; and
output means for outputting the display data to display means or the like.

Therefore, it is possible to display the relationship of the oligopolistic state of an enterprise based on an invention and the competitive position relating to inventions in an easy-to-understand manner.

Moreover, the enterprise evaluation device of the present invention includes:

management-finance information acquisition means for acquiring management-finance information of an enterprise to be researched from a management-finance database recording management-finance information such as information showing the size of the enterprise or finance information of the enterprise;
display data generation means for generating display data for displaying, enterprise by enterprise and via a graph or chart, the relationship of the oligopoly score per enterprise, the oligopoly-emphasized score per technical field, enterprise competitive position score, standardized enterprise competitive position score, enterprise competitive position index or the standardized enterprise competitive position index, and the acquired management-finance information of the enterprise to be researched; and
output means for outputting the display data to display means or the like.

Therefore, it is possible to accurately judge the condition of an enterprise by combining the technical strength and management-finance information relating to the invention.

Further, the enterprise evaluation device of the present invention uses, as the management-finance information, the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, R&D cost, R&D cost to sales volume ratio, R&D cost to gross operating profit ratio, gross operating profit ratio, gross operating profit or other financial information of the enterprise.

Therefore, it is possible to accurately judge the condition of an enterprise by combining the technical strength and management-finance information relating to the invention.

## Claims

**1.** An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field; and

output means for outputting the calculated oligopoly score per technical field to display means, printing means, recording medium, or another telecommunications device via a communication line.

2. An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopolistic state per technical field judgment means for comparing a predetermined threshold with the calculated oligopoly score per technical field, and for judging whether the number of inventions in the predetermined technical field is in an oligopolistic state of a specific enterprise, or a competitive state of numerous enterprises; and

output means for outputting an index showing the oligopolistic state or the competitive state judged by the oligopolistic state per technical field judgment means to display means, printing means, recording medium, or another telecommunications device via a communication line.

3. An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopolistic state per technical field judgment means for comparing a predetermined threshold with the calculated oligopoly score per technical field, and for judging whether the number of inventions in the predetermined technical field is in an oligopolistic state of a specific enterprise, or a competitive state of numerous enterprises;

display data generation means for generating display data for an indication of the oligopoly score per technical field in a numerical value or in a bar graph and an indication of the judgment result of whether in an oligopolistic state or in a competitive state, to display these indications within the same frame or at an adjacent position; and

output means for outputting the display data to display means, printing means, recording medium, or another telecommunications device via a communication line.

4. An enterprise evaluation device, comprising:

technical document acquisition means for acquiring technical documents such as publications of unexamined patent applications or registered patents from a technical document database;

total number of inventions per enterprise extraction means for classifying the acquired technical documents into respective enterprises such as applicants, and for extracting the total number of inventions per enterprise such as the total number of patent applications per enterprise or the total number of claims filed per enterprise;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per enterprise calculation means for calculating number-of-inventions share per enterprise and per technical field through dividing the number of inventions per enterprise and per technical field by the total number of inventions per enterprise, and for accumulating the number-of-inventions share per enterprise and per technical field powered by kb (wherein kb > 0) for each technical field having at least one invention in a predetermined enterprise, thereby calculating the oligopoly score per enterprise; and

output means for outputting the calculated oligopoly score per enterprise to display means, printing means, recording medium, or another telecommunications device via a communication line.

5. An enterprise evaluation device, comprising:,

technical document acquisition means for acquiring technical documents such as publications of unexamined patent applications or registered patents from a technical document database;

total number of inventions per enterprise extraction means for classifying the acquired technical documents into respective enterprises such as applicants, and for extracting the total number of inventions per enterprise such as the total number of patent applications per enterprise or the total number of claims filed per enterprise;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per enterprise calculation means for calculating number-of-inventions share per enterprise and per technical field through dividing the number of inventions per enterprise and per technical field by the total number of inventions per enterprise, and for accumulating the number-of-inventions share per enterprise and per technical field powered by kb (wherein kb > 0) for each technical field having at least one invention in a predetermined enterprise, thereby calculating the oligopoly score per enterprise;

diversification per enterprise categorizing means for comparing a predetermined threshold with the calculated oligopoly score per enterprise, and for categorizing whether the number of inventions in the predetermined enterprise is concentrated in a specific technical field or diversified in numerous technical fields through representation with a figure or wording; and

output means for outputting display data of categories with the figure or wording to display means, printing means, recording medium, or another telecommunications device via a communication line.

**6.** An enterprise evaluation device, comprising:

technical document acquisition means for acquiring technical documents such as publications of unexamined patent applications or registered patents from a technical document database;

total number of inventions per enterprise extraction means for classifying the acquired technical documents into respective enterprises such as applicants, and for extracting the total number of inventions per:enterprise such as the total number of patent applications per enterprise or the total number of claims filed per enterprise;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per enterprise calculation means for calculating number-of-inventions share per enterprise and per technical field through dividing the number of inventions per enterprise and per technical field by the total number of inventions per enterprise, and for accumulating the number-of-inventions share per enterprise and per technical field powered by kb (wherein kb > 0) for each technical field having at least one invention in a predetermined enterprise, thereby calculating the oligopoly score per enterprise;

diversification index calculation means for calculating a diversification index by subtracting the oligopoly score per enterprise from 1, or a diversification index by subtracting the oligopoly score per enterprise from 1 and multiplying 100 thereto;

diversification per enterprise categorizing means for comparing a predetermined threshold with the calculated diversification index, and for categorizing whether the number of inventions in the predetermined enterprise is concentrated in a specific technical field or diversified in numerous technical fields through representation with a figure or wording; and

output means for outputting display data of categories with the figure or wording to display means, printing means, recording medium, or another telecommunications device via a communication line.

**7.** An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical-field; and

output means for outputting the calculated oligopoly-emphasized score per technical field to display means, printing means, recording medium, or another telecommunications device via a communication line.

**8.** An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score; and

output means for outputting the calculated enterprise competitive position score to display means, printing means, recording medium, or another telecommunications device via a communication line.

9. An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

enterprise competitive position score categorizing means for comparing a predetermined threshold with the calculated enterprise competitive position score, and for categorizing the competitive position of the predetermined enterprise relating to inventions through representation with a figure or wording;

display data generation means for generating display data of categories with the figure or wording; and

output means for outputting the display data to display means, printing means, recording medium, or another telecommunications device via a communication line.

10. The enterprise evaluation device according to claim 9, wherein the threshold is a value using an average value or standard deviation of the enterprise competitive position scores of all enterprises.

11. An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

standardized enterprise competitive position score calculation means for calculating the standardized enterprise competitive position score through dividing the enterprise competitive position score by the number of technical fields; and

output means for outputting the calculated standardized enterprise competitive position score to display means, printing means, recording medium, or another telecommunications device via a communication line.

12. An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one.invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

standardized enterprise competitive position score calculation means for calculating the standardized enterprise competitive position score through dividing the enterprise competitive position score by the number of technical fields;

standardized enterprise competitive position score categorizing means for comparing a predetermined threshold with the calculated standardized enterprise competitive position score, and for categorizing the competitive position of the predetermined enterprise relating to inventions through representation with a figure or wording;

display data generation means for generating display data of categories with the figure or wording; and

output means for outputting the display data to display means, printing means, recording medium, or another telecommunications device via a communication line.

**13.** The enterprise evaluation device according to claim 12, wherein the threshold is a value using an average value or standard deviation of the standardized enterprise competitive position scores of all enterprises.

**14.** An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

rate of increase of inventions acquisition means for acquiring the rate of increase in number of inventions in the predetermined enterprise and the rate of increase in number of inventions in all enterprises based on date information of the acquired technical documents;

excess growth rate calculation means for calculating the excess growth rate of the predetermined enterprise by subtracting the rate of increase in number of inventions in all enterprises from the rate of increase in number of inventions in the predetermined enterprise;

enterprise competitive position index calculation means for calculating the enterprise competitive position index by multiplying the enterprise competitive position score to a value obtained by adding 1 to the excess growth rate; and

output means for outputting the enterprise competitive position index to display means, printing means, recording medium, or another telecommunications device via a communication line.

**15.** An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

rate of increase of inventions acquisition means for acquiring the rate of increase in number of inventions in the predetermined enterprise and the rate of increase in number of inventions in all enterprises based on date information of the acquired technical documents;

excess growth rate calculation means for calculating the excess growth rate of the predetermined enterprise by subtracting the rate of increase in number of inventions in all enterprises from the rate of increase in number of inventions in the predetermined enterprise;

enterprise competitive position index calculation means for calculating the enterprise competitive position index by multiplying the enterprise competitive position score to a value obtained by adding 1 to the excess growth rate;

enterprise competitive position index categorizing means for comparing a predetermined threshold with the calculated enterprise competitive position index, and for categorizing the competitive position of the predetermined enterprise relating to inventions through representation with a figure or wording;

display data generation means for generating display data of categories with the figure or wording; and

output means for outputting the display data to display means, printing means, recording medium, or another telecommunications device via a communication line.

16. The enterprise evaluation device according to claim 15, wherein the threshold is a value using an average value or standard deviation of the enterprise competitive position indexes of all enterprises.

17. An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

rate of increase of inventions acquisition means for acquiring the rate of increase in number of inventions in the predetermined enterprise and the rate of increase in number of inventions in all enterprises based on date information of the acquired technical documents;

excess growth rate calculation means for calculating the excess growth rate of the predetermined enterprise by subtracting the rate of increase in number of inventions in all enterprises from the rate of increase in number of inventions in the predetermined enterprise;

enterprise competitive position index calculation means for calculating the enterprise competitive position index by multiplying the enterprise competitive position score to a value obtained by adding 1 to the excess growth rate;

standardized enterprise competitive position index calculation means for calculating the standardized enterprise competitive position index through dividing the enterprise competitive position index by the number of technical fields; and

output means for outputting the standardized enterprise competitive position index to display means, printing means, recording medium, or another telecommunications device via a communication line.

**18.** An enterprise evaluation device, comprising:

technical document acquisition means for acquiring technical documents such as publications of unexamined patent applications or registered patents from a technical document database;

total number of inventions per technical field extraction means for classifying the acquired technical documents into respective technical fields such as IPC sub-classes or keywords, and for extracting the total number of inventions per technical field such as the total number of patent applications per technical field or the total number of claims filed per technical field;

number of inventions per technical field and per enterprise extraction means for classifying the acquired technical documents into respective enterprises such as applicants and into respective technical fields such as IPC sub-classes or keywords, and for extracting the number of inventions per enterprise and per technical field such as the number of patent applications per enterprise and per technical field or the number of claims filed per enterprise and per technical field;

oligopoly score per technical field calculation means for calculating number-of-inventions share per technical field and per enterprise through dividing the number of inventions per enterprise and per technical field by the total number of inventions per technical field, and for accumulating the number-of-inventions share per technical field and per enterprise powered by ka (wherein ka > 1) for each enterprise having at least one invention in a predetermined technical field, thereby calculating the oligopoly score per technical field;

oligopoly-emphasized score per technical field calculation means for calculating the oligopoly-emphasized score per technical field by multiplying the number-of-inventions share per technical field and per enterprise and the oligopoly score per technical field;

enterprise competitive position score calculation means for accumulating the oligopoly-emphasized score per technical field for each technical field having at least one invention in a predetermined enterprise, thereby calculating the enterprise competitive position score;

rate of increase of inventions acquisition means for acquiring the rate of increase in number of inventions in the predetermined enterprise and the rate of increase in number of inventions in all enterprises based on date information of the acquired technical documents;

excess growth rate calculation means for calculating the excess growth rate of the predetermined enterprise by subtracting the rate of increase in number of inventions in all enterprises from the rate of increase in number of inventions in the predetermined enterprise;

enterprise competitive position index calculation means for calculating the enterprise competitive position index by multiplying the enterprise competitive position score to a value obtained by adding 1 to the excess growth rate;

standardized enterprise competitive position index calculation means for calculating the standardized enterprise competitive position index through dividing the enterprise competitive position index by the number of technical fields;

standardized enterprise competitive position index categorizing means for comparing a predetermined threshold with the calculated standardized enterprise competitive position index, and for categorizing the competitive position of the predetermined enterprise relating to inventions through representation with a figure or wording;

display data generation means for generating display data of categories with the figure or wording; and

output means for outputting the display data to display means, printing means, recording medium, or another telecommunications device via a communication line.

**19.** The enterprise evaluation device according to claim 18, wherein the threshold is a value using an average value or standard deviation of the standardized enterprise competitive position indexes of all enterprises.

**20.** The enterprise evaluation device according to any one of claims 1 to 19, wherein the technical field is classified by IPC sections, IPC classes, IPC sub-classes, IPC main groups, IPC sub-groups, F terms, FI, facets or keywords contained in the technical documents.

**21.** The enterprise evaluation device according to any one of claims 1 to 19, wherein the technical documents are publications of registered patents, unexamined patent applications, registered utility models, unexamined utility model applications, published translations of PCT international applications, domestic re-publications of PCT international applications, foreign publications, published appeal and trial decisions, transitional information or journals of technical disclosure.

22. The enterprise evaluation device according to any one of claims 1 to 19, wherein the number of inventions among the total number of inventions per technical field or number of inventions per enterprise and per technical field is the number of patent or utility model applications, number of claims filed, number of registrations, number of claims registered, number of examination requests, number of claims requested for examination, number of decisions of registration, number of claims decided to be registered, number of decisions of rejection, number of claims decided to be rejected, number of demands for trial, number of claims demanded for trial or the ratios thereof.

23. An enterprise evaluation device, comprising:

display data generation means for generating display data for associating and displaying
the category of the oligopoly score per enterprise according to claim 5 or the category of the diversification index according to claim 6 and
the category of the enterprise competitive position score according to claim 9 or claim 10, or the category of the standardized enterprise competitive position score according to claim 12 or claim 13; and
output means for outputting the display data to display means, printing means, recording medium, or another telecommunications device via a communication line.

24. An enterprise evaluation device, comprising:

display data generation means for generating display data for associating and displaying
the category of the oligopoly score per enterprise according to claim 5 or the category of the diversification index according to claim 6 and
the category of the enterprise competitive position index according to claim 15 or claim 16, or the category of the standardized enterprise competitive position index according to claim 18 or claim 19; and
output means for outputting the display data to display means, printing means, recording medium, or another telecommunications device via a communication line.

25. An enterprise evaluation device, comprising:

display data generation means for generating display data for associating and displaying
the category of the oligopoly score per enterprise according to claim 5 or the category of the diversification index according to claim 6 and
the enterprise competitive position score according to claim 8 or the standardized enterprise competitive position score according to claim 11, or the enterprise competitive position index according to claim 14 or the standardized enterprise competitive position index according to claim 17; and
output means for outputting the display data to display means, printing means, recording medium, or another telecommunications device via a communication line.

26. An enterprise evaluation device, comprising:

management-finance information acquisition means for acquiring management-finance information of an enterprise to be researched from a management-finance database recording management-finance information such as information showing the size of the enterprise or finance information of the enterprise;
display data generation means for generating display data for displaying, enterprise by enterprise and via a graph or chart, the relationship of the oligopoly score per enterprise according to claim 4, the oligopoly-emphasized score per technical field according to claim 7, enterprise competitive position score according to claim 8, standardized enterprise competitive position score according to claim 11, enterprise competitive position index according to claim 14 or the standardized enterprise competitive position index according to claim 17 and the acquired management-finance information of the enterprise to be researched; and
output means for outputting the display data to display means, printing means, recording medium, or another telecommunications device via a communication line.

27. The enterprise evaluation device according to claim 26, wherein the management-finance information includes the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders equity ratio, stockholders' equity ratio, balance of total market value and stockholders' equity, R&D cost, R&D cost to sales volume ratio, R&D cost to gross operating profit ratio, gross operating profit ratio, gross operating profit or other financial information of the enterprise.

28. An enterprise evaluation program to be executed with an enterprise evaluation device comprising: technical document acquisition means for acquiring technical documents from a technical document database; total number of inventions per technical field extraction means for classifying the acquired technical documents into respective technical fields and for extracting the total number of inventions per technical field; number of inventions per technical field and per enterprise extraction means for classifying the acquired technical documents and for extracting the number of inventions per enterprise and per technical field; oligopoly score per technical field calculation means for calculating the oligopoly score per technical field; output means for outputting the calculated oligopoly score per technical field to display means or the like; and information processing means capable of controlling said technical document acquisition means, total number of inventions per technical field extraction means, number of inventions per technical field and per enterprise extraction means, oligopoly score per technical field calculation means and output means, wherein said information processing means realizes:

a function for making said technical document acquisition means acquire technical documents such as publications of unexamined patent applications or registered patents from the technical document database;

a function for making said total number of inventions per technical field extraction means classify the acquired technical documents into respective technical fields such as IPC sub-classes or keywords, and extract the total number of inventions per technical field such as the total number of patent applications per technical field or the total number of claims filed per technical field;

a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;

a function for making said oligopoly score per technical field calculation means calculate number-of-inventions share per technical field and per enterprise through dividing the number of inventions per enterprise and per technical field by the total number of inventions per technical field, and accumulate the number-of-inventions share per technical field and per enterprise powered by ka (wherein ka > 1) for each enterprise having at least one invention in a predetermined technical field, thereby calculate the oligopoly score per technical field; and

a function for making said output means output the calculated oligopoly score per technical field to display means, printing means, recording medium, or another telecommunications device via a communication line.

29. An enterprise evaluation program to be executed with an enterprise evaluation device comprising: technical document acquisition means for acquiring technical documents from a technical document database; total number of inventions per technical field extraction means for classifying the acquired technical documents into respective technical fields and for extracting the total number of inventions per technical field; number of inventions per technical field and per enterprise extraction means for classifying the acquired technical documents and for extracting the number of inventions per enterprise and per technical field; oligopoly score per technical field calculation means for calculating the oligopoly score per technical field; oligopolistic state per technical field judgment means for judging whether the number of inventions in the predetermined technical field is in an oligopolistic state of a specific enterprise; output means for outputting an index showing the oligopolistic state or competitive state to display means or the like; and information processing means capable of controlling said technical document acquisition means, total number of inventions per technical field extraction means, number of inventions per technical field and per enterprise extraction means, oligopoly score per technical field calculation means, oligopolistic state per technical field judgment means and output means, wherein said information processing means realizes:

a function for making said technical document acquisition means acquire technical documents such as publications of unexamined patent applications or registered patents from a technical document database;

a function for making said total number of inventions per technical field extraction means classify the acquired technical documents into respective technical fields such as IPC sub-classes or keywords, and extract the total number of inventions per technical field such as the total number of patent applications per technical field or the total number of claims filed per technical field;

a function for making said number of inventions per technical field and per enterprise extraction means classify

65

the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;

a function for making said oligopoly score per technical field calculation means calculate number-of-inventions share per technical field and per enterprise through dividing the number of inventions per enterprise and per technical field by the total number of inventions per technical field, and accumulate the number-of-inventions share per technical field and per enterprise powered by ka (wherein ka > 1) for each enterprise having at least one invention in a predetermined technical field, thereby calculate the oligopoly score per technical field;

a function for making said oligopolistic state per technical field judgment means compare a predetermined threshold with the calculated oligopoly score per technical field, and judge whether the number of inventions in the predetermined technical field is in an oligopolistic state of a specific enterprise, or a competitive state of numerous enterprises; and

a function for making said output means output an index showing the oligopolistic state or the competitive state judged by the oligopolistic state per technical field judgment means to display means, printing means, recording medium, or another telecommunications device via a communication line.

**30.** An enterprise evaluation program to be executed with an enterprise evaluation device comprising: technical document acquisition means for acquiring technical documents from a technical document database; total number of inventions per technical field extraction means for classifying the acquired technical documents into respective technical fields and for extracting the total number of inventions per technical field; number of inventions per technical field and per enterprise extraction means for classifying the acquired technical documents and for extracting the number of inventions per enterprise and per technical field; oligopoly score per technical field calculation means for calculating the oligopoly score per technical field; oligopolistic state per technical field judgment means for judging whether the number of inventions in the predetermined technical field is in an oligopolistic state of a specific enterprise; display data generation means for generating display data; output means for outputting the display data to display means or the like; and information processing means capable of controlling said technical document acquisition means, total number of inventions per technical field extraction means, number of inventions per technical field and per enterprise extraction means, oligopoly score per technical field calculation means, oligopolistic state per technical field judgment means, display data generation means and output means, wherein said information processing means realizes:

a function for making said technical document acquisition means acquire technical documents such as publications of unexamined patent applications or registered patents from a technical document database;

a function for making said total number of inventions per technical field extraction means classify the acquired technical documents into respective technical fields such as IPC sub-classes or keywords, and extract the total number of inventions per technical field such as the total number of patent applications per technical field or the total number of claims filed per technical field;

a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;

a function for making said oligopoly score per technical field calculation means calculate number-of-inventions share per technical field and per enterprise through dividing the number of inventions per enterprise and per technical field by the total number of inventions per technical field, and accumulate the number-of-inventions share per technical field and per enterprise powered by ka (wherein ka > 1) for each enterprise having at least one invention in a predetermined technical field, thereby calculate the oligopoly score per technical field;

a function for making said oligopolistic state per technical field judgment means compare a predetermined threshold with the calculated oligopoly score per technical field, and judge whether the number of inventions in the predetermined technical field is in an oligopolistic state of a specific enterprise, or a competitive state of numerous enterprises; and

a function for making said output means output the display data to display means, printing means, recording medium, or another telecommunications device via a communication line.

**31.** An enterprise evaluation program to be executed with an enterprise evaluation device comprising: technical document acquisition means for acquiring technical documents from a technical document database; total number of inventions per enterprise extraction means for classifying the acquired technical documents into respective enterprises and for extracting the total number of inventions per enterprise; number of inventions per technical field and per enterprise extraction means for classifying the acquired technical documents and for extracting the number of inventions per enterprise and per technical field; oligopoly score per enterprise calculation means for calculating the oligopoly score per enterprise; output means for outputting the calculated oligopoly score per enterprise to display means or the like; and information processing means capable of controlling said technical document acquisition means, total number of inventions per enterprise extraction means, number of inventions per technical field and per enterprise extraction means, oligopoly score per enterprise calculation means and output means,
wherein said information processing means realizes:

a function for making said technical document acquisition means acquire technical documents such as publications of unexamined patent applications or registered patents from a technical document database;
a function for making said total number of inventions per enterprise extraction means classify the acquired technical documents into respective enterprises such as applicants, and extract the total number of inventions per enterprise such as the total number of patent applications per enterprise or the total number of claims filed per enterprise;
a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;
a function for making said oligopoly score per enterprise calculation means calculate number-of-inventions share per enterprise and per technical field through dividing the number of inventions per enterprise and per technical field by the total number of inventions per enterprise, and accumulate the number-of-inventions share per enterprise and per technical field powered by kb (wherein kb > 0) for each technical field having at least one invention in a predetermined enterprise, thereby calculate the oligopoly score per enterprise; and
a function for making said output means output the calculated oligopoly score per enterprise to display means, printing means, recording medium, or another telecommunications device via a communication line.

32. An enterprise evaluation program to be executed with an enterprise evaluation device comprising: technical document acquisition means for acquiring technical documents from a technical document database;' total number of inventions per enterprise extraction means for classifying the acquired technical documents into respective enterprises and for extracting the total number of inventions per enterprise; number of inventions per technical field and per enterprise extraction means for classifying the acquired technical documents and for extracting the number of inventions per enterprise and per technical field; oligopoly score per enterprise calculation means for calculating the oligopoly score per enterprise; diversification per enterprise, categorizing means for comparing a predetermined threshold with the calculated oligopoly score per enterprise and for categorizing through representation with a figure or wording; output means for outputting the display data of categories with the figure or wording to display means or the like; and information processing means capable of controlling said technical document acquisition means, total number of inventions per enterprise extraction means, number of inventions per technical field and per enterprise extraction means, oligopoly score per enterprise calculation means, diversification per enterprise categorizing means and output means,
wherein said information processing means realizes:

a function for making said technical document acquisition means acquire technical documents such as publications of unexamined patent applications or registered patents from a technical document database ;
a function for making said total number of inventions per enterprise extraction means classify the acquired technical documents into respective enterprises such as applicants, and extract the total number of inventions per enterprise such as the total number of patent applications per enterprise or the total number of claims filed per enterprise;
a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;
a function for making said oligopoly score per enterprise calculation means calculate number-of-inventions share per enterprise and per technical field through dividing the number of inventions per enterprise and per technical field by the total number of inventions per enterprise, and accumulate the number-of-inventions share per enterprise and per technical field powered by kb (wherein kb > 0) for each technical field having at least one invention in a predetermined enterprise, thereby calculate the oligopoly score per enterprise;

a function for making said diversification per enterprise categorizing means compare a predetermined threshold with the calculated oligopoly score per enterprise, and categorize whether the number of inventions in the predetermined enterprise is concentrated in a specific technical field or diversified in numerous technical fields through representation with a figure or wording; and

a function for making said output means output display data of categories with the figure or wording to display means, printing means, recording medium, or another telecommunications device via a communication line.

**33.** An enterprise evaluation program to be executed with an enterprise evaluation device comprising: technical document acquisition means for acquiring technical documents from a technical document database; total number of inventions per enterprise extraction means for classifying the acquired technical documents into respective enterprises and for extracting the total number of inventions per enterprise; number of inventions per technical field and per enterprise extraction means for classifying the acquired technical documents and for extracting the number of inventions per enterprise and per technical field; oligopoly score per enterprise calculation means for calculating the oligopoly score per enterprise; diversification index calculation means for calculating a diversification index; diversification per enterprise categorizing means for categorizing whether the number of inventions in the predetermined enterprise is concentrated in a specific technical field through representation with a figure or wording; output means for outputting the display data of categories with the figure or wording to display means or the like; and information processing means capable of controlling said technical document acquisition means, total number of inventions per enterprise extraction means, number of inventions per technical field and per enterprise extraction means, oligopoly score per enterprise calculation means, diversification index calculation means, diversification per enterprise categorizing means and output means,

wherein said information processing means realizes:

a function for making said technical document acquisition means acquire technical documents such as publications of unexamined patent applications or registered patents from a technical document database;

a function for making said total number of inventions per enterprise extraction means classify the acquired technical documents into respective enterprises such as applicants, and extract the total number of inventions per enterprise such as the total number of patent applications per enterprise or the total number of claims filed per enterprise;

a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;

a function for making said oligopoly score per enterprise calculation means calculate number-of-inventions share per enterprise and per technical field through dividing the number of inventions per enterprise and per technical field by the total number of inventions per enterprise, and accumulate the number-of-inventions share per enterprise and per technical field powered by kb (wherein kb > 0) for each technical field having at least one invention in a predetermined enterprise, thereby calculate the oligopoly score per enterprise;

a function for making said diversification index calculation means calculate a diversification index by subtracting the oligopoly score per enterprise from 1, or a diversification index by subtracting the oligopoly score per enterprise from 1 and multiplying 100 thereto;

a function for making said diversification per enterprise categorizing means compare a predetermined threshold with the calculated diversification index, and categorize whether the number of inventions in the predetermined enterprise is concentrated in a specific technical field or diversified in numerous technical fields through representation with a figure or wording; and

a function for making said output means output display data of categories with the figure or wording to display means, printing means, recording medium, or another telecommunications device via a communication line.

**34.** An enterprise evaluation program to be executed with an enterprise evaluation device comprising: technical document acquisition means for acquiring technical documents from a technical document database; total number, of inventions per technical field extraction means for classifying the acquired technical documents into respective technical fields and for extracting the total number of inventions per technical field; number of inventions per technical field and per enterprise extraction means for classifying the acquired technical documents and for extracting the number of inventions per enterprise and per technical field; oligopoly score per technical field calculation means for calculating the oligopoly score per technical field; oligopoly-emphasized score per technical field calculation means for calculating the oligopoly-emphasized score per technical field; output means for outputting the calculated oligopoly-emphasized score per technical field to display means or the like; and information processing means capable of controlling said technical document acquisition means, total number of inventions per technical field extraction means, number of inventions per technical field and per enterprise extraction means, oligopoly score per technical field calculation means, oligopoly-emphasized score per technical field calculation means and output means, wherein said information processing means realizes:

a function for making said technical document acquisition means acquire technical documents such as publications of unexamined patent applications or registered patents from a technical document database;

a function for making said total number of inventions per technical field extraction means classify the acquired technical documents into respective technical fields such as IPC sub-classes or keywords, and extract the total number of inventions per technical field such as the total number of patent applications per technical field or the total number of claims filed per technical field;

a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;

a function for making said oligopoly score per technical field calculation means calculate number-of-inventions share per technical field and per enterprise through dividing the number of inventions per enterprise and per technical field by the total number of inventions per technical field, and accumulate the number-of-inventions share per technical field and per enterprise powered by ka (wherein ka > 1) for each enterprise having at least one invention in a predetermined technical field, thereby calculate the oligopoly score per technical field;

a function for making said oligopoly-emphasized score per technical field calculation means calculate the oligopoly-emphasized score per technical field by multiplying the number-of-inventions share per technical field and per enterprise and the oligopoly score per technical-field; and

a function for making said output means output the calculated oligopoly-emphasized score per technical field to display means, printing means, recording medium, or another telecommunications device via a communication line.

35. An enterprise evaluation program to be executed with an enterprise evaluation device comprising: technical document acquisition means for acquiring technical documents from a technical document database; total number of inventions per technical field extraction means for classifying the acquired technical documents into respective technical fields and for extracting the total number of inventions per technical field; number of inventions per technical field and per enterprise extraction means for classifying the acquired technical documents and for extracting the number of inventions per enterprise and per technical field; oligopoly score per technical field calculation means for calculating the oligopoly score per technical field; oligopoly-emphasized score per technical field calculation means for calculating the oligopoly-emphasized score per technical field; enterprise competitive position score calculation means for calculating the enterprise competitive position score; output means for outputting the calculated enterprise competitive position score to display means or the like; and information processing means capable of controlling said technical document acquisition means, total number of inventions per technical field extraction means, number of inventions per technical field and per enterprise extraction means, oligopoly score per technical field calculation means, oligopoly-emphasized score per technical field calculation means, enterprise competitive position score calculation means and output means, wherein said information processing means realizes:

a function for making said technical document acquisition means acquire technical documents such as publications of unexamined patent applications or registered patents from a technical document database;

a function for making said total number of inventions per technical field extraction means classify the acquired technical documents into respective technical fields such as IPC sub-classes or keywords, and extract the total number of inventions per technical field such as the total number of patent applications per technical field or the total number of claims filed per technical field;

a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;

a function for making said oligopoly score per technical field calculation means calculate number-of-inventions share per technical field and per enterprise through dividing the number of inventions per enterprise and per technical field by the total number of inventions per technical field, and accumulate the number-of-inventions share per technical field and per enterprise powered by ka (wherein ka > 1) for each enterprise having at least one invention in a predetermined technical field, thereby calculate the oligopoly score per technical field;

a function for making said oligopoly-emphasized score per technical field calculation means calculate the oligopoly-emphasized score per technical field by multiplying the number-of-inventions share per technical field and per enterprise and the oligopoly score per technical field;

a function for making said enterprise competitive position score calculation means accumulate the oligopoly-emphasized score per technical field for each technical field having at least one invention in a predetermined enterprise, thereby calculate the enterprise competitive position score; and

a function for making said output means output the calculated enterprise competitive position score to display means, printing means, recording medium, or another telecommunications device via a communication line.

36. An enterprise evaluation program to be executed with an enterprise evaluation device comprising: technical document acquisition means for acquiring technical documents from a technical document database; total number of inventions per technical field extraction means for classifying the acquired technical documents into respective technical fields and for extracting the total number of inventions per technical field; number of inventions per technical field and per enterprise extraction means for classifying the acquired technical documents and for extracting the number of inventions per enterprise and per technical field; oligopoly score per technical field calculation means for calculating the oligopoly score per technical field; oligopoly-emphasized score per technical field calculation means for calculating the oligopoly-emphasized score per technical field; enterprise competitive position score calculation means for calculating the enterprise competitive position score; enterprise competitive position score categorizing means for categorizing the competitive position of the predetermined enterprise relating to inventions through representation with a figure or wording; display data generation means for generating display data of categories with the figure or wording; output means for outputting the display data to display means or the like; and information processing means capable of controlling said technical document acquisition means, total number of inventions per technical field extraction means, number of inventions per technical field and per enterprise extraction means, oligopoly score per technical field calculation means, oligopoly-emphasized score per technical field calculation means, enterprise competitive position score calculation means, enterprise competitive position score categorizing means, display data generation means and output means,

wherein said information processing means realizes:

a function for making said technical document acquisition means acquire technical documents such as publications of unexamined patent applications or registered patents from a technical document database;

a function for making said total number of inventions per technical field extraction means classify the acquired technical documents into respective technical fields such as IPC sub-classes or keywords, and extract the total number of inventions per technical field such as the total number of patent applications per technical field or the total number of claims filed per technical field;

a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;

a function for making said oligopoly score per technical field calculation means calculate number-of-inventions share per technical field and per enterprise through dividing the number of inventions per enterprise and per technical field by the total number of inventions per technical field, and accumulate the number-of-inventions share per technical field and per enterprise powered by ka (wherein ka > 1) for each enterprise having at least one invention in a predetermined technical field, thereby calculate the oligopoly score per technical field;

a function for making said oligopoly-emphasized score per technical field calculation means calculate the oligopoly-emphasized score per technical field by multiplying the number-of-inventions share per technical field and per enterprise and the oligopoly score per technical field;

a function for making said enterprise competitive position score calculation means accumulate the oligopoly-emphasized score per technical field for each technical field having at least one invention in a predetermined enterprise, thereby calculate the enterprise competitive position score;

a function for making said enterprise competitive position score categorizing means compare a predetermined threshold with the calculated enterprise competitive position score, and categorize the competitive position of the predetermined enterprise relating to inventions through representation with a figure or wording;

a function for making said display data generation means generate display data of categories with the figure or wording; and

a function for making said output means output the display data to display means, printing means, recording medium, or another telecommunications device via a communication line.

**37.** An enterprise evaluation program to be executed with an enterprise evaluation device comprising: technical document acquisition means for acquiring technical documents from a technical document database; total number of inventions per technical field extraction means for classifying the acquired technical documents into respective technical fields and for extracting the total number of inventions per technical field; number of inventions per technical field and per enterprise extraction means for classifying the acquired technical documents and for extracting the number of inventions per enterprise and per technical field; oligopoly score per technical field calculation means for calculating the oligopoly score per technical field; oligopoly-emphasized score per technical field calculation means for calculating the oligopoly-emphasized score per technical field; enterprise competitive position score calculation means for calculating the enterprise competitive position score; enterprise competitive position score categorizing means for categorizing the competitive position of the predetermined enterprise relating to inventions through representation with a figure or wording; display data generation means for generating display data of categories with the figure or wording; output means for outputting the display data to display means or the like; and information processing means capable of controlling said technical document acquisition means, total number of inventions per technical field extraction means, number of inventions per technical field and per enterprise extraction means, oligopoly score per technical field calculation means, oligopoly-emphasized score per technical field calculation means, enterprise competitive position score calculation means, enterprise competitive position score categorizing means, display data generation means and output means,
wherein said information processing means realizes:

a function for making said technical document acquisition means acquire technical documents such as publications of unexamined patent applications or registered patents from a technical document database;
a function for making said total number of inventions per technical field extraction means classify the acquired technical documents into respective technical fields such as IPC sub-classes or keywords, and extract the total number of inventions per technical field such as the total number of patent applications per technical field or the total number of claims filed per technical field;
a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;
a function for making said oligopoly score per technical field calculation means calculate number-of-inventions share per technical field and per enterprise through dividing the number of inventions per enterprise and per technical field by the total number of inventions per technical field, and accumulate the number-of-inventions share per technical field and per enterprise powered by ka (wherein ka > 1) for each enterprise having at least one invention in a predetermined technical field, thereby calculate the oligopoly score per technical field;
a function for making said oligopoly-emphasized score per technical field calculation means calculate the oligopoly-emphasized score per technical field by multiplying the number-of-inventions share per technical field and per enterprise and the oligopoly score per technical field;
a function for making said enterprise competitive position score calculation means accumulate the oligopoly-emphasized score per technical field for each technical field having at least one invention in a predetermined enterprise, thereby calculate the enterprise competitive position score;
a function for making said enterprise competitive position score categorizing means compare a predetermined threshold using an average value or standard deviation of the enterprise competitive position scores of all enterprises with the calculated enterprise competitive position score, and categorize the competitive position of the predetermined enterprise relating to inventions through representation with a figure or wording;
a function for making said display data generation means generate display data of categories with the figure or wording; and
a function for making said output means output the display data to display means, printing means, recording medium, or another telecommunications device via a communication line.

**38.** An enterprise evaluation program to be executed with an enterprise evaluation device comprising: technical document acquisition means for acquiring technical documents from a technical document database; total number of inventions per technical field extraction means for classifying the acquired technical documents into respective technical fields and for extracting the total number of inventions per technical field; number of inventions per technical field and per enterprise extraction means for classifying the acquired technical documents and for extracting the number of inventions per enterprise and per technical field; oligopoly score per technical field calculation means for calculating the oligopoly score per technical field; oligopoly-emphasized score per technical field calculation means for calculating the oligopoly-emphasized score per technical field; enterprise competitive position score calculation means for calculating the enterprise competitive position score; standardized enterprise competitive position score calculation means for calculating the standardized enterprise competitive position score; output means for outputting the standardized enterprise competitive position score to display means or the like; and information processing means capable of controlling said technical document acquisition means, total number of inventions per technical field extraction means, number of inventions per technical field and per enterprise extraction means, oligopoly score per technical field calculation means, oligopoly-emphasized score per technical field calculation means, enterprise competitive position score calculation means, standardized enterprise competitive position score calculation means and output means,

wherein said information processing means realizes:

a function for making said technical document acquisition means acquire technical documents such as publications of unexamined patent applications or registered patents from a technical document database;

a function for making said total number of inventions per technical field extraction means classify the acquired technical documents into respective technical fields such as IPC sub-classes or keywords, and extract the total number of inventions per technical field such as the total number of patent applications per technical field or the total number of claims filed per technical field;

a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;

a function for making said oligopoly score per technical field calculation means calculate number-of-inventions share per technical field and per enterprise through dividing the number of inventions per enterprise and per technical field by the total number of inventions per technical field, and accumulate the number-of-inventions share per technical field and per enterprise powered by ka (wherein ka > 1) for each enterprise having at least one invention in a predetermined technical field, thereby calculate the oligopoly score per technical field;

a function for making said oligopoly-emphasized score per technical field calculation means calculate the oligopoly-emphasized score per technical field by multiplying the number-of-inventions share per technical field and per enterprise and the oligopoly score per technical field;

a function for making said enterprise competitive position score calculation means accumulate the oligopoly-emphasized score per technical field for each technical field having at least one invention in a predetermined enterprise, thereby calculate the enterprise competitive position score;

a function for making said standardized enterprise competitive position score calculation means calculate the standardized enterprise competitive position score through dividing the enterprise competitive position score by the number of technical fields; and

a function for making said output means output the calculated standardized enterprise competitive position score to display means, printing means, recording medium, or another telecommunications device via a communication line.

**39.** An enterprise evaluation program to be executed with an enterprise evaluation device comprising: technical document acquisition means for acquiring technical documents from a technical document database; total number of inventions per technical field extraction means for classifying the acquired technical documents into respective technical fields and for extracting the total number of inventions per technical field; number of inventions per technical field and per enterprise extraction means for classifying the acquired technical documents and for extracting the number of inventions per enterprise and per technical field; oligopoly score per technical field calculation means for calculating the oligopoly score per technical field; oligopoly-emphasized score per technical field calculation means for calculating the oligopoly-emphasized score per technical field; enterprise competitive position score calculation means for calculating the enterprise competitive position score; rate of increase of inventions acquisition means for acquiring the rate of increase in number of inventions; excess growth rate calculation means for calculating the excess growth rate of the predetermined enterprise; enterprise competitive position index calculation means for calculating the enterprise competitive position index; output means for outputting the enterprise competitive position index to display means or the like; and information processing means capable of controlling said technical document acquisition means, total number of inventions per technical field extraction means, number of inventions per technical field and per enterprise extraction means, oligopoly score per technical field calculation means, oligopoly-emphasized score per technical field calculation means, enterprise competitive position score calculation means, rate of increase of inventions acquisition means, excess growth rate calculation means, enterprise competitive position index calculation means and output means,
wherein said information processing means realizes:

a function for making said technical document acquisition means acquire technical documents such as publications of unexamined patent applications or registered patents from a technical document database;

a function for making said total number of inventions per technical field extraction means classify the acquired technical documents into respective technical fields such as IPC sub-classes or keywords, and extract the total number of inventions per technical field such as the total number of patent applications per technical field or the total number of claims filed per technical field;

a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;

a function for making said oligopoly score per technical field calculation means calculate number-of-inventions share per technical field and per enterprise through dividing the number of inventions per enterprise and per technical field by the total number of inventions per technical field, and accumulate the number-of-inventions share per technical field and per enterprise powered by ka (wherein ka > 1) for each enterprise having at least one invention in a predetermined technical field, thereby calculate the oligopoly score per technical field;

a function for making said oligopoly-emphasized score per technical field calculation means calculate the oligopoly-emphasized score per technical field by multiplying the number-of-inventions share per technical field and per enterprise and the oligopoly score per technical field;

a function for making said enterprise competitive position score calculation means accumulate the oligopoly-emphasized score per technical field for each technical field having at least one invention in a predetermined enterprise, thereby calculate the enterprise competitive position score;

a function for making said rate of increase of inventions acquisition means acquire the rate of increase in number of inventions in the predetermined enterprise and the rate of increase in number of inventions in all enterprises based on date information of the acquired technical documents;

a function for making said excess growth rate calculation means calculate the excess growth rate of the predetermined enterprise by subtracting the rate of increase in number of inventions in all enterprises from the rate of increase in number of inventions in the predetermined enterprise;

a function for making said enterprise competitive position index calculation means calculate the enterprise competitive position index by multiplying the enterprise competitive position score to a value obtained by adding 1 to the excess growth rate; and

a function for making said output means output the enterprise competitive position index to display means, printing means, recording medium, or another telecommunications device via a communication line

40. An enterprise evaluation program to be executed with an enterprise evaluation device comprising: technical document acquisition means for acquiring technical documents from a technical document database; total number of inventions per technical field extraction means for classifying the acquired technical documents into respective technical fields and for extracting the total number of inventions per technical field; number of inventions per technical field and per enterprise extraction means for classifying the acquired technical documents and for extracting the number of inventions per enterprise and per technical field; oligopoly score per technical field calculation means for calculating the oligopoly score per technical field; oligopoly-emphasized score per technical field calculation means for calculating the oligopoly-emphasized score per technical field; enterprise competitive position score calculation means for calculating the enterprise competitive position score; rate of increase of inventions acquisition means for acquiring the rate of increase in number of inventions; excess growth rate calculation means for calculating the excess growth rate of the predetermined enterprise; enterprise competitive position index calculation means for calculating the enterprise competitive position index; standardized enterprise competitive position index calculation means for calculating the standardized enterprise competitive position index; output means for outputting the standardized enterprise competitive position index to display means or the like; and information processing means capable of controlling said technical document acquisition means, total number of inventions per technical field extraction means, number of inventions per technical field.and per enterprise extraction means, oligopoly score per technical field calculation means, oligopoly-emphasized score per technical field calculation means, enterprise competitive position score calculation means, rate of increase of inventions acquisition means, excess growth rate calculation means, enterprise competitive position index calculation means, standardized enterprise competitive position index calculation means and output means,

wherein said information processing means realizes:

a function for making said technical document acquisition means acquire technical documents such as publications of unexamined patent applications or registered patents from a technical document database;

a function for making said total number of inventions per technical field extraction means classify the acquired technical documents into respective technical fields such as IPC sub-classes or keywords, and extract the total number of inventions per technical field such as the total number of patent applications per technical field or the total number of claims filed per technical field;

a function for making said number of inventions per technical field and per enterprise extraction means classify the acquired technical documents into respective enterprises such as applicants and into respective technical fields such as IPC sub-classes or keywords, and extract the number of inventions per enterprise and per technical field such as the number of patent applications per enterprise and per technical field or the number of claims filed per enterprise and per technical field;

a function for making said oligopoly score per technical field calculation means calculate number-of-inventions share per technical field and per enterprise through dividing the number of inventions per enterprise and per technical field by the total number of inventions per technical field, and accumulate the number-of-inventions share per technical field and per enterprise powered by ka (wherein ka > 1) for each enterprise having at least one invention in a predetermined technical field, thereby calculate the oligopoly score per technical field;

a function for making said oligopoly-emphasized score per technical field calculation means calculate the oligopoly-emphasized score per technical field by multiplying the number-of-inventions share per technical field and per enterprise and the oligopoly score per technical field;

a function for making said enterprise competitive position score calculation means accumulate the oligopoly-emphasized score per technical field for each technical field having at least one invention in a predetermined enterprise, thereby calculate the enterprise competitive position score;

a function for making said rate of increase of inventions acquisition means acquire the rate of increase in number of inventions in the predetermined enterprise and the rate of increase in number of inventions in all enterprises based on date information of the acquired technical documents;

a function for making said excess growth rate calculation means calculate the excess growth rate of the predetermined enterprise by subtracting the rate of increase in number of inventions in all enterprises from the rate of increase in number of inventions in the predetermined enterprise;

a function for making said enterprise competitive position index calculation means calculate the enterprise competitive position index by multiplying the enterprise competitive position score to a value obtained by adding 1 to the excess growth rate;

a function for making said standardized enterprise competitive position index calculation means calculate the standardized enterprise competitive position index through dividing the enterprise competitive position index by the number of technical fields; and

a function for making said output means output the standardized enterprise competitive position index to display means, printing means, recording medium, or another telecommunications device via a communication line.

FIG. 1

FIG. 2

# FIG. 3

## (a) MANAGEMENT-FINANCE INFORMATION

| (A) Information on Size of Company | (B) Financial Information of Company | | (C) Combined Information of Company |
|---|---|---|---|
| Number of employees | Sales volume | Total assets | Sales volume per employee |
| Number of officers | Sales profit | Tangible fixed assets | R&D cost per employee |
| Capital | Operating profit | Amount of capital investment | Sales profit per employee |
| Number of plants/offices | Gross operating profit | Depreciation costs | Operating profit per employee |
| Ground floor area | Sales profit ratio | Patent royalty income | Gross operating profit per employee |
| Total floor area | Operating profit ratio | Financial assets (liquid assets and liquid liabilities) | |
| Ownership ratio of premises | Gross operating profit ratio | Interests paid/discounts | |
| Ownership ratio of building | Total market value to total assets ratio | Long-term prime rate (long-term borrowing rate) | |
| Number of employees (consolidated basis) | Total market value to stockholders' equity ratio | Short-term prime rate | |
| Number of officers (consolidated basis) | Total market value to sales volume ratio | Interest on bonds | |
| Capital (consolidated basis) | Total market value to gross operating profit ratio | 10-year government bond yield ratio | |
| Number of plants/offices (consolidated basis) | Total market value to operating profit ratio | Personnel costs, (including officers' compensation and labor costs) | |
| Ground floor area (consolidated basis) | Gross operating profit to total assets ratio | Welfare expenses | |
| Total floor area (consolidated basis) | Gross operating profit to stockholders' equity ratio | Capital stock | |
| Ownership ratio of premises (consolidated basis) | Operating profit to total assets ratio | Total number of outstanding shares | |
| Ownership ratio of building (consolidated basis) | Operating profit to Stockholders' equity ratio | Stock price (Nikkei Stock Average) | |
| | Stockholders' equity ratio | Taxes and public charges | |
| | Balance of total market value and stockholders' equity | | |
| | R&D cost | | |
| | R&D cost to sales volume ratio | | |
| | R&D cost to operating profit ratio | | |
| | R&D cost to gross operating profit ratio | | |

FIG. 4A

(b) PATENT INFORMATION

| (A) Application Related Matters | |
|---|---|
| Filing date | Number of filings |
| Application number | Number of request for examination |
| Title of the invention | Number of filings based on IPC |
| Inventors | Number of filings based on keywords |
| Applicants | Number of claims filed |
| Scope of claims | Years spent on examination requests |
| Abstract | Number of inventors |
| IPC | Number of applicants (number of joint applications) |
| FI | Number of domestic priority-claiming applications |
| F term | Number of domestic priority bases claimed in applications |
| Agents | Number of priority bases from foreign countries |
| Publication date | Number of applications in which an exception to loss of novelty is requested |
| Publication number | Number of applications in which examination is requested before laid-open |
| Existence of request for examination | Number of divisional applications |
| Date of request for examination | Number of withdrawn/abandoned applications |
| Priority date | Number of converted applications |
| Priority number | Number of expedited examinations |
| Date of publication of translations of PCT international application | Number of filings (in each country) |
| Number for publication of translations of PCT international application | Number of inventors in applications (in each country) |
| Date of domestic re-publication of PCT international application | Number of applicants in applications (in each country) |
| Number for domestic re-publication of PCT international application | Number of priority-claiming applications (in each country) |
| International filing date | Number of priority bases claimed in applications (in each country) |
| International application number | Number of divisional applications (in each country) |
| International publication date | |
| International publication number | |
| Designated countries | |

## FIG. 4B

(b) PATENT INFORMATION

| (B) Registration Related Matters | |
|---|---|
| Registration date | Number of registrations |
| Issue date of registration | Number of claims registered |
| Registration number | Number of expired patents after registration |
| Scheduled day of expiration of right | Years spent from application to registration |
| Date of publication of examined application | Patent registration rate |
| Publication number of examined application | Patent allowance rate |
| Annual maintenance fee payment status | Years spent from request for examination to registration |
| Number of final decisions for rejection | Number of applications in which preferential examination is conducted |
| Date of final decision for rejection | Number of rejections issued |
| Number of claims decided to be finally rejected | Number of amendments filed |
| Number of appeals against final decision for rejection | Number of amendments filed (for formalities) |
| number of abandoned/withdrawn applications after request for examination | Number of written oppositions filed |
| Number of abandoned/withdrawn claims after request for examination | Number of appeals and trials |
| Number of invalidation trials | Number of registrations for creating patent right |
| Appeal/trial number | Number of registrations for extending term of patent right |
| Date of decision to appeal/trial | Number of transferred patents |
| Number of claims demanded for invalidation trial | Number of registrations (in each country) |
| Number of appeals to dismissal of amendment or trials for correction | Years required for registration (in each country) |
| Number of oppositions | Years spent on examination (in each country) |
| Number of claims demanded for opposition | Number of rejections issued (in each country) |
| Inventors of registered patent | Number of amendments filed (in each country) |
| Number of inventors of registered patent | Number of amendments filed (for formalities) (in each country) |
| Applicants of registered patent | Number of oppositions filed (in each country) |
| References cited | Number of applications in which preferential examination is conducted |
| | Number of rejections issued |
| | |

FIG. 5

ENTERPRISE BI: PATENT APPLICATION PORTFOLIO ANALYSIS

Time period information ·············► YEAR: 2003

Technical field

Number of claims    Comparison    Number of
per enterprise      with the      applications per
and per technical   previous      enterprise and
field               year          per technical field

H05K

                                          Number of claims share per technical
                                              field and per enterprise in H05K
731 claims ↓ (106 cases ↓ )      | ▨ |          competitive          |

28.94% ↑      (26.11% ↑ )              2.80%              5th

Number of claims    Number of        Number of claims    Ranking
share per enterprise applications share share per technical
and per technical   per enterprise and field and per
field               per technical field enterprise

H01L

                                          Number of claims share per technical
                                              field and per enterprise in H01L
527 claims ↓   (76 cases ↓ )     | ▮ |          competitive          |

20.86% ↑      (18.72% ↑ )              0.40%              33rd

G02B

                                          Number of claims share per technical
                                              field and per enterprise in G02B
183 claims ↑   (24 cases ↑ )     | ▮ |          competitive          |

7.24% ↑       (5.91% ↑ )               0.40%              42nd

D21J

                                          Number of claims share per technical
                                              field and per enterprise in D21J
136 claims ↑   (21 cases ↑ )     | ▨▨▨▨▨ |  oligopolistic     |

5.38% ↑       (5.17% ↑ )               44.00%             1st

F01N

                                          Number of claims share per technical
                                              field and per enterprise in F01N
125 claims ↓   (16 cases ↓ )     | ▨ |          oligopolistic       |

4.95% ↓       (3.94% ↓ )               2.70%              11th

Number of all claims per enterprise = 2,526 claims ↓
Number of classifications of technical fields = 51 ↓

FIG. 6

CALCULATION EXAMPLE OF PATENT DIVERSIFICATION INDEX (PDI) (ENTERPRISE A)

CALCULATION 1

| ITEMS<br><br>ALL TECHNICAL FIELDS IN WHICH ENTERPRISE A FILED PATENT APPLICATIONS (IN 1999) | NUMBER OF CLAIMS PER ENTERPRISE AND PER TECHNICAL FIELD $k(i)$ | PER ENTERPRISE AND PER TECHNICAL FIELD SHARE $s(i) = k(i)/K$ (Formula 7) | SEI INDEX PER ENTERPRISE AND PER TECHNICAL FIELD $F.SEI(i) = s(i)^2$ (Formula 8) |
|---|---|---|---|
| H01L | 10 | 0.033 | 0.001 |
| G06F | 26 | 0.087 | 0.008 |
| G11B | 40 | 0.133 | 0.018 |
| H04N | 60 | 0.200 | 0.040 |
| H01J | 164 | 0.547 | 0.299 |
| (No other fields) | | | |
| TOTAL | $K = \Sigma k(i)$ | $S = \Sigma s(i)$ | $F.SEI = \Sigma SEI(i)$ (Formula 9) |
| | 300 | 1.000 | 0.365 |
| PATENT DIVERSIFICATION RATIO (1 − F.SEI) | | | 0.635 |
| PATENT DIVERSIFICATION INDEX (Formula 10) PDI = (1 − F.SEI) × 100 | | | 63.5 |

$$
\begin{aligned}
PDI &= (1 - F.SEI) \times 100 \\
&= (1 - \Sigma F.SEI(i)) \times 100 \\
&= \{1 - \Sigma s(i)^2\} \times 100 \\
&= \{1 - \Sigma (k(i)/K)^2\} \times 100 \\
&= \{1 - 0.365\} \times 100 \\
&= 63.5
\end{aligned}
$$

$k(i)$ : NUMBER OF CLAIMS PER TECHNICAL FIELD

$K$ : TOTAL NUMBER OF CLAIMS OF ALL TECHNICAL FIELDS

$s(i) = k(i)/K$ : SHARE PER TECHNICAL FIELD

$SEI(i) = s(i)^2$ : SEI INDEX PER TECHNICAL FIELD

$F.SEI$ : TOTAL OF SEI INDEXES OF ALL TECHNICAL FIELDS

$PDI$ : PATENT DIVERSIFICATION INDEX

**FIG. 7**

CALCULATION EXAMPLE OF PATENT DIVERSIFICATION INDEX (PDI) (ENTERPRISE B)

CALCULATION 2

| ALL TECHNICAL FIELDS IN WHICH ENTERPRISE A FILED PATENT APPLICATIONS (IN 1999) / ITEMS | NUMBER OF CLAIMS PER ENTERPRISE AND PER TECHNICAL FIELD $k(i)$ | PER ENTERPRISE AND PER TECHNICAL FIELD SHARE $s(i) = k(i)/K$ (Formula 7) | SEI INDEX PER ENTERPRISE AND PER TECHNICAL FIELD $F.SEI(i) = s(i)^2$ (Formula 8) |
|---|---|---|---|
| H01L | 70 | 0.070 | 0.005 |
| G06F | 70 | 0.070 | 0.005 |
| G11B | 70 | 0.070 | 0.005 |
| H04N | 70 | 0.070 | 0.005 |
| H01J | 70 | 0.070 | 0.005 |
| H01B | 70 | 0.070 | 0.005 |
| G06D | 70 | 0.070 | 0.005 |
| G11H | 70 | 0.070 | 0.005 |
| H04B | 70 | 0.070 | 0.005 |
| H01B | 70 | 0.070 | 0.005 |
| G06B | 70 | 0.070 | 0.005 |
| G11P | 70 | 0.070 | 0.005 |
| H04G | 80 | 0.080 | 0.006 |
| H01C | 80 | 0.080 | 0.006 |
| (No other fields) | | | |
| TOTAL | $K = \Sigma\,k(i)$ | $S = \Sigma\,s(i)$ | $F.SEI = \Sigma\,SEI(i)$ (Formula 9) |
| | 1,000 | 1.000 | 0.072 |
| PATENT DIVERSIFICATION RATIO (1 − F.SEI) | | | 0.928 |
| PATENT DIVERSIFICATION INDEX (Formula 10) PDI = (1 − F.SEI) × 100 | | | 92.8 |

$$
\begin{aligned}
PDI \; &= (1 - F.SEI) \times 100 \\
&= (1 - \Sigma\,F.SEI(i)) \times 100 \\
&= \{1 - \Sigma\,s(i)^2\} \times 100 \\
&= \{1 - \Sigma\,(k(i)/K)^2\} \times 100 \\
&= \{1 - 0.072\} \times 100 \\
&= 92.8
\end{aligned}
$$

$k(i)$ : NUMBER OF CLAIMS PER TECHNICAL FIELD
$K$ : TOTAL NUMBER OF CLAIMS OF ALL TECHNICAL FIELDS
$s(i) = k(i)/K$ : SHARE PER TECHNICAL FIELD
$SEI(i) = s(i)^2$ : SEI INDEX PER TECHNICAL FIELD
$F.SEI$ : TOTAL OF SEI INDEXES OF ALL TECHNICAL FIELDS
$PDI$ : PATENT DIVERSIFICATION INDEX

FIG. 8

CATEGORIES OF EVALUATION TYPE IN PATENT DIVERSIFICATION INDEX (PDI)

| CATEGORIES OF EVALUATION TYPE | PATENT DIVERSIFICATION INDEX (PDI) VALUE |
|---|---|
| SUPER GENERALIZED TYPE | 96 OR MORE |
| GENERALIZED TYPE | 90 OR MORE, LESS THAN 96 |
| BALANCED TYPE | 76 OR MORE, LESS THAN 90 |
| CONCENTRATED TYPE | 50 OR MORE, LESS THAN 76 |
| SUPER CONCENTRATED TYPE | LESS THAN 50 |

FIG. 9

CALCULATION EXAMPLE OF PATENT DIVERSIFICATION INDEX (PDI) (ENTERPRISE A)

EXAMPLES NOT LIMITED TO 2 POWER OF SHARE PER TECHNICAL FIELD IN SEI INDEX PER ENTERPRISE AND PER TECHNICAL FIELD (ENTERPRISE A)

| ITEMS \\ ALL TECHNICAL FIELDS IN WHICH ENTERPRISE A FILED PATENT APPLICATIONS (IN 1999) | NUMBER OF CLAIMS PER ENTERPRISE AND PER TECHNICAL FIELD $k(i)$ | PER ENTERPRISE AND PER TECHNICAL FIELD SHARE $s(i) = k(i)/K$ (Formula 7) | SEI INDEX PER ENTERPRISE AND PER TECHNICAL FIELD (SHARE POWERED BY kb) | | | |
|---|---|---|---|---|---|---|
| | | | 2 POWER OF SHARE $F.SEI(i) = s(i)^2$ | 3 POWER OF SHARE $F.SEI(i) = s(i)^3$ | 1.5 POWER OF SHARE $F.SEI(i) = s(i)^{1.5}$ | 0.5 POWER OF SHARE $F.SEI(i) = s(i)^{0.5}$ |
| H01L | 10 | 0.033 | 0.001111 | 0.000037 | 0.006086 | 0.182574 |
| G06F | 26 | 0.087 | 0.007511 | 0.000651 | 0.025514 | 0.294392 |
| G11B | 40 | 0.133 | 0.017778 | 0.002370 | 0.048686 | 0.365148 |
| H04N | 60 | 0.200 | 0.040000 | 0.008000 | 0.089443 | 0.447214 |
| H01J | 164 | 0.547 | 0.298844 | 0.163368 | 0.404188 | 0.739369 |
| TOTAL | $K = \Sigma k(i)$ | $S = \Sigma s(i)$ | $F.SEI = \Sigma SEI(i) = \Sigma (s(i)^{\alpha})$ | | | |
| | 300 | 1.000 | 0.365 | 0.174 | 0.574 | 2.029 |
| PATENT DIVERSIFICATION RATIO (1 − F.SEI) | | | 0.635 | 0.826 | 0.426 | −1.029 |
| PATENT DIVERSIFICATION INDEX PDI = (1 − F.SEI) × 100 | | | 63.5 | 82.6 | 42.6 | −102.9 |

FIG. 10

EXAMPLES NOT LIMITED TO 2 POWER OF SHARE PER TECHNICAL FIELD IN
SEI INDEX PER ENTERPRISE AND PER TECHNICAL FIELD (ENTERPRISE B)

| ITEMS<br>ALL TECHNICAL FIELDS IN WHICH ENTERPRISE B FILED PATENT APPLICATIONS (IN 1999) | NUMBER OF CLAIMS PER ENTERPRISE AND PER TECHNICAL FIELD k(i) | PER ENTERPRISE AND PER TECHNICAL FIELD SHARE s(i) = k(i)/K (Formula 7) | SEI INDEX PER ENTERPRISE AND PER TECHNICAL FIELD (SHARE POWERED BY kb) | | | |
| --- | --- | --- | --- | --- | --- | --- |
| | | | 2 POWER OF SHARE F.SEI(i) $= s(i)^2$ | 3 POWER OF SHARE F.SEI(i) $= s(i)^3$ | 1.5 POWER OF SHARE F.SEI(i) $= s(i)^{1.5}$ | 0.5 POWER OF SHARE F.SEI(i) $= s(i)^{0.5}$ |
| H01L | 70 | 0.070 | 0.004900 | 0.000343 | 0.018520 | 0.264575 |
| G06F | 70 | 0.070 | 0.004900 | 0.000343 | 0.018520 | 0.264575 |
| G11B | 70 | 0.070 | 0.004900 | 0.000343 | 0.018520 | 0.264575 |
| H04N | 70 | 0.070 | 0.004900 | 0.000343 | 0.018520 | 0.264575 |
| H01J | 70 | 0.070 | 0.004900 | 0.000343 | 0.018520 | 0.264575 |
| H01B | 70 | 0.070 | 0.004900 | 0.000343 | 0.018520 | 0.264575 |
| G06D | 70 | 0.070 | 0.004900 | 0.000343 | 0.018520 | 0.264575 |
| G11H | 70 | 0.070 | 0.004900 | 0.000343 | 0.018520 | 0.264575 |
| H04B | 70 | 0.070 | 0.004900 | 0.000343 | 0.018520 | 0.264575 |
| H01B | 70 | 0.070 | 0.004900 | 0.000343 | 0.018520 | 0.264575 |
| G06B | 70 | 0.070 | 0.004900 | 0.000343 | 0.018520 | 0.264575 |
| G11P | 70 | 0.070 | 0.004900 | 0.000343 | 0.018520 | 0.264575 |
| H04G | 80 | 0.080 | 0.006400 | 0.000512 | 0.022627 | 0.282843 |
| H01C | 80 | 0.080 | 0.006400 | 0.000512 | 0.022627 | 0.282843 |
| TOTAL | K = Σ k(i) | S = Σ s(i) | F.SEI = Σ SEI(i) = Σ (s(i)$^\alpha$) | | | |
| | 300 | 1.000 | 0.072 | 0.005 | 0.267 | 3.741 |
| PATENT DIVERSIFICATION RATIO (1 − F.SEI) | | | 0.928 | 0.995 | 0.733 | −2.741 |
| PATENT DIVERSIFICATION INDEX PDI = (1 − F.SEI) × 100 | | | 92.8 | 99.5 | 73.3 | −274.1 |

FIG. 11

CALCULATION EXAMPLE OF PATENT COMPETITIVE POSITION INDEX (PCPI)

CALCULATION 3
NUMBER OF CLAIMS FILED BY EACH ENTERPRISE IN TECHNICAL FIELD 1 (H01L)

| ALL ENTERPRISES THAT FILED PATENT APPLICATIONS IN TECHNICAL FIELD 1 (IN 1999) ＼ ITEMS | NUMBER OF CLAIMS PER TECHNICAL FIELD AND PER ENTERPRISE $k(j)$ | PER TECHNICAL FIELD AND PER ENTERPRISE SHARE $s(j) = k(j)/K$ (Formula 11) | SEI INDEX PER TECHNICAL FIELD AND PER ENTERPRISE $C.SEI(j) = s(j)^2$ (Formula 12) | SEI SCORE PER TECHNICAL FIELD AND PER ENTERPRISE $SSEI(j) = s(j) \times C.SEI \times 100$ (Formula 14) |
|---|---|---|---|---|
| A | 10 | 0.020 | 0.0004 | 1.31 |
| B | 70 | 0.140 | 0.0196 | 9.16 |
| C | 4 | 0.008 | 0.0001 | 0.52 |
| D | 3 | 0.006 | 0.0000 | 0.39 |
| E | 15 | 0.030 | 0.0009 | 1.96 |
| OTHERS | 398 | 0.796 | 0.6336 | 52.11 |
| TOTAL | $K = \Sigma k(j)$ | $S = \Sigma s(j)$ | $C.SEI = \Sigma C.SEI(j)$ | |
| | 500 | 1.000 | 0.6546 | |

SEI SCORE PER ENTERPRISE IN H01L OF ENTERPRISE A = 1.31
B = 9.16
C = ···

$$SSEI(j) = s(j) \times C.SEI \times 100$$
$$= s(j) \times \{ \Sigma C.SEI(j) \} \times 100$$
$$= s(j) \times \{ \Sigma s(j)^2 \} \times 100$$
$$= (k(j)/K) \times \{ \Sigma (k(j)/K)^2 \} \times 100$$

$k(j)$ : NUMBER OF CLAIMS PER ENTERPRISE
$K$ : TOTAL NUMBER OF CLAIMS OF ALL ENTERPRISES
$s(j) = k(j)/K$ : SHARE PER ENTERPRISE
$C.SEI(j) = s(j)^2$ : SEI INDEX PER ENTERPRISE
$C.SEI$ : TOTAL OF SEI INDEXES OF ALL ENTERPRISES
$SSEI$ : SEI SCORE PER ENTERPRISE

FIG. 12

CALCULATION 4
NUMBER OF CLAIMS FILED BY EACH ENTERPRISE IN TECHNICAL FIELD 2 (G06F)

| ALL ENTERPRISES THAT FILED PATENT APPLICATIONS IN TECHNICAL FIELD 2 (IN 1999) \ ITEMS | NUMBER OF CLAIMS PER TECHNICAL FIELD AND PER ENTERPRISE $k(j)$ | PER TECHNICAL FIELD AND PER ENTERPRISE SHARE $s(j) = k(j)/K$ (Formula 11) | SEI INDEX PER TECHNICAL FIELD AND PER ENTERPRISE $C.SEI(j) = s(j)^2$ (Formula 12) | SEI SCORE PER TECHNICAL FIELD AND PER ENTERPRISE $SSEI(j) = s(j) \times C.SEI \times 100$ (Formula 14) |
|---|---|---|---|---|
| A | 26 | 0.027 | 0.0007 | 1.75 |
| B | 70 | 0.072 | 0.0052 | 4.72 |
| C | 8 | 0.008 | 0.0001 | 0.54 |
| D | 5 | 0.005 | 0.0000 | 0.34 |
| E | 33 | 0.034 | 0.0012 | 2.23 |
| OTHERS | 828 | 0.854 | 0.7286 | 55.88 |
| TOTAL | $K = \Sigma k(j)$ | $S = \Sigma s(j)$ | $C.SEI = \Sigma C.SEI(j)$ | |
| | 970 | 1.000 | 0.7358 | |

SEI SCORE PER ENTERPRISE IN G06F OF ENTERPRISE A = 1.75
B = 4.72
C = ···

$$SSEI(j) = s(j) \times C.SEI \times 100$$
$$= s(j) \times \{ \Sigma C.SEI(j) \} \times 100$$
$$= s(j) \times \{ \Sigma s(j)^2 \} \times 100$$
$$= (k(j)/K) \times \{ \Sigma (k(j)/K)^2 \} \times 100$$

$k(j)$ :  NUMBER OF CLAIMS PER ENTERPRISE
$K$ :  TOTAL NUMBER OF CLAIMS OF ALL ENTERPRISES
$s(j) = k(j)/K$ :  SHARE PER ENTERPRISE
$C.SEI(j) = s(j)^2$ :  SEI INDEX PER ENTERPRISE
$C.SEI$ :  TOTAL OF SEI INDEXES OF ALL ENTERPRISES
$SSEI$ :  SEI SCORE PER ENTERPRISE

FIG. 13

CALCULATION EXAMPLE 1 OF PATENT COMPETITIVE POSITION INDEX D (PCPID)
(PROCEDURE 2)

CALCULATION 5
SEI SCORE PER TECHNICAL FIELD AND PER ENTERPRISE (S.SEI) AND
TOTAL OF SEI SCORES PER TECHNICAL FIELD AND PER ENTERPRISE
OF ALL TECHNICAL FIELDS

| ENTERPRISES / TECHNICAL FIELDS | ENTERPRISE A | ENTERPRISE B | ENTERPRISE C | ENTERPRISE D | ... |
|---|---|---|---|---|---|
| H01L | 1.31 | 9.16 | 0.52 | 0.39 | 1.96 |
| G06F | 1.75 | 4.72 | 0.54 | 0.34 | 2.23 |
| G11B | 3.57 | 1.11 | ... | ... | ... |
| H04N | 4.12 | 0.13 | ... | ... | ... |
| H01J | 150.10 | 1.05 | ... | ... | ... |
| OTHERS | – | 0.04 | ... | ... | ... |
| TOTAL (T.SEI) | T.SEI(A) | T.SEI(B) | T.SEI(C) | T.SEI(D) | |
| PCPID (Formula 15) | 160.85 | 16.22 | ... | ... | ... |

PCPI(X) : PATENT COMPETITIVE POSITION INDEX
T.SEI(X) : TOTAL OF SEI SCORES OF ALL TECHNICAL FIELDS
S.SEI(X) : SEI SCORE OF EACH ENTERPRISE AND EACH TECHNICAL FIELD

PCPI(X) = T.SEI(X)
T.SEI(X) = $\Sigma$ {S.SEI(X)}

FIG. 14

EXAMPLES OF EXCESS GROWTH RATE
FOR CALCULATION OF PATENT COMPETITIVE POSITION INDEX (PCPI)

CALCULATION 6
EXCESS GROWTH RATE OF NUMBER OF CLAIMS

| ENTERPRISES ITEMS | ENTERPRISE A | ENTERPRISE B | ENTERPRISE C | ... |
|---|---|---|---|---|
| GROWTH RATE $\kappa(X)$ OF NUMBER OF CLAIMS OF EACH ENTERPRISE | 5.0% | −1.0% | ... | ... |
| AVERAGE GROWTH RATE $\kappa(all)$ OF NUMBER OF CLAIMS OF ALL ENTERPRISES | 2.3% | 2.3% | ... | ... |
| EXCESS GROWTH RATE $\Delta\kappa(X)$ (Formula 16) | $\kappa(A) - \kappa(all)$ | $\kappa(B) - \kappa(all)$ | | |
| | 2.7% | −3.3% | ... | ... |

$\Delta\kappa(X) = \kappa(X) - \kappa(all)$

$\Delta\kappa(X)$ : EXCESS GROWTH RATE OF THE ENTERPRISE (X)
$\kappa(X)$ : GROWTH RATE OF NUMBER OF CLAIMS OF THE ENTERPRISE (X)
$\kappa(all)$ : AVERAGE GROWTH RATE OF NUMBER OF CLAIMS OF ALL ENTERPRISES

FIG. 15

CORRECTION EXAMPLES OF PATENT COMPETITIVE POSITION INDEX (PCPI)
BY EXCESS GROWTH RATE

CALCULATION 7
CORRECTION OF NUMBER OF CLAIMS BY EXCESS GROWTH RATE

| ENTERPRISES ITEMS | ENTERPRISE A | ENTERPRISE B | ENTERPRISE C | ... |
|---|---|---|---|---|
| PATENT COMPETITIVE POSITION INDEX T.SEI(X) (Formula 15) BEFORE CORRECTION | 160.85 | 16.22 | ... | ... |
| EXCESS GROWTH RATE $\Delta\kappa(X)$ (Formula 16) | 2.7% | −3.3% | ... | ... |
| PATENT COMPETITIVE POSITION INDEX PCPI(X) (Formula 17) CORRECTED BY EXCESS GROWTH RATE | $T.SEI(A) \times (1+\Delta\kappa(A))$ | $T.SEI(B) \times (1+\Delta\kappa(B))$ | | |
| | 165.19 | 15.68 | ... | ... |

$PCPI(X) = T.SEI(X) \times (1+\Delta\kappa(X))$

PCPI(X) : PATENT COMPETITIVE POSITION INDEX (CORRECTED BY EXCESS
        GROWTH RATE)
T.SEI(X) : PATENT COMPETITIVE POSITION INDEX (BEFORE CORRECTION)
$\Delta\kappa(X)$ : EXCESS GROWTH RATE OF THE ENTERPRISE (X)

FIG. 16

FIG. 17

| STAR RANKING CATEGORIES | RANGE | RATIO |
|---|---|---|
| ★★★★ SUPER STAR | X+2σ OR MORE | TOP 2.28% |
| ★★★☆ STAR PLAYER | X+σ OR MORE, LESS THAN X+2σ | TOP 2.28% TO 16% |
| ★★☆☆ PLAYER | X OR MORE, LESS THAN X+σ | TOP 16% TO 50% |
| ★☆☆☆ BYPLAYER | X−σ OR MORE, LESS THAN X | TOP 50% TO 84% |
| ☆☆☆☆ EXTRA | LESS THAN X−σ | TOP 84% TO BOTTOM (BOTTOM 16%) |

FIG. 18

| STAR RANKING | TYPE CATEGORY NAME |
|---|---|
| ★★★★ | SUPER STAR |
| ★★★☆ | STAR PLAYER |
| ★★☆☆ | PLAYER |
| ★☆☆☆ | BYPLAYER |
| ☆☆☆☆ | EXTRA |

FIG. 19

PATENT DIVERSIFICATION INDEX AND
PATENT COMPETITIVE POSITION INDEX,
STANDARDIZED PATENT COMPETITIVE POSITION INDEX
(EXAMPLE OF ENTERPRISE A)

[PDI] PATENT DIVERSIFICATION INDEX                    63.5

| CONCENTRATED TYPE |

[PCPI] PATENT COMPETITIVE POSITION INDEX                    165.20
★★★★

| STAR PLAYER |

[avgPCPI] STANDARDIZED PATENT COMPETITIVE POSITION INDEX    33.04
★★★

| SUPER STAR |

STANDARDIZED PATENT COMPETITIVE POSITION INDEX ★
PATENT COMPETITIVE POSITION INDEX ●

| | SUPER STAR | | ★ | | | |
| STAR PLAYER | | ● | | | |
| PLAYER | | | | | |
| BYPLAYER | | | | | |
| EXTRA | | | | | |

SUPER
CONCENTRATED        BALANCED        SUPER
GENERALIZED

CONCENTRATED        GENERALIZED

| PATENT DIVERSIFICATION INDEX (TYPE) |

FIG. 20

PATENT DIVERSIFICATION INDEX AND
PATENT COMPETITIVE POSITION INDEX,
STANDARDIZED PATENT COMPETITIVE POSITION INDEX
(EXAMPLE OF ENTERPRISE B)

[PDI] PATENT DIVERSIFICATION INDEX     92.8

| GENERALIZED TYPE |
|---|

[PCPI] PATENT COMPETITIVE POSITION INDEX     15.68
★★★★

| PLAYER |
|---|

[avgPCPI] STANDARDIZED PATENT COMPETITIVE POSITION INDEX    1.12
★★★

| BYPLAYER |
|---|

|  | SUPER CONCENTRATED | CONCENTRATED | BALANCED | GENERALIZED | SUPER GENERALIZED |
|---|---|---|---|---|---|
| SUPER STAR |  |  |  |  |  |
| STAR PLAYER |  |  |  |  |  |
| PLAYER |  |  |  | ● |  |
| BYPLAYER |  |  |  | ★ |  |
| EXTRA |  |  |  |  |  |

★ STANDARDIZED PATENT COMPETITIVE POSITION INDEX
● PATENT COMPETITIVE POSITION INDEX

| PATENT DIVERSIFICATION INDEX (TYPE) |
|---|

FIG. 21

PATENT COMPETITIVE POSITION INDEX (PCPI)
RANKING (MACHINERY AND SHIPBUILDING)

| ORDER IN PATENT COMPETITIVE POSITION INDEX | ORDER IN STANDARD-IZED PATENT COMPETITIVE POSITION INDEX | NAME OF ENTERPRISE | PATENT COMPETITIVE POSITION INDEX | STANDARD-IZED PATENT COMPETITIVE POSITION INDEX | PATENT DIVERSIFI-CATION INDEX TYPE |
|---|---|---|---|---|---|
| 1 | 9 | MI | 1477.62 | 5.24 | SUPER GEN-ERALIZED |
| 2 | 1 | TS | 365.06 | 45.63 | CON-CENTRATED |
| 3 | 45 | IS | 225.89 | 1.22 | SUPER GEN-ERALIZED |
| 4 | 42 | KW | 225.32 | 1.37 | SUPER GEN-ERALIZED |
| 5 | 6 | TK | 216.99 | 7.00 | GEN-ERALIZED |
| 6 | 16 | HK | 206.44 | 2.99 | BALANCED |
| 7 | 3 | TL | 204.26 | 11.35 | BALANCED |
| 8 | 15 | MU | 197.84 | 3.09 | BALANCED |
| 9 | 12 | MA | 175.60 | 4.88 | GEN-ERALIZED |
| 10 | 5 | JU | 175.33 | 8.77 | CON-CENTRATED |
| 11 | 21 | MZ | 159.65 | 2.62 | GEN-ERALIZED |
| 12 | 36 | HZ | 140.98 | 1.60 | SUPER GEN-ERALIZED |
| 13 | 35 | DK | 139.15 | 1.66 | BALANCED |
| 14 | 17 | BR | 135.51 | 2.95 | BALANCED |
| 15 | 11 | OR | 133.88 | 4.96 | BALANCED |
| 16 | 51 | SJ | 130.64 | 1.08 | SUPER GEN-ERALIZED |
| 17 | 24 | BH | 127.89 | 2.17 | GEN-ERALIZED |
| 18 | 61 | KB | 126.96 | 0.84 | SUPER GEN-ERALIZED |
| 19 | 13 | MK | 106.40 | 4.63 | GEN-ERALIZED |
| 20 | 34 | NS | 84.51 | 1.66 | BALANCED |

FIG. 22

STANDARDIZED PATENT COMPETITIVE POSITION INDEX (avgPCPI)
RANKING (MACHINERY AND SHIPBUILDING)

| ORDER IN STANDARD- IZED PATENT COMPETITIVE POSITION INDEX | ORDER IN PATENT COMPETITIVE POSITION INDEX | NAME OF ENTERPRISE | STANDARD- IZED PATENT COMPETITIVE POSITION INDEX | PATENT COMPETITIVE POSITION INDEX | PATENT DIVERSIFI- CATION INDEX TYPE |
|---|---|---|---|---|---|
| 1 | 2 | TS | 45.63 | 365.06 | CON- CENTRATED |
| 2 | 22 | RE | 27.54 | 82.63 | SUPER CON- CENTRATED |
| 3 | 7 | TL | 11.35 | 204.26 | BALANCED |
| 4 | 65 | SA | 9.63 | 9.63 | SUPER CON- CENTRATED |
| 5 | 10 | JU | 8.77 | 175.33 | CON- CENTRATED |
| 6 | 5 | TK | 7.00 | 216.99 | GEN- ERALIZED |
| 7 | 34 | TY | 5.95 | 35.69 | CON- CENTRATED |
| 8 | 25 | SE | 5.65 | 67.80 | BALANCED |
| 9 | 1 | MI | 5.24 | 1477.62 | SUPER GEN- ERALIZED |
| 10 | 23 | HH | 5.14 | 71.93 | BALANCED |
| 11 | 15 | OR | 4.96 | 133.88 | BALANCED |
| 12 | 9 | MA | 4.88 | 175.60 | GEN- ERALIZED |
| 13 | 19 | MK | 4.63 | 106.40 | GEN- ERALIZED |
| 14 | 96 | KK | 3.45 | 3.45 | SUPER CON- CENTRATED |
| 15 | 8 | MU | 3.09 | 197.84 | BALANCED |
| 16 | 6 | HK | 2.99 | 206.44 | BALANCED |
| 17 | 14 | BR | 2.95 | 135.51 | BALANCED |
| 18 | 51 | IS | 2.91 | 14.54 | CON- CENTRATED |
| 19 | 53 | TJ | 2.87 | 14.35 | CON- CENTRATED |
| 20 | 27 | RK | 2.82 | 59.19 | BALANCED |

FIG. 23

```
                        ┌─────────────────┐
                        │      START      │
                        └────────┬────────┘
                                 │        ┌─ S501
                        ┌────────┴────────────┐
                        │ SELECT ENTERPRISE FOR│
                        │ENTERPRISE VALUE EVALUATION│
                        └────────┬────────────┘
                                 │        ┌─ S502
                        ┌────────┴────────────┐
                        │SELECT MENU FOR ENTERPRISE│
                        │   VALUE EVALUATION   │
                        └────────┬────────────┘
                                 │        ┌─ S503
                        ◇ SELECT COMBINATION ◇
```

- SELECT ENTERPRISE FOR ENTERPRISE VALUE EVALUATION — S501
- SELECT MENU FOR ENTERPRISE VALUE EVALUATION — S502
- SELECT COMBINATION — S503

- ACQUIRE MANAGEMENT-FINANCE INFORMATION — S604
- CALCULATE MANAGEMENT-FINANCE INFORMATION — S605
- ORGANIZE CALCULATION RESULT OF MANAGEMENT-FINANCE INFORMATION — S606

- ACQUIRE PATENT INFORMATION — S504
- CALCULATE PATENT INFORMATION — S505
- ORGANIZE CALCULATION RESULT OF PATENT INFORMATION — S506

- CREATE GRAPH — S507
- OUTPUT GRAPH — S508
- DETERMINE ENTERPRISE VALUE — S509

- END

FIG. 24

EP 1 686 515 A1

ENTERPRISE VALUE EVALUATION MENU (5)

SELECT INDEXES IN THE WINDOWS BELLOW

| BACK |
| SET |

**BUSINESS, PROFIT AND MARKET VALUE**

| | |
|---|---|
| (A) Investment index | ☐ |
| (B) Management-finance analysis index | ☐ |
| (C) Profit related index | ☐ |
| (D) Excess profit analysis index | ☐ |
| (M) Market evaluation related index | ☐ |
| (PE) Patent profitability index | ☐ |

**R&D AND PATENT**

| | |
|---|---|
| (R) Research and development related index | ☐ |
| (PA) Patent application related index | ☐ |
| (PB) Examination request related index | ☐ |
| (PT) Patent acquisition (registration) related index | ☐ |
| (PP) Patent productivity index | ☐ |
| (PS) Patent stock related index | ☐ |

**PATENT PORTFOLIO**

| | | | |
|---|---|---|---|
| (PAP) Patent application portfolio analysis | ☐ | Patent application portfolio analysis | ☐ |
| (PKA) Characteristic keyword list | ☐ | (PDI) Patent diversification index | ■ |
| (PSI) Patent similarity analysis | ☐ | (PCPI) Patent competitive position index | ☐ |
| | | (avgPCPI) Standardized patent competitive position index | ☐ |

FIG. 25

EP 1 686 515 A1

ENTERPRISE VALUE EVALUATION MENU (4)

SELECT INDEXES IN THE WINDOWS BELLOW

| BACK |
| SET |

| BUSINESS, PROFIT AND MARKET VALUE | | R&D AND PATENT | | PATENT PORTFOLIO | | | |
|---|---|---|---|---|---|---|---|
| (A) Investment index | ☐ | (R) Research and development related index | ☐ | (PAP) Patent application portfolio analysis | ☐ | Patent application portfolio analysis | ☐ |
| (B) Management-finance analysis index | ☐ | (PA) Patent application related index | ☐ | (PKA) Characteristic keyword list | ☐ | (PDI) Patent diversification index | ☐ |
| (C) Profit related index | ☐ | (PB) Examination request related index | ☐ | (PSI) Patent similarity analysis | ☐ | (PCPI) Patent competitive position index | ■ |
| (D) Excess profit analysis index | ☐ | (PT) Patent acquisition (registration) related index | ☐ | | | (avgPCPI) Standardized patent competitive position index | ☐ |
| (M) Market evaluation related index | ☐ | (PP) Patent productivity index | ☐ | | | | |
| (PE) Patent profitability index | ☐ | (PS) Patent stock related index | ☐ | | | | |

FIG. 26

EP 1 686 515 A1

## ENTERPRISE VALUE EVALUATION MENU (3)

SELECT INDEXES IN THE WINDOWS BELLOW

| BACK |
| SET |

| BUSINESS, PROFIT AND MARKET VALUE | R&D AND PATENT | PATENT PORTFOLIO |
|---|---|---|

| (A) Investment index ☐ | (R) Research and development related index ☐ | (PAP) Patent application portfolio analysis ■ |
| (B) Management-finance analysis index ☐ | (PA) Patent application related index ☐ | Number of patent applications ☐ |
| (C) Profit related index ☐ | (PB) Examination request related index ☐ | ■ Number of claims filed ☐ |
| (D) Excess profit analysis index ☐ | (PT) Patent acquisition (registration) related index ☐ | Number of claims per application ☐ |
| (M) Market evaluation related index ☐ | (PP) Patent productivity index ☐ | Number of applications per inventor ☐ |
| (PE) Patent profitability index ☐ | (PS) Patent stock related index ☐ | Number of claims filed per inventor ☐ |
| | | Number of joint applications ☐ |
| | | Ratio of joint applications ☐ |
| | | ☐ Joint applicants |
| | | Total number of applications ☐ |

FIG. 27

EP 1 686 515 A1

ENTERPRISE VALUE EVALUATION MENU (1)

SELECT INDEXES IN THE WINDOWS BELLOW

| BACK |
|------|
| SET |

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ■ | (PB) Examination request related index | ☐ | (PSI) Patent similarity analysis | ☐ |
| (D) Excess profit analysis index | ☐ | (PT) Patent acquisition (registration) related index | ☐ | | |
| (M) Market evaluation related index | ☐ | (PP) Patent productivity index | ☐ | | |
| (PE) Patent profitability index | ☐ | (PS) Patent stock related index | ☐ | | |

FIG. 28

EP 1 686 515 A1

ENTERPRISE VALUE EVALUATION MENU (2)

SELECT INDEXES IN THE WINDOWS BELLOW

| BACK |
| SET |

**BUSINESS, PROFIT AND MARKET VALUE**

| (A) Investment index | ☐ |
| (B) Management-finance analysis index | ☐ |
| (C) Profit related index | |
| (D) Excess profit analysis index | |
| (M) Market evaluation related index | |
| (PE) Patent profitability index | |

**R&D AND PATENT**

| (R) Research and development related index | ☐ |
| (PA) Patent application related index | ■ |
| ☐ Sales volume | ☐ |
| ☐ Value added amount | ☐ |
| ■ GBP | ☐ |
| ☐ EBITDA | ☐ |
| ☐ Operating profit | |
| ☐ Net operating profit | |
| ☐ Patent royalty income | |
| ☐ ROA. $\alpha$ | |
| ☐ ROA. $\beta$ | |
| ☐ ROA. $\gamma$ | |
| ☐ ROA. $\delta$ | |
| ☐ EOIA | |
| ☐ ROIA | |

**PATENT PORTFOLIO**

| (PAP) Patent application portfolio analysis | ☐ |
| (PKA) Characteristic keyword list | ☐ |
| (PSI) Patent similarity analysis | ☐ |

FIG. 29

ENTERPRISE VALUE EVALUATION
INPUT CONDITION SETTING (1)

| BACK |
| SET |

SELECT CONDITIONS IN THE WINDOWS BELLOW

TARGET DOCUMENT

| | |
|---|---|
| Unexamined patents | ■ |
| Registered patents | ■ |
| Utility models | ☐ |
| Academic documents | ☐ |

DATA READ

| | |
|---|---|
| Internal DB1 | ■ |
| Internal DB2 | ☐ |
| JPO IPDL | ☐ |
| PATOLIS | ☐ |
| Other commercially available DB1 | ☐ |
| Other commercially available DB2 | ☐ |
| FD | ☐ |
| CD | ☐ |
| MO | ☐ |
| DVD | ☐ |
| Others | ☐ |

FIG. 30

ENTERPRISE VALUE EVALUATION
INPUT CONDITION SETTING (2)

| BACK |
| SET |

SELECT CONDITIONS IN THE WINDOWS BELLOW

TARGET

| All industries |
|---|
| Industry |
| Enterprise |
| Other unit |

| | |
|---|---|
| Food | ☐ |
| Ceramic | ☐ |
| Steel, nonferrous and metal | ☐ |
| Machinery and shipbuilding | ☐ |
| Electrical equipment | ■ |
| Automobile & transport machine | ☐ |
| Fabric, pulp and paper | ☐ |
| Precision equipment | ☐ |
| Other manufacturing | ☐ |
| Construction | ☐ |
| Information & telecommunication | ☐ |
| Electricity and gas | ☐ |
| Chemical | ☐ |
| Service | ☐ |
| Pharmaceutical | ☐ |

TARGET

| | |
|---|---|
| Industry | ☐ |
| Enterprise | ☐ |

| Enterprise |
|---|
| Other unit |

Company name

Company code

Applicant code

( Search )

FIG. 31

ENTERPRISE VALUE EVALUATION
OUTPUT CONDITION SETTING

SELECT CONDITIONS IN THE WINDOWS BELLOW

| BACK |
| SET |

MAP POSITION

| | |
|---|---|
| 1 map | ■ |
| 2 maps | ☐ |
| 1 data sheet | ☐ |
| 2 data sheets | ☐ |
| 1 map with data | ☐ |
| 2 maps with data | ☐ |
| 1 map with comment | ☐ |
| 2 maps with comment | ☐ |
| 1 map with data and comment | ☐ |
| 2 maps with data and comment | ☐ |

OUTPUT DATA

| | | | |
|---|---|---|---|
| PDI | none | ☐ | |
| PCPI | top 5 | ☐ | |
| avgPCPI | top 10 | ☐ | |
| COMMENT | top 15 | ☐ | |
| (free entry) | top 20 | ■ | |
| | numerical input | ☐ | |

"PATENT QUARTERLY JOURNAL" INDEX LIST OF ENTERPRISE VALUE EVALUATION SYSTEM

A: Business, Profit and Market Value Related Index (1)

| Index Group | Index | Formula |
|---|---|---|
| (A) Investment | Facility Investment Amount | [(Current Term Tangible Fixed Assets - Previous Term Tangible Fixed Assets)] + (Current Term Depreciation Cost) |
| | R&D Cost | Total Amount of R&D Cost |
| | Investment Trend Index | Term-on-Term Ratio of [(Facility Investment Amount) + (R&D Cost)] |
| (B) Management/Finance Analysis | Facility Investment Efficiency | (Value Added Amount)/(Tangible Fixed Assets) |
| | Labor Productivity | (Value Added Amount)/(Number of Employees) |
| | Labor Equipment Ratio | (Tangible Fixed Assets)/(Number of Employees) |
| | Labor Distribution Share | [(Personnel Expense to be Included in Selling Cost and Administrative Expenses) + (Labor Cost to be Included in Manufacturing Cost)]/(Value Added Amount) |
| | Total Factor Productivity | (Value Added Amount Rate of Change) - [(1 - Labor Distribution Share (To Value Added)) × (Depreciation Target Tangible Fixed Assets Rate of Change)] - [(Labor Distribution Share (To Value Added)) × (Number of Employees Rate of Change)] |
| | Cost-to-Sales Ratio | (Cost of Sales)/(Sales Volume) |
| | Cost of Sales-and-Administration Ratio to Sales | (Selling Cost and Administrative Expenses)/(Sales Volume) |
| | Interest Bearing Debt Ratio | (Interest Bearing Debt)/(Total Assets) |
| | Equity to Asset Ratio | (Equity Capital)/(Total Assets) |
| (C) Profit Related Items | Sales Volume | (Sales Volume) |
| | Value Added Amount | (Operating Net Profit) + (Interest Paid and Discount) + (R&D Cost) + (Depreciation Cost) + (Personnel Expense (including board members' remuneration)) + (Welfare Expense) + (Tax and Dues)  (Operating Net Profit) = (Operating Profit) - (Interest Paid and Discount) |
| | Gross Operating Profit (GBP) | (Operating Profit) + (R&D Cost) |
| | Earnings Before Interest, Taxes, Depreciation and Amortization (EBITDA) | (Operating Profit) + (Depreciation Cost) |
| | Operating Profit | (Operating Profit) |
| | Operating Net Profit | (Operating Profit) - (Interest Paid and Discount) |
| | Patent Royalty Income | (Patent Royalty Income (Including Royalty Income of Trademarks and Brands, etc.)) |
| | ROA α | [(Value Added Amount) + (Patent Royalty Income)]/(Total Assets) |
| | ROA β | [(GBP) + (Patent Royalty Income)]/(Total Assets) |
| | ROA γ | [(EBITDA) + (Patent Royalty Income)]/(Total Assets) |
| | ROA δ | [(Operating Profit) + (Patent Royalty Income)]/(Total Assets) |
| | Earnings on Intellectual Assets (EOIA) | [(GBP) + (Patent Royalty Income)] - [(Financial Assets) × (Profit Ratio m)] + [(Tangible Fixed Assets) × (Profit Ratio f)] (Profit Ratio m): Application of Short Term Prime Rate; (Profit Ratio f): Application of Long Term Prime Rate |
| | Return On Intellectual Assets (ROIA) | (Earnings on Intellectual Assets)/(Total Assets) |

FIG. 32

EP 1 686 515 A1

FIG. 33

"PATENT QUARTERLY JOURNAL" INDEX LIST OF ENTERPRISE VALUE EVALUATION SYSTEM

A: Business, Profit and Market Value Related Index (2)

| Index Group | Index | Formula |
|---|---|---|
| (D) Excess Profit Analysis | Excess Value Added Amount | Sales Volume × [(Sales Volume Value Added Ratio) - (Industry Average Sales Volume Value Added Ratio)] |
| | Excess GBP | Sales Volume × [(Sales Volume GBP Ratio) - (Industry Average Sales Volume GBP Ratio)] |
| | Excess EBITDA | Sales Volume × [(Sales Volume EBITDA Ratio) - (Industry Average Sales Volume EBITDA Ratio)] |
| | Excess Operating Profit | Sales Volume × [(Operating Profit Ratio (To Sales)) - (Industry Average Operating Profit Ratio (To Sales))] |
| | Excess ROA $\alpha$ | (ROA $\alpha$) - (Industry Average ROA $\alpha$) |
| | Excess ROA $\beta$ | (ROA $\beta$) - (Industry Average ROA $\beta$) |
| | Excess ROA $\gamma$ | (ROA $\gamma$) - (Industry Average ROA $\gamma$) |
| | Excess ROA $\delta$ | (ROA $\delta$) - (Industry Average ROA $\delta$) |
| | Excess Earnings on Intellectual Assets (EXEOIA) | (Net Assets) × [(Ratio of Earnings on Intellectual Assets) - (Industry Average of Ratio of Earnings on Intellectual Assets) |
| (M) Market Evaluation Related Items | MVA | (Value of Stock) - (Shareholders' Equity)  (Value of Stock) = (Total Number of Outstanding Stock) × (Stock Price) |
| | PBR | (Value of Stock)/(Equity Capital) |
| | Expected Intellectual Property Profit | [(Fixed Liabilities) × (Profit Ratio a) + (Value of Stock) × (Profit Ratio p)] - [(Financial Assets) × (Profit Ratio m) + (Tangible Fixed Assets) × (Profit Ratio f)] ) (Profit Ratio a): (Weighted Average of Long Term Prime Rate and Bond Rate) × (1 - Corporate Tax) (Profit Ratio p): Calculated Based on Capital Asset Pricing Model (CAPM). Yield on Long Term 10-Year Government Bonds, Stock Investment Profit Ratio, $\beta$ Value were used; (Profit Ratio m): Application of Short Term Prime Rate (Profit Ratio f): Application of Long Term Prime Rate |
| (PE) Patent Profitability Related Items | Patent Profitability $\alpha$ | [(GBP) + (Patent Royalty Income)]/(Total Number of Effective Patents) |
| | Patent Profitability $\beta$ | [(Excess Value Added) + (Patent Royalty Income)]/(Total Number of Effective Patents) |
| | Patent Profitability $\gamma$ | [(Excess GBP) + (Patent Royalty Income)]/(Total Number of Effective Patents) |
| | Patent Profitability $\delta$ | (Excess Earnings on Intellectual Assets (EXEOIA))/(Total Number of Effective Patents) |

EP 1 686 515 A1

"PATENT QUARTERLY JOURNAL" INDEX LIST OF ENTERPRISE VALUE EVALUATION SYSTEM

B: R&D and Patent Related Index (1)

| Index Group | Index | Formula |
|---|---|---|
| (R) R&D Related Items | R&D Cost Ratio $\alpha$ | (R&D Cost)/(Sales Volume) |
| | R&D Cost Ratio $\beta$ | (R&D Cost)/(Value Added Amount) |
| | R&D Cost Ratio $\gamma$ | (R&D Cost)/(GBP) |
| | R&D Cost Ratio $\delta$ | (R&D Cost)/(Total Assets) |
| | Number of Inventors | (Calculated Based on "Inventor" Column of Laid-Open Publications) |
| | Ratio of Inventors | (Number of Inventors)/(Number of Employees) |
| | R&D Cost per Inventor | (R&D Cost)/(Number of Inventors) |
| (PA) Patent Application Related Items | Number of Patent Applications | (Joint Application is Recorded as One Application) |
| | Number of Claims Filed | (Sum of Number of Claims of Laid-Open Publications) |
| | Number of Claims per Patent Application | (Number of Claims Filed)/(Number of Patent Applications) |
| | Number of application per Inventor | (Number of Patent Applications (Other Than Joint Applications))/(Number of Inventors) |
| | Number of Claims per Inventor (Patent Application) | (Number of Claims Filed (Other Than Joint Applications))/(Number of Inventors) |
| | Number of Joint Applications | (Number of Joint Applications Among Patent Applications Filed) |
| | Joint Filing Ratio | (Number of Joint Applications)/(Number of Patent Applications) |
| | Number of Applicants in Joint | (Number of Joint Applicants in Joint Applications) |
| | Patent Application Stock | (Cumulative Number of Patent Applications) |
| (PB) Examination Request Related Items | Number of Examination Requests | (Number of Examination Requests Filed) |
| | Years to Examination Request (Average) | { $\Sigma$ (Date of Examination Request - Filing Date)}/[(Number of Examination Requests)×(Annual Number of Days)] |
| | Examination Request Ratio | (Examination Request Ratio Pertaining to Number of Patent Applications of Each Year) |
| | Cumulative Number of Examination Requests | (Cumulative Number of Examination Requests) |

FIG. 34

# FIG. 35

"PATENT QUARTERLY JOURNAL" INDEX LIST OF ENTERPRISE VALUE EVALUATION SYSTEM

B: R&D and Patent Related Index (2)

| Index Group | Index | Formula |
|---|---|---|
| (PT) Patent Acquisition (Registration) Related Items | Number of Patents Granted | (Number of Patents Granted) |
| | Number of Claims Registered | (Number of "Claims" in Registered Gazette) |
| | Years to Patent Granted (Average) | { $\Sigma$ (Patent Registration Date - Patent Filing Date)} / [(Number of Patents Granted)×(Annual Number of Days)] |
| | Patent Granted Ratio to Number of Applications | (Number of Patents Granted Each Year)/(Number of Patent Applications Filed Each Year) |
| | Patent Granted Stock | (Patent Granted Stock at End of Each Year) |
| | Patent Granted Ratio to Number of Examination Requests | (Number of Patents Granted Each Year)/(Number of Examination Requests Filed Each Year) |
| | Patent Granted Stock Ratio to Examination Request Stock | (Patent Granted Stock)/(Cumulative Number of Examination Requests) |
| | Number of Effective Patents Granted | (Number of Patents Granted Each Year) - (Number of Patents Invalidated Among Patent Registrations Each Year) |
| (PP) Patent Productivity | Patent Application Productivity | (Number of Claims of Patent Applications in a year)/(R&D Cost in a previous year) |
| | Examination Request Productivity | Correction of (Patent Application Productivity). (Patent Application Productivity) × (Estimated Examination Request Ratio) (Estimated Examination Request Ratio: Sought Based on Number of Examination Requests for Previous Applications in which the term for Examination Request is expired.) |
| | Patent Granted Productivity | Correction of (Patent Application Productivity). (Patent Application Productivity) × (Estimated Registration Ratio) (Estimated Registration Ratio: Sought Based on Number of Registrations of Previous Applications, Lapsed Years, Average Required Years to Patent Granted) |
| (PS) Patent Stock Related Items | Total Number of Effective Patents | (Patent Granted Stock) - (Patent Invalidation Stock) |
| | Patent Granted Renewal Ratio | (Total Number of Effective Patents)/(Patent Granted Stock) |
| | Years to Renewal Patent Granted Expiration (Average) | { $\Sigma$ (Scheduled Invalidation Date of Each Patent of the Total Number of Effective Patents - Year End)} / [(Total Number of Effective Patents) × (Annual Number of Days)] |
| | Patent Stock Index | (Total Number of Effective Patents) × (Years to Renewal Patent Granted Expiration (Average)) |
| | Total Patent Assets | {(R&D Cost)/(Number of Patents Granted)} ×(Total Number of Effective Patents) |

EP 1 686 515 A1

104

FIG. 36

EP 1 686 515 A1

"PATENT QUARTERLY JOURNAL" INDEX LIST OF ENTERPRISE VALUE EVALUATION SYSTEM

C: Patent Portfolio Related Index

| Index Group | Index | Formula |
|---|---|---|
| (PAP) Patent Application Portfolio analysis | Patent Application Portfolio analysis | (Power of Number of Claims Share Per Technical Field)　(Share: Share of Each Technical Field in an Enterprise or Share of each Enterprise in All Enterprises in a Technical Field) |
| | Patent Diversification Index (PDI) | $(1 - \Sigma(\text{Share of Each Technical Field in an Enterprise})^2)$ |
| | Patent Competitive Position Index (PCPI) | $\Sigma[\{\Sigma\,(\text{SEI Index Per Technical Field})\} \times (\text{Share of Each Company Per Technical Field})] \times (1 + \text{Excess Growth Rate})$ |
| | Average Patent Competitive Position Index (Average PCPI) | (Patent Competitive Position Index (PCPI))/(Number of Technical Fields covered by Company's Patent Applications (Average in 3 Years)) |
| (PKA) Characteristic Keywords | Characteristic Keywords | (Selected Keywords Having an Appearance Frequency That is Not Large in All Patent Publications and That is Large in Patent Publications of the Same Company) |
| | Number of Characteristic Keywords | (Representation of Character of an Enterprise by the Number of Keywords under a Constant Condition of Selecting the Characteristic Keywords) |
| (PSI) Patent Similarity Analysis | Patent Similarity Index | (Ratio of Patent Publications Having the Keyword of the Subject Patent Publication within a Population) |
| | Patent Similarity Index to the Same Company (PSIself) | (Patent Similarity Index (PSI) When the Population is the Same Company's Patent Publications) |
| | Patent Similarity Index to All Companies (PSIall) | (Patent Similarity Index (PSI) When the Population is All Patent Publications Including the Other Companies' Patent Publications) |
| | Normal Patent Publication | (Patent Publications Having Significantly Large PSIall) |
| | Exceptional Patent Publication | (Patent Publications Having Significantly Small PSIall) |

FIG. 37

RELATIONSHIP BETWEEN
PATENT COMPETITIVE POSITION INDEX (PCPI) AND
GROSS OPERATING PROFIT (GBP)

| | |
|---|---|
| PROFITABILITY: HIGH<br>PATENT COMPETITIVE<br>POSITION: LOW | PROFITABILITY: HIGH<br>PATENT COMPETITIVE<br>POSITION: HIGH |
| PROFITABILITY: LOW<br>PATENT COMPETITIVE<br>POSITION: LOW | PROFITABILITY: LOW<br>PATENT COMPETITIVE<br>POSITION: HIGH |

GROSS OPERATING PROFIT

PATENT COMPETITIVE POSITION INDEX (PCPI)

FIG. 38

PCPI-GBP (CHEMICAL)
y = 161.68x + 26043

FIG. 39

avgPCPI-GBP (CHEMICAL)
y = 15528x + 24329

FIG. 40

PDI-GBP
y = 1237x − 9527

FIG. 41

PCPI − EXCESS GBP (CHEMICAL)
y = 54.952x − 3476

FIG. 42

avgPCPI – EXCESS GBP (CHEMICAL)
y = 8402.7x – 8601.8

FIG. 43

PDI – EXCESS GBP (CHEMICAL)
y = –1953.4x + 187240

**EP 1 686 515 A1**

# INTERNATIONAL SEARCH REPORT

| International application No. |
| --- |
| PCT/JP2004/004099 |

**A. CLASSIFICATION OF SUBJECT MATTER**
Int.Cl⁷ G06F17/60

According to International Patent Classification (IPC) or to both national classification and IPC

**B. FIELDS SEARCHED**

Minimum documentation searched (classification system followed by classification symbols)
Int.Cl⁷ G06F17/60

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2002-92228 A (Patolis Corp.), 29 March, 2002 (29.03.02), | 1-3,20-22, 28-30 |
| A | Abstract (Family: none) | 4-19,23-27, 31-40 |
| Y | Yakushin Suru Beikoku no Chuken Ginko, Shihon Shijo Quarterly", Japan, Nomura Research Institute, Ltd., 01 May, 2002 (01.05.02), Vol.5, No.4. pages 74 to 84 | 1-3,20-22, 28-30 |
| Y | JP 2000-11078 A (Technology Transfer Service Corp.), 14 January, 2000 (14.01.00), Fig. 5 (Family: none) | 1-3,20-22, 28-30 |

☐ Further documents are listed in the continuation of Box C.   ☐ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 27 April, 2004 (27.04.04) | 18 May, 2004 (18.05.04) |

| Name and mailing address of the ISA/ Japanese Patent Office | Authorized officer |
| --- | --- |
| Facsimile No. | Telephone No. |

Form PCT/ISA/210 (second sheet) (January 2004)